(19) Europäisches Patentamt
European Patent Office
Office européen des brevets

(11) EP 1 771 070 B1

(12) EUROPEAN PATENT SPECIFICATION

(45) Date of publication and mention of the grant of the patent:
**04.02.2009 Bulletin 2009/06**

(21) Application number: **05856882.5**

(22) Date of filing: **22.07.2005**

(51) Int Cl.:
***A01N 43/56*** *(2006.01)*

(86) International application number:
**PCT/US2005/026116**

(87) International publication number:
**WO 2006/068669 (29.06.2006 Gazette 2006/26)**

# (54) MIXTURES OF ANTHRANILAMIDE INVERTEBRATE PEST CONTROL AGENTS

MISCHUNG AUS ANTHRANILAMID-INVERTEBRAT-PEST- BEKÄMPFUNGSMITTEL

MELANGES D'AGENTS DE LUTTE CONTRE LES NUISIBLES INVERTEBRES A BASE D'ANTHRANILAMIDE

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR YU**

(30) Priority: **26.07.2004 US 591239 P**
**13.06.2005 US 690007 P**

(43) Date of publication of application:
**11.04.2007 Bulletin 2007/15**

(73) Proprietor: **E.I. DU PONT DE NEMOURS AND COMPANY**
**Wilmington, DE 19898 (US)**

(72) Inventors:
- **ANNAN, Isaac, Billy**
**Newark, Delaware 19711 (US)**
- **HUGHES, Kenneth, Andrew**
**Elkton, Maryland 21921 (US)**
- **LAHM, George, Philip**
**Wilmington, Delaware 19808 (US)**
- **SELBY, Thomas, Paul**
**Hockessin, Delaware 19707 (US)**
- **STEVENSON, Thomas, Martin**
**Newark, Delaware 19702 (US)**

(74) Representative: **Beacham, Annabel Rose**
**Frank B. Dehn & Co.**
**St Bride's House**
**10 Salisbury Square**
**London**
**EC4Y 8JD (GB)**

(56) References cited:
**WO-A-03/015518**
**WO-A-20/05107468**
**WO-A-20/06008108**
**WO-A-20/06015865**
**WO-A-20/06037632**
**WO-A-20/06037633**
**WO-A-20/06037634**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

FIELD OF THE INVENTION

This invention relates to invertebrate pest control mixtures comprising a biologically effective amount of an anthranilamide, an *N*-oxide or a salt thereof and at least one other invertebrate pest control agent, and methods of their use for control of invertebrate pests such as arthropods in both agronomic and non-agronomic environments.

BACKGROUND OF THE INVENTION

The control of invertebrate pests is extremely important in achieving high crop efficiency. Damage by invertebrate pests to growing and stored agronomic crops can cause significant reduction in productivity and thereby result in increased costs to the consumer. The control of invertebrate pests in forestry, greenhouse crops, ornamentals, nursery crops, stored food and fiber products, livestock, household, turf, wood products, and public and animal health is also important. Many products are commercially available for these purposes and in practice have been used as a single or a mixed agent. However, economically efficient and ecologically safe pest control is still being sought.

WO 03/015519 discloses N-acyl anthranilic acid derivatives of Formula i as arthropodicides

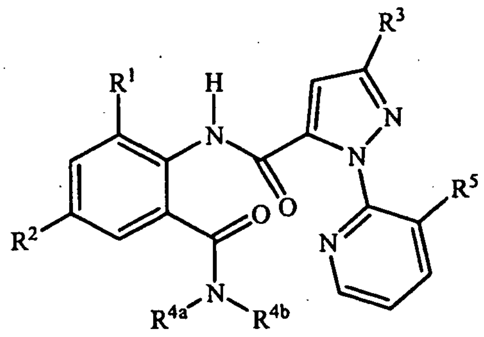

i

wherein, *inter alia,* $R^1$ is $CH_3$, F, Cl or Br; $R^2$ is F, Cl, Br, I or $CF_3$; $R^3$ is $CF_3$, Cl, Br or $OCH_2CF_3$; $R^{4a}$ is $C_1$-$C_4$ alkyl; $R^{4b}$ is H or $CH_3$; and $R^5$ is Cl or Br.

SUMMARY OF THE INVENTION

This invention is directed to a composition comprising

(a) 3-bromo-*N*-[4-cyano-2-methyl-6-[(methylamino)carbonyl]phenyl]-1-(3-chloro-2-pyridinyl)-1*H*-pyrazole-5-carboxamide (Formula 1), an *N*-oxide, or a salt thereof,

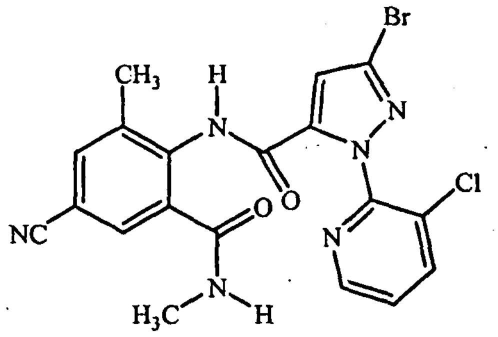

1

and

(b) at least one invertebrate pest control agent selected from the group consisting of

(b1) neonicotinoids;
(b2) cholineseterase inhibitors;
(b3) sodium channel modulators;
(b4) chitin synthesis inhibitors;
(b5) ecdysone agonists and antagonists;
(b6) lipid biosynthesis inhibitors;
(b7) macrocyclic lactones;
(b8) GABA-regulated chloride channel blockers;
(b9) juvenile hormone mimics;
(b10) ryanodine receptor ligands other than the compound of Formula 1;
(b11) octopamine receptor ligands;
(b12) mitochondrial electron transport inhibitors;
(b13) nereistoxin analogs;
(b14) pyridalyl;
(b15) flonicamid;
(b 16) pymetrozine;
(b 18) metaflumizone;
(b19) biological agents; and

salts of compounds of (b1) through (b18).

This invention also provides a composition for controlling an invertebrate pest comprising a biologically effective amount of a mixture of the invention and at least one additional component selected from the group consisting of a surfactant, a solid diluent and a liquid diluent, said composition optionally further comprising an effective amount of at least one additional biologically active compound or agent.

This invention also provides a non-therapeutic method for controlling an invertebrate pest comprising contacting the invertebrate pest or its environment with a biologically effective amount of a mixture or composition of the invention, as described herein.

This invention further provides a spray composition comprising a mixture or a composition of the invention and a propellant. This invention also provides a bait composition comprising a mixture or a composition of the invention; one or more food materials; optionally an attractant; and optionally a humectant.

This invention further provides a trap device for controlling an invertebrate pest comprising said bait composition and a housing adapted to receive said bait composition, wherein the housing has at least one opening sized to permit the invertebrate pest to pass through the opening so the invertebrate pest can gain access to said bait composition from a location outside the housing, and wherein the housing is further adapted to be placed in or near a locus of potential or known activity for the invertebrate pest.

<u>DETAILS OF THE INVENTION</u>

As used herein, the terms "comprises," "comprising," "includes," "including," "has," "having" or any other variation thereof, are intended to cover a non-exclusive inclusion. For example, a composition, a mixture, process, method, article, or apparatus that comprises a list of elements is not necessarily limited to only those elements but may include other elements not expressly listed or inherent to such composition, mixture, process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

Also, the indefinite articles "a" and "an" preceding an element or component of the invention are intended to be nonrestrictive regarding the number of instances (i.e. occurrences) of the element or component. Therefore "a" or "an" should be read to include one or at least one, and the singular word form of the element or component also includes the plural unless the number is obviously meant to be singular.

Compounds in the mixtures and compositions of this invention can exist as one or more stereoisomers. The various stereoisomers include enantiomers, diastereomers, atropisomers and geometric isomers. One skilled in the art will appreciate that one stereoisomer may be more active and/or may exhibit beneficial effects when enriched relative to the other stereoisomer(s) or when separated from the other stereoisomer(s). Additionally, the skilled artisan knows how to separate, enrich, and/or to selectively prepare said stereoisomers. Accordingly, the present invention comprises a mixture comprising a compound of Formula 1, an *N*-oxide, or a salt thereof; and at least one invertebrate pest control agent which can be a compound selected from (b1) through (b18) or a biological agent selected from (b19) and is also referred to herein as "component (b)". Compositions of the present invention can optionally include at least one additional biologically active compound or agent, which if present in a composition will differ from the compound of Formula 1 and component (b). Such compounds or agents included in the mixtures and compositions of the present invention can be present as a mixture of stereoisomers, individual stereoisomers, or as an optically active form.

Salts of compounds in the mixtures and compositions of the present invention include acid-addition salts with inorganic or organic acids such as hydrobromic, hydrochloric, nitric, phosphoric, sulfuric, acetic, butyric, fumaric, lactic, maleic, malonic, oxalic, propionic, salicylic, tartaric, 4-toluenesulfonic or valeric acids. Salts in the compositions and mixtures of the invention can also include those formed with organic bases (e.g., pyridine, ammonia, or triethylamine) or inorganic bases (e.g., hydrides, hydroxides, or carbonates of sodium, potassium, lithium, calcium, magnesium or barium) when the compound contains an acidic group such as a carboxylic acid or phenol.

Embodiments of the present invention include:

| | |
|---|---|
| Embodiment 1. | A mixture wherein component (b) is selected from (b1) neonicotinoids. |
| Embodiment 2. | The mixture of Embodiment 1 wherein component (b) is selected from the group consisting of the pyridylmethylamines such as acetamiprid, nitenpyram and thiacloprid; nitromethylenes such as nitenpyram and nithiazine; and nitroguanidines such as clothianidin, dinotefuran, imidacloprid and thiamethoxam. |
| Embodiment 3. | The mixture of Embodiment 2 wherein the component (b) is selected from the group consisting of acetamiprid, dinotefuran, imidacloprid, nitenpyram, thiacloprid and thiamethoxam. |
| Embodiment 3a. | The mixture of Embodiment 3 wherein the component (b) is acetamiprid. |
| Embodiment 3b. | The mixture of Embodiment 3 wherein the component (b) is dinotefuran. |
| Embodiment 3c. | The mixture of Embodiment 3 wherein the component (b) is imidacloprid. |
| Embodiment 3d. | The mixture of Embodiment 3 wherein the component (b) is nitenpyram. |
| Embodiment 3e. | The mixture of Embodiment 3 wherein the component (b) is thiacloprid. |
| Embodiment 3f. | The mixture of Embodiment 3 wherein the component (b) is thiamethoxam. |
| Embodiment 4. | A mixture wherein component (b) is selected from (b2) cholinesterase inhibitors. |
| Embodiment 5. | The mixture of Embodiment 4 wherein component (b) is selected from the group consisting of organophosphates such as acephate, azinphosmethyl, chlorethoxyfos, chlorprazophos, chlorpyrifos, chlorpyrifosmethyl, coumaphos, cyanofenphos, demeton-S-methyl, diazinon, dichlorvos, dimethoate, dioxabenzofos, disulfoton, dithicrofos, fenamiphos, fenitrothion, fonofos, isofenphos, isoxathion, malathion, methamidophos, methidathion, mipafox, monocrotophos, oxydemeton-methyl, parathion, parathion-methyl, phorate, phosalone, phosmet, phosphamidon, phoxim, pirimiphos-methyl, profenofos, pyraclofos, quinalphos-methyl, sulprofos, temephos, terbufos, tetrachlorvinphos, thicrofos, triazophos, and trichlofon; and carbamates such as aldicarb, aldoxycarb, bendiocarb, benfuracarb, butocarboxim, carbaryl, carbofuran, carbosulfan, ethiofencarb, furathiocarb, methiocarb, methomyl (Lannate®), oxamyl (Vydate®), pirimicarb, propoxur, thiodicarb, triazamate and xylylcarb. |
| Embodiment 6. | The mixture of Embodiment 5 wherein the component (b) is selected from the group consisting of chlorpyrifos, methomyl, oxamyl and thiodicarb. |
| Embodiment 6a. | The mixture of Embodiment 6 wherein the component (b) is chlorpyrifos. |
| Embodiment 6b. | The mixture of Embodiment 6 wherein the component (b) is methomyl. |

Embodiment 6c. The mixture of Embodiment 6 wherein the component (b) is oxamyl.

Embodiment 6d. The mixture of Embodiment 6 wherein the component (b) is thiodicarb.

Embodiment 7. A mixture wherein component (b) is selected from (b3) sodium channel modulators.

Embodiment 8. The mixture of Embodiment 7 wherein the component (b) is selected from the group consisting of pyrethroids such as allethrin, beta-cyfluthrin, bifenthrin, cyfluthrin, cyhalothrin, cypermethrin, deltamethrin, esfenvalerate, fenfluthrin, fenpropathrin, fenvalerate, flucythrinate, gamma-cyhalothrin, lambda-cyhalothrin, metofluthrin, permethrin, profluthrin, resmethrin, tau-fluvalinate, tefluthrin, tetramethrin, tralomethrin and transfluthrin; non-ester pyrethroids such as etofenprox, flufenprox, halfenprox, protrifenbute and silafluofen; oxadiazines such as indoxacarb; and natural pyrethrins such as cinerin-I, cinerin-II, jasmolin-I, jasmolin-II, pyrethrin-I and pyrethrin-II.

Embodiment 9. The mixture of Embodiment 8 wherein the component (b) is selected from the group consisting of deltamethrin, esfenvalerate, indoxacarb and lambda-cyhalothrin.

Embodiment 9a. The mixture of Embodiment 9 wherein the component (b) is deltamethrin.

Embodiment 9b. The mixture of Embodiment 9 wherein the component (b) is esfenvalerate.

Embodiment 9c. The mixture of Embodiment 9 wherein the component (b) is indoxacarb.

Embodiment 9d. The mixture of Embodiment 9 wherein the component (b) is lambda-cyhalothrin.

Embodiment 10. A mixture wherein component (b) is selected from (b4) chitin synthesis inhibitors.

Embodiment 11. The mixture of Embodiment 10 wherein the component (b) is selected from the group consisting of bistrifluron, buprofezin, chlorfluazuron, cyromazine, diflubenzuron, flucycloxuron, flufenoxuron, hexaflumuron, lufenuron, novaluron, noviflumuron, penfluron, teflubenzuron and triflumuron.

Embodiment 12. The mixture of Embodiment 11 wherein the component (b) is selected from the group consisting of buprofezin, cyromazine, hexaflumuron, lufenuron and novaluron.

Embodiment 12a. The mixture of Embodiment 12 wherein the component (b) is buprofezin.

Embodiment 12b. The mixture of Embodiment 12 wherein the component (b) is cyromazine.

Embodiment 12c. The mixture of Embodiment 12 wherein the component (b) is hexaflumuron.

Embodiment 12d. The mixture of Embodiment 12 wherein the component (b) is lufenuron.

Embodiment 12e. The mixture of Embodiment 12 wherein the component (b) is novaluron.

Embodiment 13. A mixture wherein component (b) is selected from (b5) ecdysone agonists.

Embodiment 14. The mixture of Embodiment 13 wherein the component (b) is selected from the group consisting of azadirachtin, chromafenozide, halofenozide, methoxyfenozide and tebufenozide.

Embodiment 15. The mixture of Embodiment 14 wherein the component (b) is selected from the group consisting of methoxyfenozide and tebufenozide.

Embodiment 15a. The mixture of Embodiment 15 wherein the component (b) is methoxyfenozide.

Embodiment 15b. The mixture of Embodiment 15 wherein the component (b) is tebufenozide.

Embodiment 16. A mixture wherein component (b) is selected from (b6) lipid biosynthesis inhibitors.

Embodiment 17. The mixture of Embodiment 16 wherein the component (b) is selected from the group consisting of spiromesifen and spiridiclofen.

Embodiment 18. A mixture wherein component (b) is a compound selected from (b7) macrocyclic lactones.

Embodiment 19. The mixture of Embodiment 18 wherein the component (b) is selected from the group consisting of spinosad, abamectin, avermectin, doramectin, emamectin, eprinomectin, ivermectin, milbemectin, milbemycin oxime, moxidectin, nemadectin and selamectin.

Embodiment 20. The mixture of Embodiment 19 wherein the component (b) is selected from the group consisting of abamectin and spinosad.

Embodiment 20a. The mixture of Embodiment 20 wherein the component (b) is abamectin.

Embodiment 20b. The mixture of Embodiment 20 wherein the component (b) is spinosad.

Embodiment 21. A mixture wherein component (b) is selected from (b8) GABA-regulated chloride channel blockers.

Embodiment 22. The mixture of Embodiment 21 wherein the component (b) is selected from the group consisting of acetoprole, endosulfan, ethiprole, fipronil and vaniliprole.

Embodiment 23. The mixture of Embodiment 22 wherein the component (b) is fipronil.

Embodiment 24. A mixture wherein component (b) is selected from (b9) juvenile hormone mimics.

Embodiment 25. The mixture of Embodiment 24 wherein the component (b) is selected from the group consisting of epofenonane, fenoxycarb, hydroprene, kinoprene, methoprene, pyriproxyfen and triprene.

Embodiment 26. The mixture of Embodiment 25 wherein the component (b) is selected from the group consisting of fenoxycarb, methoprene and pyriproxyfen.

Embodiment 26a. The mixture of Embodiment 26 wherein the component (b) is fenoxycarb.

Embodiment 26b. The mixture of Embodiment 26 wherein the component (b) is methoprene.

Embodiment 26c. The mixture of Embodiment 26 wherein the component (b) is pyriproxyfen.

Embodiment 27. A mixture wherein component (b) is selected from (b10) ryanodine receptor ligands.

Embodiment 28. The mixture of Embodiment 27 wherein the component (b) is a compound selected from the group consisting of ryanodine and other related products of *Ryania speciosa* Vahl. (Flacourtiaceae), anthranilamides other than the compound of Formula 1 and phthalic diamides.

Embodiment 28a. The mixture of Embodiment 28 wherein the component (b) is a compound of Formula i

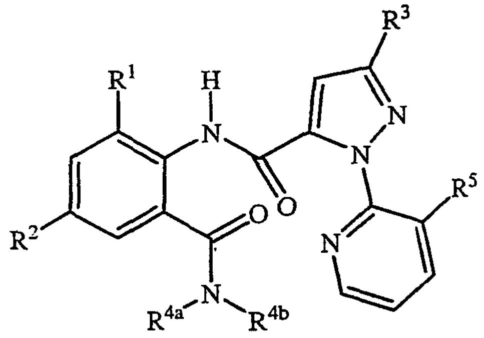

i

wherein

$R^1$ is $CH_3$, F, Cl or Br;
$R^2$ is F, Cl, Br, I or $CF_3$;
$R^3$ is $CF_3$, Cl, Br or $OCH_2CF_3$;
$R^{4a}$ is $C_1$-$C_4$ alkyl;
$R^{4b}$ is H or $CH_3$; and
$R^5$ is Cl or Br;

or an agriculturally suitable salt thereof.

Embodiment 29. A mixture wherein component (b) is selected from (b11) octopamine receptor ligands.

Embodiment 30. The mixture of Embodiment 29 wherein the component (b) is a compound selected from amitraz and chlordimeform.

Embodiment 31. A mixture wherein component (b) is selected from (b12) mitochondrial electron transport inhibitors.

Embodiment 32. The mixture of Embodiment 31 wherein the component (b) is a compound selected from the group consisting of acequinocyl, chlofenapyr, diafenthiuron, dicofol, fenazaquin, fenpyroximate, hydramethylnon, pyridaben, rotenone, tebufenpyrad and tolfenpyrad.

Embodiment 33. The mixture of Embodiment 32 wherein the component (b) is a compound selected from the group consisting of chlofenapyr, hydramethylnon and pyridaben.

Embodiment 33a. The mixture of Embodiment 33 wherein the component (b) is chlofenapyr.

Embodiment 33b. The mixture of Embodiment 33 wherein the component (b) is hydramethylnon.

Embodiment 33c. The mixture of Embodiment 33 wherein the component (b) is pyridaben.

Embodiment 34. A mixture wherein component (b) is selected from (b13) nereistoxin analogs.

Embodiment 35. The mixture of Embodiment 34 wherein the component (b) is a compound selected from the group consisting of bensultap, cartap, thiocyclam and thiosultap.

Embodiment 36. The mixture of Embodiment 35 wherein the component (b) is cartap.

Embodiment 37. A mixture wherein component (b) is pyridalyl.

Embodiment 38. A mixture wherein component (b) is flonicamid.

Embodiment 39. A mixture wherein component (b) is pymetrozine.

Embodiment 41. A mixture wherein component (b) is metaflumizone.

Embodiment 42. A mixture wherein component (b) is selected from (b19) biological agents.

Embodiment 43. A mixture of Embodiment 42 wherein component (b) is a biological agent selected from the group consisting of entomopathogenic bacteria such as *Bacillus thuringiensis* including ssp. *aizawai* and *kurstaki,* fungi such as *Beauvaria bassiana,* and viruses such as baculovirus and nuclear polyhedrosis virus (NPV; e.g., "Gemstar").

Embodiment 44. A mixture wherein component (b) is selected from acetamiprid, dinotefuran, imidacloprid, nitenpyram, thiacloprid, thiamethoxam, chlorpyrifos, methomyl, oxamyl, thiodicarb, triazamate, deltamethrin, esfenvalerate, indoxacarb, lambda-cyhalothrin, buprofezin, cyromazine, hexaflumuron, lufenuron, novaluron, methoxyfenozide, tebufenozide, abamectin, spinosad, fipronil, fenoxycarb, methoprene, pyriproxyfen, amitraz, chlorfenapyr, hydramethylnon, pyridaben, cartap, pyridalyl, flonicamid and pymetrozine.

Embodiment 45. A mixture wherein component (b) comprises at least one invertebrate pest control agent from each of two different groups selected from (b1), (b2), (b3), (b4), (b5), (b6), (b7), (b8), (b9), (b10), (b11), (b 12), (b 13), (b14), (b15), (b16), (b18) and (b19), and wherein any compound selected from any of groups (b1) through (b18) may be in a salt form.

Also noteworthy as embodiments are arthropodicidal compositions of the present invention comprising a biologically effective amount of a mixture of any of Embodiments 1 to 45 and at least one additional component selected from the group consisting of a surfactant, a solid diluent and a liquid diluent, said composition optionally further comprising an effective amount of at least one additional biologically active compound or agent. Embodiments of the invention further include methods for controlling an invertebrate pest comprising contacting the invertebrate pest or its environment with a biologically effective amount of a mixture of any of Embodiments 1 to 45 (e.g., as a composition described herein). Of note is a method comprising contacting the invertebrate pest or its environment with a biologically effective amount of the mixture of Embodiment 1, 2, 4, 5, 7, 8, 10, 11, 24, 25, 29, 30, 31, 32, 38, 39, 44 or 45.

Embodiments of the invention also include a spray composition comprising a mixture of any of Embodiments 1 to 45 and a propellant. Of note is a spray composition comprising the mixture of Embodiment 1, 2, 4, 5, 7, 8, 10, 11, 24, 25, 29, 30, 31, 32, 38, 39, 44 or 45. Embodiments of the invention further include a bait composition comprising a mixture of any of Embodiments 1 to 45; one or more food materials; optionally an attractant; and optionally a humectant. Of note is a bait composition comprising the mixture of Embodiment 1, 2, 4, 5, 7, 8, 10, 11, 24, 25, 29, 30, 31, 32, 38, 39, 44 or 45.

Embodiments of the invention also include a device for controlling an invertebrate pest comprising said bait composition and a housing adapted to receive said bait composition, wherein the housing has at least one opening sized to permit the invertebrate pest to pass through the opening so the invertebrate pest can gain access to said bait composition from a location outside the housing, and wherein the housing is further adapted to be placed in or near a locus of potential or known activity for the invertebrate pest. Of note is a device wherein the bait composition comprises the mixture of Embodiment 1, 2, 4, 5, 7, 8, 10, 11, 24, 25, 29, 30, 31, 32, 38, 39, 44 or 45.

Of further note embodiments of the present invention include:

Embodiment A'. A mixture wherein component (b) is selected from (b1), (b2), (b3), (b4), (b5), (b6), (b7), (b8), (b9), (b10), (b1), (b12), (b13), (b14), (b 15), (b16) and (b19).

Embodiment A. A mixture wherein component (b) is selected from (b1).

Embodiment B. The mixture of Embodiment A wherein the component (b) is selected from the group consisting of the pyridylmethylamines such as acetamiprid, nitenpyram and thiacloprid; nitromethylenes such as nitenpyram and nithiazine; and nitroguanidines such as clothianidin, dinotefuran, imidacloprid and thiamethoxam.

Embodiment C. The mixture of Embodiment B wherein the component (b) is imidacloprid.

Embodiment D. The mixture of Embodiment B wherein the component (b) is thiamethoxam.

Embodiment E. A mixture wherein component (b) is selected from (b2).

Embodiment F. The mixture of Embodiment E wherein the component (b) is selected from the group consisting of organophosphates such as acephate, azinphos-methyl, chlorethoxyfos, chlorprazophos, chlorpyrifos, chlorpyrifos-methyl, coumaphos, cyanofenphos, demeton-S-methyl, diazinon, dichlorvos, dimethoate, dioxabenzofos, disulfoton, dithicrofos, fenamiphos, fenitrothion, fonofos, isofenphos, isoxathion, malathion, methamidophos, methidathion, mipafox, monocrotophos, oxydemeton-methyl, parathion, parathion-methyl, phorate, phosalone, phosmet, phosphamidon, phoxim, pirimiphos-methyl, profenofos, pyraclofos, quinalphos-methyl, sulprofos, temephos, terbufos, tetrachlorvinphos, thicrofos, triazophos, and trichlofon; and carbamates such as aldicarb, aldoxycarb, bendiocarb, benfuracarb, butocarboxim, carbaryl, carbofuran, carbosulfan, ethiofencarb, furathiocarb, methiocarb, methomyl (Lannate®), oxamyl (Vydate®), pirimicarb, propoxur, thiodicarb, triazamate and xylylcarb.

Embodiment G. A mixture wherein component (b) is selected from (b3).

Embodiment H. The mixture of Embodiment G wherein the component (b) is selected from the group consisting of pyrethroids such as allethrin, beta-cyfluthrin, bifenthrin, cyfluthrin, cyhalothrin, cypermethrin, deltamethrin, esfenvalerate, fenfluthrin, fenpropathrin, fenvalerate, flucythrinate, gamma-cyhalothrin, lambda-cyhalothrin, metofluthrin, permethrin, profluthrin, resmethrin, tau-fluvalinate, tefluthrin, tetramethrin, tralomethrin and transfluthrin; non-ester pyrethroids such as etofenprox, flufenprox,

halfenprox, protrifenbute and silafluofen; oxadiazines such as indoxacarb; and natural pyrethrins such as cinerin-I, cinerin-II, jasmolin-I, jasmolin-II, pyrethrin-I and pyrethrin-II.

Embodiment I. A mixture wherein component (b) is selected from (b4).

Embodiment J. The mixture of Embodiment I wherein the component (b) is selected from the group consisting of bistrifluron, buprofezin, chlorfluazuron, cyromazine, diflubenzuron, flucycloxuron, flufenoxuron, hexaflumuron, lufenuron, novaluron, noviflumuron, penfluron, teflubenzuron and triflumuron.

Embodiment K. A mixture wherein component (b) is selected from (b5).

Embodiment L. The mixture of Embodiment K wherein the component (b) is selected from the group consisting of azadirachtin, chromafenozide, halofenozide, methoxyfenozide and tebufenozide.

Embodiment M. A mixture wherein component (b) is selected from (b6).

Embodiment N. A mixture of Embodiment M wherein component (b) is selected from the group consisting of spiromesifen and spiridiclofen.

Embodiment O. A mixture wherein component (b) is a compound selected from (b7).

Embodiment P. The mixture of Embodiment O wherein the component (b) is selected from the group consisting of spinosad, abamectin, avermectin, doramectin, emamectin, eprinomectin, ivermectin, milbemectin, milbemycin oxime, moxidectin, nemadectin and selamectin.

Embodiment Q. A mixture wherein component (b) is selected from (b8).

Embodiment R. The mixture of Embodiment Q wherein the component (b) is selected from the group consisting of acetoprole, endosulfan, ethiprole, fipronil and vaniliprole.

Embodiment S. A mixture wherein component (b) is selected from (b9).

Embodiment T. The mixture of Embodiment S wherein the component (b) is selected from the group consisting of epofenonane, fenoxycarb, hydroprene, kinoprene, methoprene, pyriproxyfen and triprene.

Embodiment U. A mixture wherein component (b) is selected from (b10).

Embodiment V. The mixture of Embodiment U wherein the component (b) is a compound selected from the group consisting of ryanodine and other related products of *Ryania speciosa* Vahl. (Flacourtiaceae), anthranilamides other than the compound of Formula 1 and phthalic diamides.

Embodiment W. A mixture wherein component (b) is selected from (b11).

Embodiment X. The mixture of Embodiment W wherein the component (b) is a -compound selected from amitraz and chlordimeform.

Embodiment Y. A mixture wherein component (b) is selected from (b12).

Embodiment Z. The mixture of Embodiment Y wherein the component (b) is a compound selected from the group consisting of acequinocyl, chlofenapyr, diafenthiuron, dicofol, fenazaquin, fenpyroximate, hydramethylnon, pyridaben, rotenone, tebufenpyrad and tolfenpyrad.

Embodiment AA. A mixture wherein component (b) is selected from (b13).

Embodiment AB. The mixture of Embodiment AA wherein the component (b) is a compound selected from the group consisting of bensultap, cartap, thiocyclam and thiosultap.

Embodiment AC. A mixture wherein component (b) is pyridalyl.

Embodiment AD. A mixture wherein component (b) is flonicamid.

Embodiment AE. A mixture wherein component (b) is pymetrozine.

Embodiment AF. A mixture wherein component (b) is selected from (b19).

Embodiment AG. The mixture of Embodiment AF wherein the component (b) is a biological agent selected from the group consisting of entomopathogenic bacteria such as *Bacillus thuringiensis* including ssp. *aizawai* and *kurstaki,* fungi such as *Beauvaria bassiana,* and viruses such as baculovirus and nuclear polyhedrosis virus (NPV; e.g., "Gemstar").

Embodiment AH. A mixture wherein component (b) comprises at least one invertebrate pest control agent from each of two different groups selected from (b1), (b2), (b3), (b4), (b5), (b6), (b7), (b8), (b9), (b10), (b11), (b12), (b13), (b14), (b15), (b16) and (b19).

The compound of Formula 1 can be prepared by one or more of the following methods and variation as described in Schemes 1-18. The definitions of X, $R^1$ and $R^2$ in the compounds of Formulae 3, 4, 9, 10, 13, 17, 18, 19, 20 and 22 are defined in the Schemes below unless indicated otherwise.

The compound of Formula 1 can be prepared by the reaction of benzoxazinone 2 with methylamine as outlined in Scheme 1. This reaction can be run neat or in a variety of suitable solvents including tetrahydrofuran, diethyl ether, dioxane, toluene, dichloromethane or chloroform with optimum temperatures ranging from room temperature to the reflux temperature of the solvent. The general reaction of benzoxazinones with amines to produce anthranilamides is well documented in the chemical literature. For a review of benzoxazinone chemistry see Jakobsen et al., Bioorganic and Medicinal Chemistry 2000, 8, 2095-2103 and references cited within. See also G. M. Coppola, J. Heterocyclic Chemistry 1999, 36, 563-588.

Scheme 1

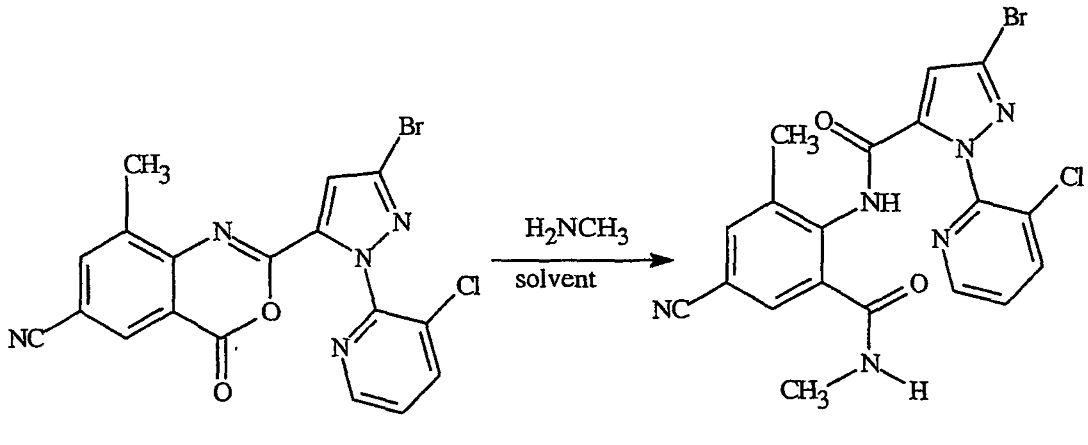


2 1

The compound of Formula 1 can also be prepared from haloanthranilic diamide 3 (wherein X is iodine or bromine) by the coupling method shown in Scheme 2. Reaction of a compound of Formula 3 with a metal cyanide (e.g. cuprous cyanide, zinc cyanide, or potassium cyanide), optionally with or without a suitable palladium catalyst (e.g., tetrakis(triphenylphosphine)palladium(0) or dichlorobis(triphenylphosphine)palladium(II)) and optionally with or without a metal halide (e.g., cuprous iodide, zinc iodide, or potassium iodide) in a suitable solvent such as acetonitrile, *N,N*-dimethylformamide or N-methylpyrrolidinone, optionally at temperatures ranging from room temperature to the reflux temperature of the solvent, affords the compound of Formula 1. The suitable solvent can also be tetrahydrofuran or dioxane when a palladium catalyst is used in the coupling reaction.

Scheme 2

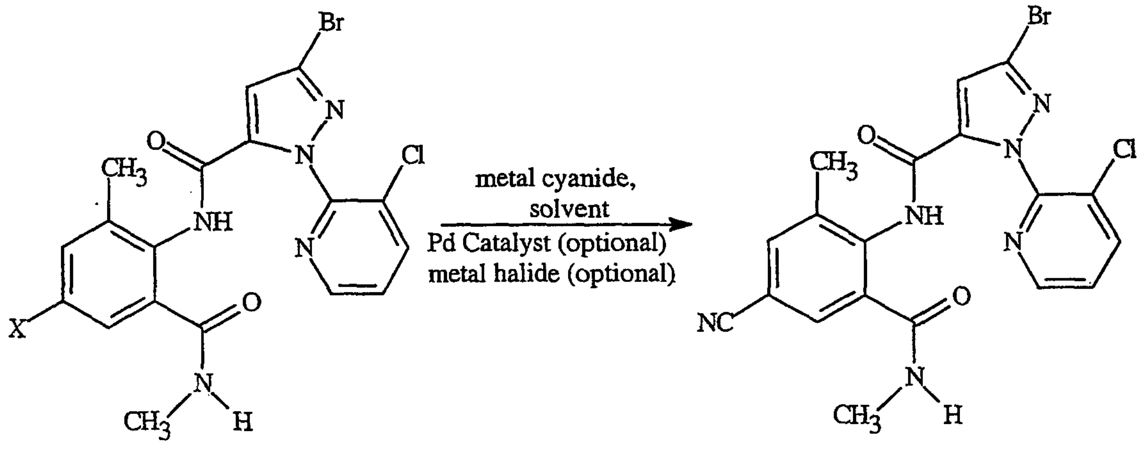


3 (X is Br or I) 1

Cyanobenzoxazinone 2 can be prepared by the method outlined in Scheme 3. Reaction of a halobenzoxazinone of Formula 4 (wherein X is iodine or bromine) with a metal cyanide using a similar coupling method as described above for Scheme 2 (optionally with or without a palladium catalyst and optionally with or without a metal halide present) affords compound 2.

Scheme 3

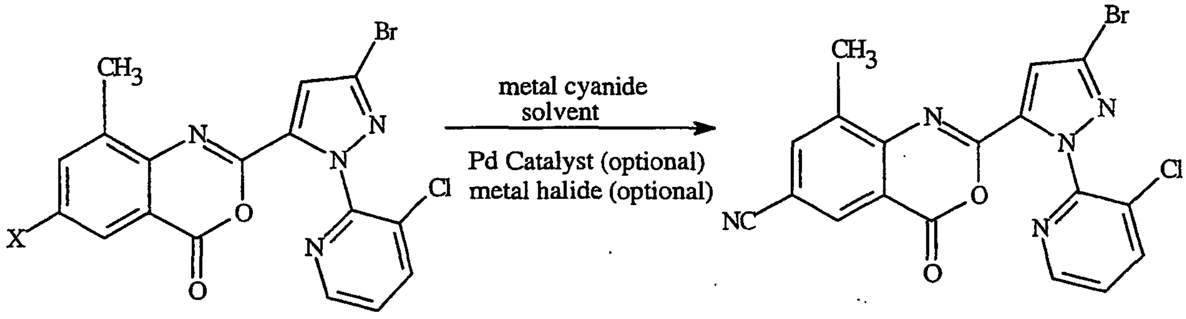


4 (X is Br or I)

2

Cyanobenoxazinone 2 can also be prepared by the method detailed in Scheme 4 via coupling of pyrazole carboxylic acid 5 with cyanoanthranilic acid 6. This reaction involves sequential addition of methanesulfonyl chloride in the presence of a tertiary amine such as triethylamine or pyridine to the pyrazole carboxylic acid 5, followed by the addition of cyanoanthranilic acid 6, followed by a second addition of tertiary amine and methanesulfonyl chloride.

Scheme 4

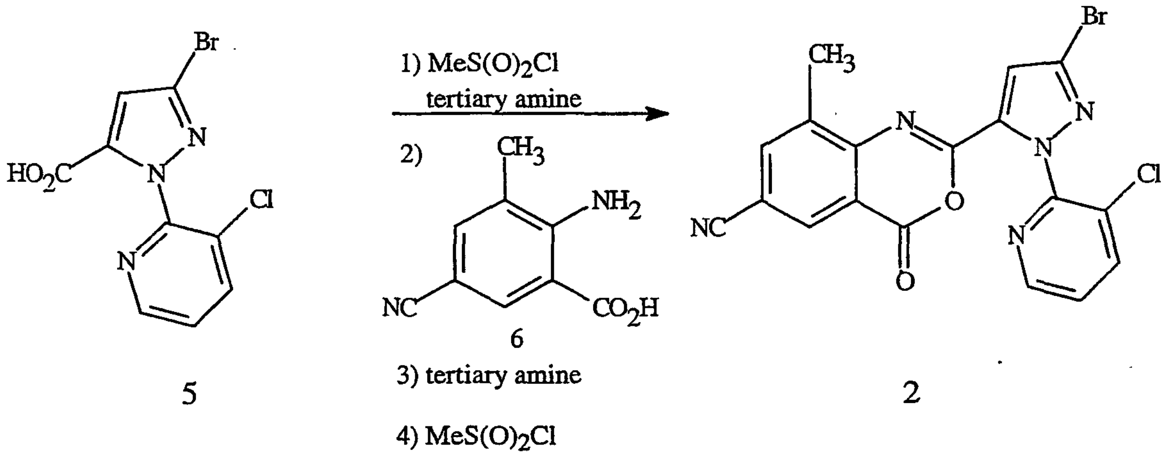


5

2

Scheme 5 depicts another method for preparing the benzoxazinone 2 involving coupling an isatoic anhydride 7 with a pyrazole acid chloride 8. Solvents such as pyridine or pyridine/acetonitrile are suitable for this reaction. The acid chloride 8 is prepared from the corresponding acid 5 by known methods such as chlorination with thionyl chloride or oxalyl chloride.

Scheme 5

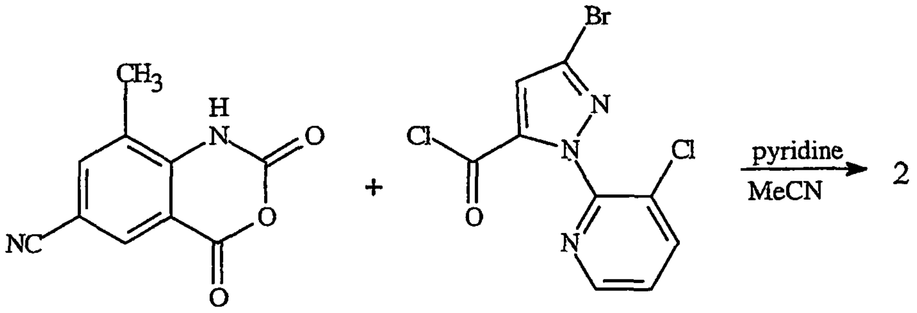


7 8

Alternatively, cyanobenzoxazinone 2 can also be prepared by a method similar to what is described in Scheme 4 by coupling pyrazole carboxylic acid 5 with the isatoic anhydride 7 via a sequential addition method. As illustrated in Example 2, cyanobenzoxazinone 2 can also be prepared in a one-pot fashion by addition of methanesulfonyl chloride to the mixture of an organic base such as triethylamine or 3-picoline, the pyrazole carboxylic acid 5 and the isatoic anhydride 7 at low temperature (-5 to 0 °C), and then raising the reaction temperature to facilitate reaction completion.

As shown in Scheme 6, haloanthranilic diamides of Formula 3 can be prepared by the reaction of benzoxazinones of Formula 4, wherein X is halogen, with methylamine using a method analogous to the method described for Scheme 1. Conditions for this reaction are similar to those specified in Scheme 1.

Scheme 6

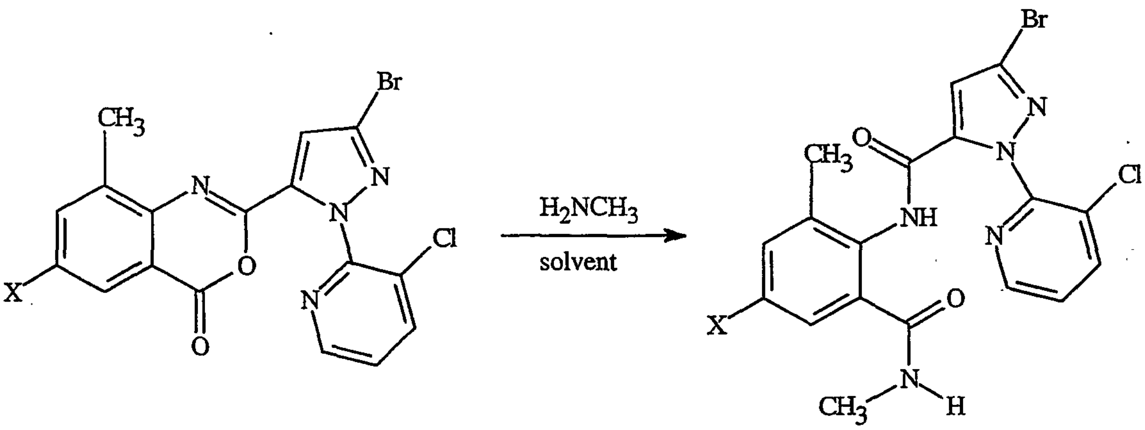


4 X is halogen 3

As shown in Scheme 7, halobenzoxazinones of Formula 4 (wherein X is halogen) can be prepared via direct coupling of a pyridylpyrazole carboxylic acid 5 with a haloanthranilic acid of Formula 9 (wherein X is halogen) by a method analogous to the method described for Scheme 4. This reaction involves sequential addition of methanesulfonyl chloride in the presence of a tertiary amine such as triethylamine or pyridine to the pyrazolecarboxylic acid 5, followed by the addition of a haloanthranilic acid of Formula 9, followed by a second addition of tertiary amine and methanesulfonyl chloride. This method generally affords good yields of the benzoxazinone of Formula 4.

Scheme 7

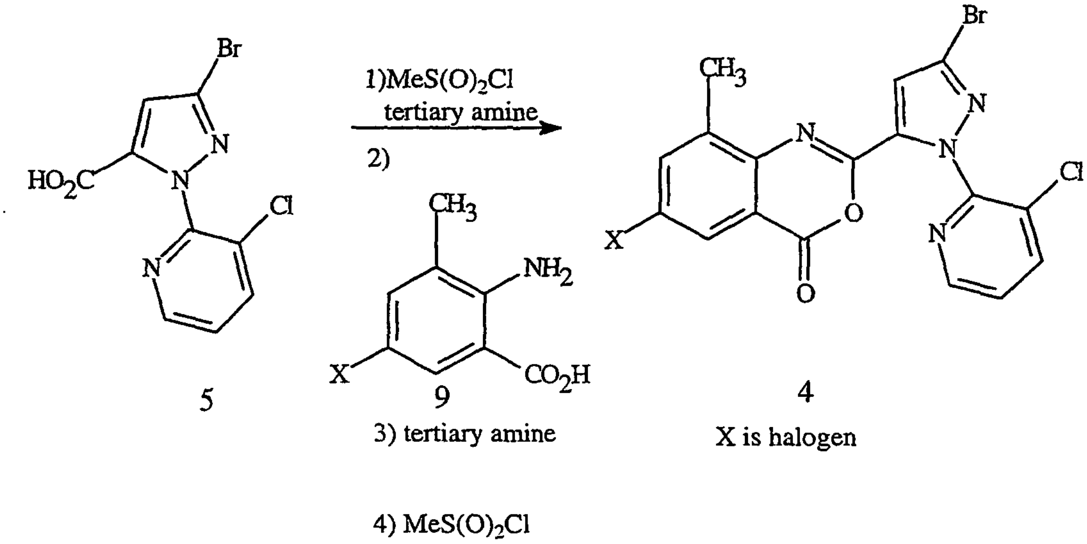


5 9 4

X is halogen

As shown in Scheme 8, a halobenzoxazinone of Formula 4 can also be prepared via coupling an isatoic anhydride of Formula 10 (wherein X is halogen) with the pyrazole acid chloride 8 by a method analogous to the method described for Scheme 5.

Scheme 8

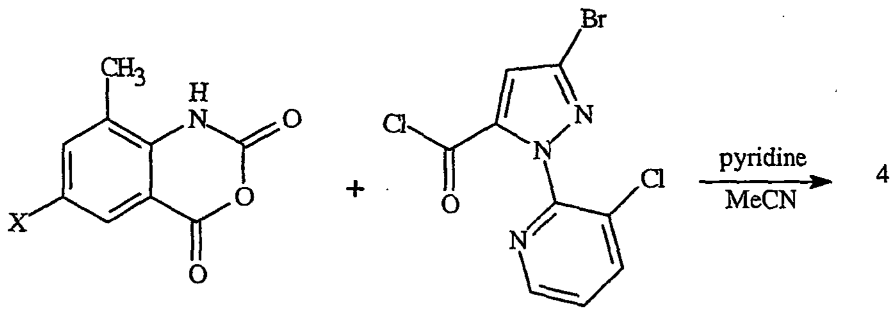


10 X is halogen 8

The cyanoanthranilic acid 6 can be prepared from a haloanthranilic acid of Formula 9 as outlined in Scheme 9. Reaction of a haloanthranilic acid of Formula 9 (wherein X is iodine or bromine) with a metal cyanide using a method analogous to the method described for Scheme 2 (optionally with or without a palladium catalyst and optionally with or without a metal halide present) affords the compound of Formula 6.

Scheme 9

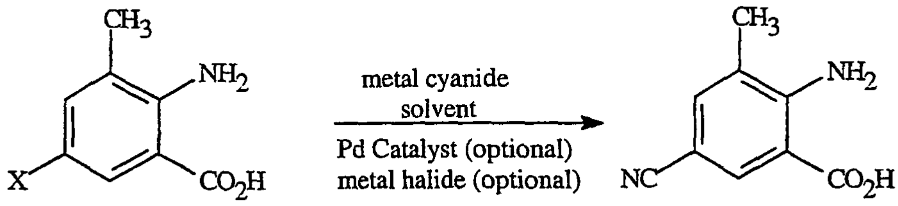


9
X is Br or I

6

As illustrated in Scheme 10, the cyanoisatoic anhydride 7 can be prepared from the cyanoanthranilic acid 6 by treatment with phosgene (or a phosgene equivalent such as triphosgene) or an alkyl chloroformate (e.g., methyl chloroformate) in a suitable solvent such as toluene or tetrahydrofuran.

Scheme 10

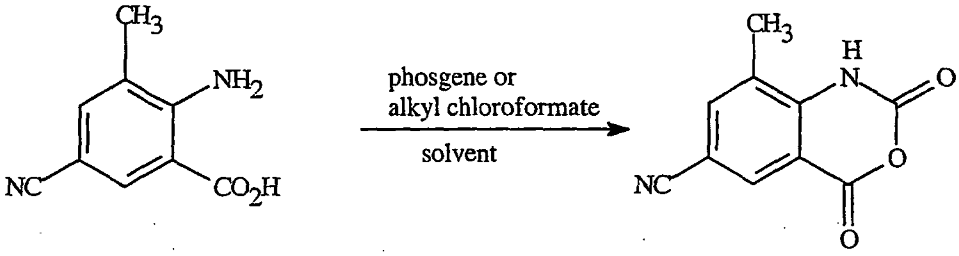


6

7

As shown in Scheme 11, haloanthranilic acids of Formula 9 can be prepared by direct halogenation of the unsubstituted anthranilic acid 11 with *N*-chlorosuccinimide (NCS), *N*-bromosuccinimide (NBS) or *N*-iodosuccinimide (NIS) respectively in solvents such as *N,N*-dimethylformamide (DMF) to produce the corresponding halogen-substituted acid of Formula 9.

Scheme 11

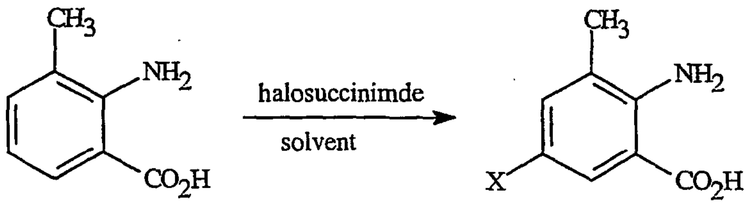


11

9
X is halogen

As illustrated in Scheme 12, haloisatoic anhydrides of Formula 10 can be prepared from haloanthranilic acids of Formula 9 by reaction with phosgene (or a phosgene equivalent such as triphosgene) or an alkyl chloroformate, e.g., methyl chloroformate, in a suitable solvent such as toluene or tetrahydrofuran.

Scheme 12

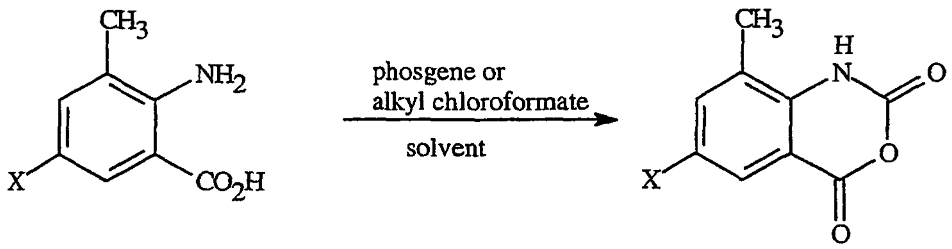


9 X is halogen 10

The pyridylpyrazole carboxylic acid 5 can be prepared by the method outlined in Scheme 13. Reaction of the pyrazole 12 with a 2-halopyridine of Formula 13 in the presence of a suitable base such as potassium carbonate in a solvent such as *N,N*-dimethylformamide or acetonitrile affords good yields of the 1-pyridylpyrazole 14 with good specificity for the desired regiochemistry. Metallation of compound 14 with lithium diisopropylamide (LDA) followed by quenching of the lithium salt with carbon dioxide affords the pyrazole carboxylic acid of Formula 5.

Scheme 13

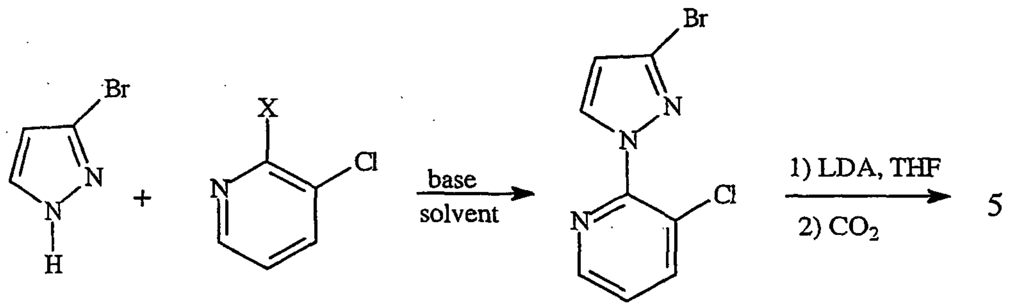


12 13 X is halogen 14

The starting pyrazole 12 is a known compound and can be prepared by literature procedure (H. Reimlinger and A. Van Overstraeten, Chem. Ber. 1966, 99(10), 3350-7). A useful alternative method for the preparation of compound 12 is depicted in Scheme 14. Metallation of the sulfamoyl pyrazole 15 with *n*-butyllithium followed by direct bromination of the anion with 1,2-dibromotetrachloroethane affords the bromo derivative 16. Removal of the sulfamoyl group with trifluoroacetic acid (TFA) at room temperature proceeds cleanly and in good yield to afford the pyrazole 12.

Scheme 14

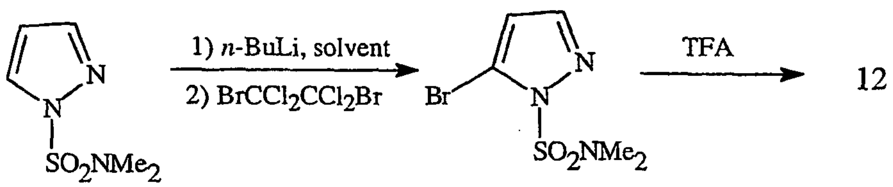


15 16

As an alternative to the method illustrated in Scheme 13, the pyrazolecarboxylic acid 5 can also be prepared by the method outlined in Scheme 15. Oxidation of a compound of Formula 17, optionally in the presence of acid, gives a compound of Formula 18. Hydrolysis of the carboxylic ester 18 provides the carboxylic acid 5.

Scheme 15

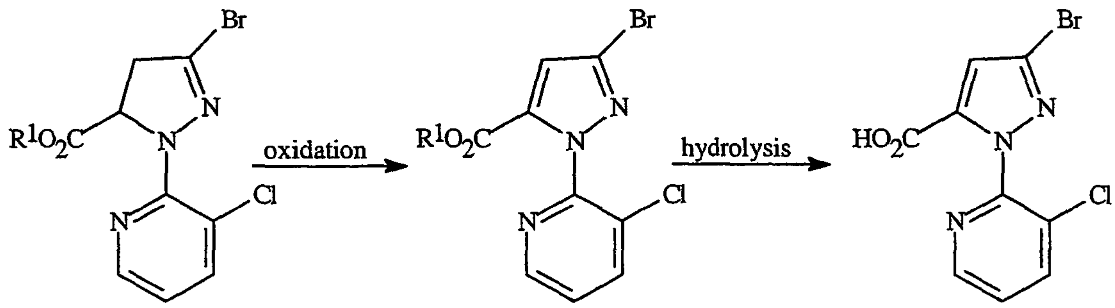


17 18 5

wherein $R^1$ is $C_1$-$C_4$ alkyl

The oxidizing agent for converting a compound of Formula 17 to a compound of Formula 18 can be hydrogen peroxide, organic peroxides, potassium persulfate, sodium persulfate, ammonium persulfate, potassium monopersulfate (e.g., Oxone®) or potassium permanganate. To obtain complete conversion, at least one equivalent of the oxidizing agent versus the compound of Formula 17 should be used, preferably between about one to two equivalents. This oxidation is typically carried out in the presence of a solvent. The solvent can be an ether, such as tetrahydrofuran, p-dioxane and the like, an organic ester, such as ethyl acetate, dimethyl carbonate and the like, or a polar aprotic organic such as *N,N*-dimethylformamide, acetonitrile and the like. Acids suitable for use in the oxidation step include inorganic acids, such as sulfuric acid, phosphoric acid and the like, and organic acids, such as acetic acid, benzoic acid and the like. One to five equivalents of acid can be used. Of note is potassium persulfate as the oxidant with the oxidation is carried out in the presence of sulfuric acid. The reaction can be carried out by mixing the compound of Formula 17 in the desired solvent and, if used, the acid. The oxidant can then be added at a convenient rate. The reaction temperature is typically varied from as low as about 0 °C up to the boiling point of the solvent in order to obtain a reasonable reaction time to complete the reaction. Carboxylic esters of Formula 18 can be converted to carboxylic acid 5 by numerous methods including nucleophilic cleavage under anhydrous conditions or hydrolytic methods involving the use of either acids or bases (see T. W. Greene and P. G. M. Wuts, Protective Groups in Organic Synthesis, 2nd ed., John Wiley & Sons, Inc., New York, 1991, pp. 224-269 for a review of methods). For the method of Scheme 15, base-catalyzed hydrolytic methods are one embodiment. Suitable bases include alkali metal (such as lithium, sodium or potassium) hydroxides. For example, the ester can be dissolved in a mixture of water and an alcohol such as ethanol. Upon treatment with sodium hydroxide or potassium hydroxide, the ester is saponified to provide the sodium or potassium salt of the carboxylic acid. Acidification with a strong acid, such as hydrochloric acid or sulfuric acid, yields the carboxylic acid 5.

Compounds of Formula 17, wherein $R^1$ is $C_1$-$C_4$ alkyl, can be prepared from the corresponding compounds of Formula 19 as shown in Scheme 16.

Scheme 16

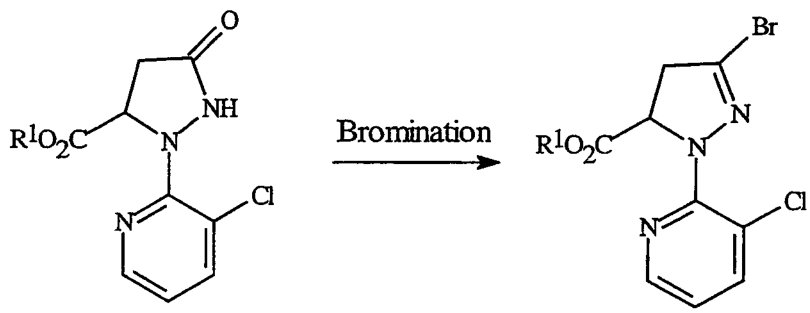


19 17

wherein $R^1$ is $C_1$-$C_4$ alkyl

Treatment of a compound of Formula 19 with a bromination reagent, usually in the presence of a solvent, affords the corresponding bromo compound of Formula 17. Brominating reagents that can be used include phosphorus oxybromide, phosphorus tribromide, phosphorus pentabromide and dibromotriphenylphosphorane. Embodiments of note are phosphorus oxybromide and phosphorus pentabromide. To obtain complete conversion, at least 0.33 equivalents of phosphorus oxybromide versus the compound of Formula 19 should be used, of note between about 0.33 and 1.2 equivalents. To obtain complete conversion, at least 0.20 equivalents of phosphorus pentabromide versus the compound of Formula 19 should be used, of note between about 0.20 and 1.0 equivalents. Typical solvents for this bromination include halogenated alkanes, such as dichloromethane, chloroform, chlorobutane and the like, aromatic solvents, such as benzene, xylene, chlorobenzene and the like, ethers, such as tetrahydrofuran, p-dioxane, diethyl ether, and the like, and polar aprotic solvents such as acetonitrile, *N,N*-dimethylformamide, and the like. Optionally, an organic base, such as triethylamine, pyridine, *N,N*-dimethylaniline or the like, can be added. Addition of a catalyst, such as *N,N*-dimethylformamide, is also an option. Preferred is the process in which the solvent is acetonitrile and a base is absent. Typically, neither a base nor a catalyst is required when acetonitrile solvent is used. Of note is the process conducted by mixing the compound of Formula 19 in acetonitrile. The brominating reagent is then added over a convenient time, and the mixture is then held at the desired temperature until the reaction is complete. The reaction temperature is typically between 20 °C and the boiling point of acetonitrile, and the reaction time is typically less than 2 hours. The reaction mass is then neutralized with an inorganic base, such as sodium bicarbonate, sodium hydroxide and the like, or an organic base, such as sodium acetate. The desired product of Formula 17 can be isolated by methods known to those skilled in the art, including crystallization, extraction and distillation.

Scheme 17

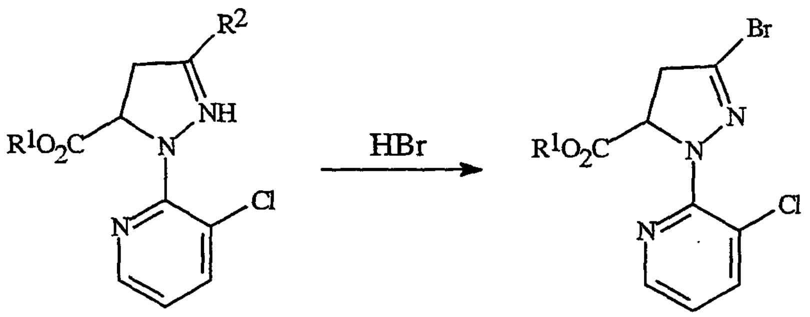


20

17

wherein $R^1$ is $C_1$-$C_4$ alkyl and

$R^2$ is Cl or $OSO_2Ph$, $OSO_2Ph$-*p*-$CH_3$ or $OSO_2CH_3$

Alternatively, as shown in Scheme 17, compounds of Formula 17 can be prepared by treating the corresponding compounds of Formula 20 wherein $R^2$ is a Cl or a sulfonate group such as p-toluenesulfonate, benzenesulfonate and methanesulfonate with hydrogen bromide. By this method the $R^2$ chloride or sulfonate substituent on the compound of Formula 20 is replaced with Br from hydrogen bromide. The reaction is conducted in a suitable solvent such as dibromomethane, dichloromethane, acetic acid, ethyl acetate or acetonitrile. The reaction can be conducted at or near atmospheric pressure or above atmospheric pressure in a pressure vessel. Hydrogen bromide can be added in the form of a gas to the reaction mixture containing the Formula 20 compound and solvent. When $R^2$ in the starting compound of Formula 20 is a Cl, the reaction can be conducted in such a way that sparging or other suitable means removes the hydrogen chloride generated from the reaction. Alternatively, hydrogen bromide can first be dissolved in an inert solvent in which it is highly soluble (such as acetic acid) before contacting the compound of Formula 20 either neat or in solution. The reaction can be conducted between about 0 and 100 °C, most conveniently near ambient temperature (e.g., about 10 to 40 °C), and of note between about 20 and 30 °C. Addition of a Lewis acid catalyst such as aluminum tribromide for preparing Formula 17 can facilitate the reaction. The product of Formula 17 is isolated by the usual methods known to those skilled in the art, including extraction, distillation and crystallization.

Starting compounds of Formula 20 wherein $R^2$ is a sulfonate group can be prepared from corresponding compounds of Formula 19 by standard methods such as treatment with a sulfonyl chloride (e.g., *p*-toluenesulfonyl chloride) and base such as a tertiary amine (e.g., triethylamine) in a suitable solvent such as dichloromethane.

Compounds of Formula 19 can be prepared from the compound 21 as outlined in Scheme 18. In this method, the hydrazine compound 21 is allowed to react with a compound of Formula 22 (a fumarate ester or maleate ester or a mixture thereof can be used) in the presence of a base and a solvent.

Scheme 18

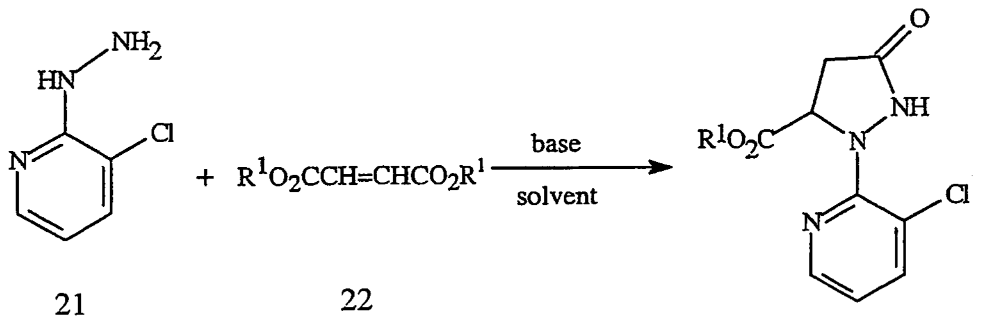


21 22 19

wherein $R^1$ is $C_1$-$C_4$ alkyl

The base used in Scheme 18 is typically a metal alkoxide salt, such as sodium methoxide, potassium methoxide, sodium ethoxide, potassium ethoxide, potassium *tert*-butoxide, lithium tert-butoxide, and the like. Polar protic and polar aprotic organic solvents can be used, such as alcohols, acetonitrile, tetrahydrofuran, *N,N*-dimethylformamide, dimethyl sulfoxide and the like. Solvents of note are alcohols such as methanol and ethanol. In one embodiment the alcohol is the same as that making up the fumarate or maleate ester and the alkoxide base. The reaction is typically conducted by mixing the compound 21 and the base in the solvent. The mixture can be heated or cooled to a desired temperature and the compound of Formula 22 added over a period of time. Typically reaction temperatures are between 0 °C and the boiling point of the solvent used. The reaction can be conducted under greater than atmospheric pressure in order to increase the boiling point of the solvent. Temperatures between about 30 and 90 °C are one embodiment. The reaction can then be acidified by adding an organic acid, such as acetic acid and the like, or an inorganic acid, such as hydrochloric acid, sulfuric acid and the like. The desired product of Formula 19 can be isolated by methods known to those skilled in the art, such as crystallization, extraction or distillation.

Without further elaboration, it is believed that one skilled in the art using the preceding description can utilize the present invention to its fullest extent. The following Examples are, therefore, to be construed as merely illustrative, and not limiting of the disclosure in any way whatsoever. Steps in the following Examples illustrate a procedure for each step in an overall synthetic transformation, and the starting material for each step may not have necessarily been prepared by a particular preparative run whose procedure is described in other Steps. Percentages are by weight except for chromatographic solvent mixtures or where otherwise indicated. Parts and percentages for chromatographic solvent mixtures are by volume unless otherwise indicated. $^1$H NMR spectra are reported in ppm downfield from tetramethylsilane; "s" means singlet, "d" means doublet, "t" means triplet, "q" means quartet, "m" means multiplet, "dd" means doublet of doublets, "dt" means doublet of triplets, and "br s" means broad singlet.

EXAMPLE 1

Preparation of 3-bromo-1-(3-chloro-2-pvridinyl)-*N*-[4-cyano-2-methyl-6-[(methylamino)carbonyl]phenyl]-1*H*-pyrazole-5-carboxamide

Step A: Preparation of 3-bromo-*N,N*-dimethyl-1H-pyrazole-1-sulfonamide

To a solution of *N,N*-dimethylsulfamoylpyrazole (44.0 g, 0.251 mol) in dry tetrahydrofuran (500 mL) at -78 °C was added dropwise a solution of *n*-butyllithium (2.5 M in hexane, 105.5 mL, 0.264 mol) while maintaining the temperature below -60 °C. A thick solid formed during the addition. Upon completion of the addition the reaction mixture was stirred at -78 °C for an additional 15 minutes, after which time a solution of 1,2-dibromotetrachloroethane (90 g, 0.276 mol) in tetrahydrofuran (150 mL) was added dropwise while maintaining the temperature below -70 °C. The reaction mixture turned a clear orange; stirring was continued for an additional 15 minutes. The -78 °C bath was removed and the reaction was quenched with water (600 mL). The reaction mixture was extracted with methylene chloride (4x), and the organic extracts were dried over magnesium sulfate and concentrated. The crude product was further purified by chromatography

on silica gel using methylene chloride-hexane (50:50) as eluent to afford 57.04 g of the title product as clear colorless oil.
$^1$H NMR ($CDCl_3$): δ 7.62 (m,1H), 6.44 (m,1H), 3.07 (d,6H).

Step B: Preparation of 3-bromopyrazole

To trifluoroacetic acid (70 mL) was slowly added 3-bromo-*N,N*-dimethyl-1*H*-pyrazole-1-sulfonamide (i.e. the bromopyrazole product of Step A) (57.04 g). The reaction mixture was stirred at room temperature for 30 minutes and then concentrated at reduced pressure. The residue was taken up in hexane, insoluble solids were filtered off, and the hexane was evaporated to afford the crude product as an oil. The crude product was further purified by chromatography on silica gel using ethyl acetate/dichloromethane (10:90) as eluent to afford an oil. The oil was taken up in dichloromethane, neutralized with aqueous sodium bicarbonate solution, extracted with methylene chloride (3x), dried over magnesium sulfate and concentrated to afford 25.9 g of the title product as a white solid, m.p. 61-64 °C.
$^1$H NMR ($CDCl_3$): δ 12.4 (br s,1H), 7.59 (d,1H), 6.37 (d,1H).

Step C: Preparation of 2-(3-bromo-1*H*-pvrazol-1-yl)-3-chloropyridine

To a mixture of 2,3-dichloropyridine (27.4 g, 185 mmol) and 3-bromopyrazole (i.e. the product of Step B) (25.4 g, 176 mmol) in dry *N,N*-dimethylformamide (88 mL) was added potassium carbonate (48.6 g, 352 mmol), and the reaction mixture was heated to 125 °C for 18 hours. The reaction mixture was cooled to room temperature and poured into ice water (800 mL). A precipitate formed. The precipitated solids were stirred for 1.5 h, filtered and washed with water (2x100 mL). The solid filter cake was taken up in methylene chloride and washed sequentially with water, 1N hydrochloric acid, saturated aqueous sodium bicarbonate solution, and brine. The organic extracts were then dried over magnesium sulfate and concentrated to afford 39.9 g of a pink solid. The crude solid was suspended in hexane and stirred vigorously for 1 hr. The solids were filtered, washed with hexane and dried to afford the title product as an off-white powder (30.4 g) determined to be > 94 % pure by NMR. This material was used without further purification in Step D.
$^1$H NMR ($CDCl_3$): δ 8.43 (d,1H), 8.05 (s,1H), 7.92 (d,1H), 7.30 (dd,1H), 6.52 (s,1H).

Step D: Preparation of 3-bromo-1-(3-chloro-2-pyridinyl)-1*H*-pvrazole-5-carboxylic acid

To a solution of 2-(3-bromo-1*H*-pyrazol-1-yl)-3-chloropyridine (i.e. the pyrazole product of Step C) (30.4 g, 118 mmol) in dry tetrahydrofuran (250 mL) at -76 °C was added dropwise a solution of lithium diisopropylamide (118 mmol) in tetrahydrofuran at such a rate as to maintain the temperature below -71 °C. The reaction mixture was stirred for 15 minutes at -76 °C, and carbon dioxide was then bubbled through for 10 minutes, causing warming to -57 °C. The reaction mixture was warmed to -20 °C and quenched with water. The reaction mixture was concentrated and then taken up in water (1 L) and ether (500 mL), and then aqueous sodium hydroxide solution (1 N, 20 mL) was added. The aqueous extracts were washed with ether and acidified with hydrochloric acid. The precipitated solids were filtered, washed with water and dried to afford 27.7 g of the title product as a tan solid. Product from another run following similar procedure melted at 200-201 °C.
$^1$H NMR (DMSO-$d_6$): δ 8.56 (d,1H), 8.24 (d,1H), 7.68 (dd,1H), 7.25 (s,1H).

Step E: Preparation of 2-amino-3-methyl-5-iodobenzoic acid

To a solution of 2-amino-3-methylbenzoic acid (Aldrich, 5 g, 33 mmol) in *N,N*-dimethylformamide (30 mL) was added *N*-iodosuccinimide (7.8 g, 34.7 mmol), and the reaction mixture was suspended in a 75 °C oil bath overnight. The heat was removed and the reaction mixture was then slowly poured into ice-water (100 mL) to precipitate a light grey solid. The solid was filtered and washed four times with water and then placed in a vacuum oven at 70 °C to dry overnight. The desired intermediate was isolated as a light grey solid (8.8 g).
$^1$H NMR (DMSO-$d_6$): δ 7.86 (d,1H), 7.44 (d,1H), 2.08 (s,3H).

Step F: Preparation of 2-[3-bromo-1-(3-chloro-2-pyridinyl)-1*H*-pyrazol-5-yl]-6-iodo-8-methyl-4*H*-3,1-benzoxazin-4-one

To a solution of methanesulfonyl chloride (0.54 ml, 6.94 mmol) in acetonitrile (15 mL) was added dropwise a mixture of 3-bromo-1-(3-chloro-2-pyridinyl)-1*H*-pyrazole-5-carboxylic acid (i.e. the carboxylic acid product of Step D) (2.0 g, 6.6 mmol) and triethylamine (0.92 ml, 6.6 mmol) in acetonitrile (5 mL) at 0 °C. The reaction mixture was then stirred for 15 minutes at 0°C. Then, 2-amino-3-methyl-5-iodobenzoic acid (i.e. the product from Step E) (1.8 g, 6.6 mmol) was added, and stirring was continued for an additional 5 minutes. A solution of triethylamine (1.85 mL, 13.2 mmol) in acetonitrile (5 mL) was then added dropwise while keeping the temperature below 5 °C. The reaction mixture was stirred 40 minutes at 0 °C, and then methanesulfonyl chloride (0.54 ml, 6.94 mmol) was added. The reaction mixture was then

warmed to room temperature and stirred overnight. The reaction mixture was then diluted with water (50 mL) and extracted with ethyl acetate (3x50 mL). The combined ethyl acetate extracts were washed successively with 10% aqueous sodium bicarbonate (1x20 mL) and brine (1x20 mL), dried ($MgSO_4$) and concentrated to afford 2.24 g of the title product as a crude yellow solid.
$^1$HNMR ($CDCl_3$): δ 8.55 (dd,1H), 8.33 (d,1H), 7.95 (dd,1H), 7.85 (s,1H), 7.45 (m,1H), 7.25 (s,1H), 1.77 (s,3H).

Step G: Preparation of 2-[3-bromo-1-(3-chloro-2-pyridinyl)-1*H*-pyrazol-5-yl]-6-cyano-8-methyl-4*H*-3,1-benzoxazin-4-one

To a solution of 2-[3-bromo-1-(3-chloro-2-pyridinyl)-1*H*-pyrazol-5-yl]-6-iodo-8-methyl-4H-3,1-benzoxazin-4-one (i.e. the benzoxazinone product of Step F) (600 mg, 1.1 mmol) in tetrahydrofuran (15 mL) was added copper(I) iodide (126 mg, 0.66 mmol), tetrakis(triphenylphosphine)palladium(0) (382 mg, 0.33 mmol) and copper(I) cyanide (800 mg, 8.8 mmol) sequentially at room temperature. The reaction mixture was then heated at reflux overnight. The reaction turned black in color, at which point thin layer chromatography on silica gel confirmed completion of the reaction. The reaction mixture was diluted with ethyl acetate (20 mL) and filtered through Celite® diatomaceous filter aid, followed by washing three times with 10% sodium bicarbonate solution and once with brine. The organic extract was dried ($MgSO_4$) and concentrated under reduced pressure to afford 440 mg of the title compound as a crude yellow solid.
$^1$H NMR ($CDCl_3$): δ 8.55 (m,1H), 8.31 (d,1H), 7.96 (dd,1H), 7.73 (s,1H), 7.51 (m,1H), 7.31 (s,1H, 1.86 (s,3H).

Step H: Preparation of 3-bromo-1-(3-chloro-2-pyridinyl)-*N*-[4-cyano-2-methyl-6-[(methylamino)carbonyl]phenyl]-1*H*-pyrazole-5-carboxamide

To a solution of 2-[3-bromo-1-(3-chloro-2-pyridinyl)-1H-pyrazol-5-yl]-6-cyano-8-methyl-4*H*-3,1-benzoxazin-4-one (i.e. the cyanobenoxazinone product of Step G) (100 mg, 0.22 mmol) in tetrahydrofuran (5 mL) was added dropwise methylamine (2.0 M solution in THF, 0.5 mL, 1.0 mmol) and the reaction mixture was stirred for 5 minutes, at which point thin layer chromatography on silica gel confirmed completion of the reaction. The tetrahydrofuran solvent was evaporated under reduced pressure, and the residual solid was purified by chromatography on silica gel to afford the title compound, a compound of the present invention, as a white solid (41 mg), which decomposed in the melting apparatus above 180 °C.
$^1$HNMR ($CDCl_3$): δ 10.55 (s,1H), 8.45 (dd,1H), 7.85 (dd,1H), 7.57 (s,2H), 7.37 (m,1H), 7.05 (s,1H), 6.30 (d,1H), 2.98 (d, 3H), 2.24 (s,3H).

EXAMPLE 2

Alternative preparation of 2-[3-bromo-1-(3-chloro-2-pyridinyl)-1*H*-pyrazol-5-yl]-6-cyano-8-methyl-4*H*-3,1-benzoxazin-4-one

Step A: Preparation of 2-amino-3-methyl-5-cyanobenzoic acid

To a solution of 2-amino-3-methyl-5-iodobenzoic acid (i.e. the benzoic acid product of Example 1, Step E, 111 g, 400 mmol) in chlorobenzene (1000 mL) was added powdered sodium cyanide (24.5 g, 500 mmol) and potassium iodide (13.3 g, 80 mmol), followed by addition of copper(I) iodide (7.7 g, 40 mmol) and more chlorobenzene (1 L). After stirring for a few minutes at room temperature, *N,N'*-dimethylethylenediamine (86 mL, 800 mmol) was added in one portion. The resulting dark mixture was heated to 115 °C for 18 h. The reaction mixture was allowed to cool to room temperature, and the reaction solvent was decanted. The solids were taken up in water (2 L) and ethyl acetate (1 L). The aqueous solution was washed with diethyl ether (1 L), diluted with water (2 L), and the pH was adjusted to 2 to precipitate the crude product. The crude product was collected by filtration, dried for 1hr on a fritted funnel, then washed with *n*-butyl chloride, and air dried for 2 days. The solids were suspended in *n*-butyl chloride (1.2 L) and heated to reflux in a flask fitted with a Dean-Stark trap to remove residual water. After cooling to 15 °C, the solids were collected by filtration and dried to give the title product (74.4 g).
$^1$HNMR (DMSO-$d_6$): δ 7.97 (d,1H), 7.51(d,1H), 2.13 (s,3H).

Step B: Preparation of 6-cyano-8-methyl-1*H*-benzo[d][1,3]oxazine-2,4-dione

To a solution of 2-amino-3-methyl-5-cyanobenzoic acid (i.e. the cyanobenzoic acid product of Step A, 101 g, 570 mmol) in 1,4-dioxane (550 mL) was added diphosgene (41 mL, 340 mmol) dropwise. The reaction mixture was warmed to 65 °C and maintained at 60 °C for 2 h, and then the reaction mixture was allowed to cool to room temperature and stir overnight. To the reaction mixture was added acetonitrile (600 mL), and then the reaction mixture was cooled with an ice bath. After 30 minutes, the solids were collected by filtration and rinsed with *n*-butyl chloride. The solids were

dried in a vacuum oven at 100 °C overnight to afford the title product as tan solid (99 g).
$^1$H NMR (DMSO-$d_6$): δ 11.45 (br s, 1H), 8.22 (d,1H), 8.00 (d,1H), 2.35 (s,3H).

Step C: Preparation of 2-[3-bromo-1-(3-chloro-2-pyridinyl)-1*H*-pyrazol-5-yl]-6-cyano-8-methyl-4*H*-3,1-benzoxazin-4-one

A mixture of 3-bromo-1-(3-chloro-2-pyridinyl)-1H-pyrazole-5-carboxylic acid (3.09 g, 10.0 mmol, see WO 03/015519 for preparation), 6-cyano-8-methyl-1*H*-benzo[d][1,3]oxazine-2,4-dione (i.e. the benzoxazinone product of Step B, 96.3% purity, 2.10 g, 10.0 mmol) and 3-picoline (3.30 mL, 3.16 g, 34 mmol) in acetonitrile (65 mL) was cooled to about -5 °C. Then methanesulfonyl chloride (1.0 mL, 1.5 g, 13 mmol) in acetonitrile (3 mL) was added dropwise at -5 to 0 °C. After 15 minutes at -5 to 0 °C, the reaction mixture was heated to 50 °C for 4 hours. The reaction mixture was then cooled to room temperature, water (4 mL) was added dropwise, and the reaction mixture was stirred 15 minutes. The mixture was filtered, and the solids were washed sequentially with 4:1 acetonitrile-water (2 x 2 mL) and acetonitrile (3 x 2 mL), and dried under nitrogen to afford the title product as a pale green powder, 3.71 g, melting at 263 - 267 °C.
$^1$H NMR (DMSO-$d_6$) δ 8.63 (dd, 1H, J = 4.8, 1.5 Hz), 8.32-8.40 (m, 2H), 8.09 (m, 1H), 7.77 (dd, 1H, J = 8.2, 4.6 Hz), 7.59 (s, 1H), 1.73 (s, 3H).

The invertebrate pest control agent of groups (b1), (b2), (b3), (b4), (b5), (b6), (b7), (b8), (b9), (b10), (b11), (b12), (b13), (b14), (b15), (b16), (b17) and (b18) have been described in published patents and scientific journal papers. Most of these compounds of groups (b1) through (b18) and the biological agents of group (b19) are commercially available as active ingredients in invertebrate pest control products. These compounds and biological agents are described in compendia such as The Pesticide Manual, 13th edition., C. D. S. Thomlin (Ed.), British Crop Protection Council, Surrey, UK, 2003. Certain of these groups are further described below.

Neonicotinoids (group (b1))

All Neonicotinoids act as agonists at the nicotinic acetylcholine receptor in the central nervous system of insects. This causes excitation of the nerves and eventual paralysis, which leads to death. Due to the mode of action of neonicotinoids, there is no cross-resistance to conventional insecticide classes such as carbamates, organophosphates, and pyrethroids. A review of the neonicotinoids is described in Pestology 2003, 27, pp 60-63; Annual Review of Entomology 2003, 48, pp 339-364; and references cited therein.

Neonicotinoids act as acute contact and stomach poisons, combine systemic properties with relatively low application rates, and are relatively nontoxic to vertebrates. There are many compounds in this group including the pyridylmethylamines such as acetamiprid, nitenpyram and thiacloprid; nitromethylenes such as nitenpyram and nithiazine; nitroguanidines such as clothianidin, dinotefuran, imidacloprid and thiamethoxam.

Cholinesterase Inhibitors (group (b2))

Two chemical classes of compounds are known to inhibit the cholinesterase; one is the organophosphates and the other is the carbamates. Organophosphates involve phosphorylation of the enzyme, while carbamates involve a reversible carbamylation of the enzyme. The organophosphates include acephate, azinphos-methyl, chlorethoxyfos, chlorprazophos, chlorpyrifos, chlorpyrifos-methyl, coumaphos, cyanofenphos, demeton-S-methyl, diazinon, dichlorvos, dimethoate, dioxabenzofos, disulfoton, dithicrofos, fenamiphos, fenitrothion, fonofos, isofenphos, isoxathion, malathion, methamidophos, methidathion, mipafox, monocrotophos, oxydemeton-methyl, parathion, parathion-methyl, phorate, phosalone, phosmet, phosphamidon, phoxim, pirimiphos-methyl, profenofos, pyraclofos, quinalphos-methyl, sulprofos, temephos, terbufos, tetrachlorvinphos, thicrofos, triazophos, and trichlofon. The carbamates include aldicarb, aldoxycarb, bendiocarb, benfuracarb, butocarboxim, carbaryl, carbofuran, carbosulfan, ethiofencarb, furathiocarb, methiocarb, methomyl (Lannate®), oxamyl (Vydate®), pirimicarb, propoxur, thiodicarb, triazamate and xylylcarb. A general review of the mode of action of insecticides is presented in Insecticides with Novel Modes of Action: Mechanism and Application, I. Ishaaya, et al (Ed.), Springer:Berlin, 1998.

Sodium Channel Modulators (group (b3))

Insecticidal compounds acting as sodium channel modulators disrupt the normal functioning of voltage-dependent sodium channels in insects, which causes rapid paralysis or knockdown following application of these insecticides. Reviews of insecticides targeting nerve membrane sodium channels are presented in, for example, Toxicology 2002,171, pp 3-59; Pest Management Sci. 2001, 57, pp 153-164; and references cited therein. The sodium channel modulators have been grouped together based on their chemical structural similarity into four classes, including pyrethroids, non-ester pyrethroids, oxidiazines and natural pyrethrins. The pyrethroids include allethrin, alpha-cypermethrin,

beta-cyfluthrin, beta-cypermethrin, bifenthrin, cyfluthrin, cyhalothrin, cypermethrin, deltamethrin, esfenvalerate, fenfluthrin, fenpropathrin, fenvalerate, flucythrinate, gamma-cyhalothrin, lambda-cyhalothrin, metofluthrin, permethrin, profluthrin, resmethrin, tau-fluvalinate, tefluthrin, tetramethrin, tralomethrin, transfluthrin and zeta-cypermethrin. The non-ester pyrethroids include etofenprox, flufenprox, halfenprox, protrifenbute and silafluofen. The oxadiazines include indoxacarb. The natural pyrethrins include cinerin-I, cinerin-II, jasmolin-I, jasmolin-II, pyrethrin-I and pyrethrin-II.

Other Insecticide Groups

Chitin synthesis inhibitors (b4) include bistrifluron, buprofezin, chlorfluazuron, cyromazine, diflubenzuron, flucycloxuron, flufenoxuron, hexaflumuron, lufenuron, novaluron, noviflumuron, penfluron, teflubenzuron and triflumuron.

Ecdysone agonists and antagonists (b5) include azadirachtin, chromafenozide, halofenozide, methoxyfenozide and tebufenozide.

Lipid biosynthesis inhibitors (b6) include spiromesifen and spiridiclofen.

Macrocyclic lactones (b7) include spinosad, abamectin, avermectin, doramectin, emamectin, eprinomectin, ivermectin, milbemectin, milbemycin oxime, moxidectin, nemadectin and selamectin.

GABA-regulated chloride channel blockers (b8) include acetoprole, endosulfan, ethiprole, fipronil and vaniliprole.

Juvenile hormone mimics (b9) include epofenonane, fenoxycarb, hydroprene, methoprene, pyriproxyfen and triprene.

Ryanodine receptor ligands other than the compound of Formula 1 (b10) include ryanodine and other related products of *Ryania speciosa* Vahl. (Flacourtiaceae), phthalic diamides (such as disclosed in JP-A-11-240857 and JP-A-2001-131141) including flubendiamide, and anthranilamides (such as disclosed in PCT publication WO 03/015519) including compounds of Formula i

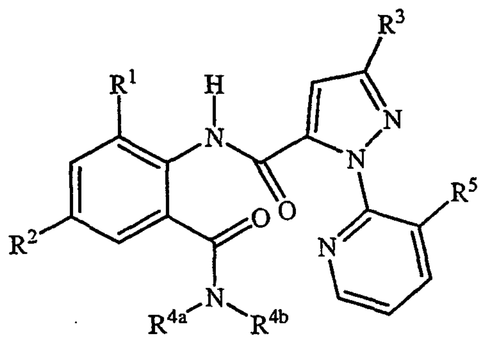

i

wherein

$R^1$ is $CH_3$, F, Cl or Br;
$R^2$ is F, Cl, Br, I or $CF_3$;
R3 is $CF_3$, Cl, Br or $OCH_2CF_3$;
$R^{4a}$ is $C_1$-$C_4$ alkyl;
$R^{4b}$ is H or $CH_3$; and
$R^5$ is Cl or Br;

or an agriculturally suitable salt thereof.

Of note are mixtures, compositions and methods wherein component (b) is selected from a compound of Table i.

Table i

| Compound | $R^1$ | $R^2$ | $R^3$ | $R^{4a}$ | $R^{4b}$ | $R^5$ | m.p. (°C) |
|---|---|---|---|---|---|---|---|
| 1 | Me | Br | $CF_3$ | *i*-Pr | H | Cl | 197-198 |
| 2 | Me | Cl | $CF_3$ | *i*-Pr | H | Cl | 195-196 |

(continued)

| Compound | $R^1$ | $R^2$ | $R^3$ | $R^{4a}$ | $R^{4b}$ | $R^5$ | m.p. (°C) |
|---|---|---|---|---|---|---|---|
| 3 | Me | Cl | $CF_3$ | *t*-Bu | H | Cl | 223-225 |
| 4 | Me | Cl | $CF_3$ | Me | H | Cl | 185-186 |
| 5 | Br | Br | $CF_3$ | *i*-Pr | H | Cl | 192-193 |
| 6 | Br | Br | $CF_3$ | *t*-Bu | H | Cl | 246-247 |
| 7 | Br | Br | $CF_3$ | Me | H | Cl | 162-163 |
| 8 | Br | Br | $CF_3$ | Et | H | Cl | 188-189 |
| 9 | Cl | Cl | $CF_3$ | *i*-Pr | H | Cl | 200-201 |
| 10 | Cl | Cl | $CF_3$ | *t*-Bu | H | Cl | 170-172 |
| 11 | Cl | Cl | $CF_3$ | Me | H | Cl | 155-157 |
| 12 | Cl | Cl | $CF_3$ | Et | H | Cl | 201-202 |
| 13 | Me | Br | $CF_3$ | *t*-Bu | H | Cl | 247-248 |
| 14 | Me | Br | $CF_3$ | Et | H | Cl | 192-193 |
| 15 | Me | F | $CF_3$ | *i*-Pr | H | Cl | 179-180 |
| 16 | Me | Br | Br | *i*-Pr | H | Cl | 185-187 |
| 17 | Me | $CF_3$ | $CF_3$ | *i*-Pr | H | Cl | 235-236 |
| 18 | Me | $CF_3$ | $CF_3$ | Et | H | Cl | 216-217 |
| 19 | Me | I | $CF_3$ | *i*-Pr | H | Cl | 188-189 |
| 20 | Me | Cl | Br | Me | H | Cl | 162-164 |
| 21 | Me | Cl | Br | *t*-Bu | H | Cl | 159-161 |
| 22 | Br | Br | Br | *i*-Pr | H | Cl | 162-163 |
| 23 | Br | Br | Br | Me | H | Cl | 166-168 |
| 24 | Br | Br | Br | *t*-Bu | H | Cl | 210-212 |
| 25 | Cl | Cl | Br | *i*-Pr | H | Cl | 188-190 |
| 26 | Cl | Cl | Br | *t*-Bu | H | Cl | 179-180 |
| 27 | Me | Cl | Br | *i*-Pr | H | Cl | 159-161 |
| 28 | Cl | Cl | $CF_3$ | *i*-Pr | H | Cl | 200-202 |
| 29 | Cl | Br | $CF_3$ | *t*-Bu | H | Cl | 143-145 |
| 30 | Cl | Br | $CF_3$ | Me | H | Cl | 171-173 |
| 31 | Me | Br | Br | Me | H | Cl | 147-149 |
| 32 | Me | Br | $CF_3$ | Me | H | Cl | 222-223 |
| 33 | Me | Cl | Cl | *i*-Pr | H | Cl | 173-175 |
| 34 | Me | Cl | Cl | Me | H | Cl | 225-226 |
| 35 | Me | Cl | Cl | *t*-Bu | H | Cl | 163-165 |
| 36 | Me | Br | Cl | *i*-Pr | H | Cl | 152-153 |
| 37 | Me | Br | Cl | Me | H | Cl | 140-141 |
| 38 | Me | Br | Br | *t*-Bu | H | Cl | 215-221 |
| 39 | Me | I | $CF_3$ | Me | H | Cl | 199-200 |
| 40 | Me | $CF_3$ | $CF_3$ | *t*-Bu | H | Cl | 148-149 |

(continued)

| Compound | $R^1$ | $R^2$ | $R^3$ | $R^{4a}$ | $R^{4b}$ | $R^5$ | m.p. (°C) |
|---|---|---|---|---|---|---|---|
| 41 | Me | Cl | Cl | Et | H | Cl | 199-200 |
| 42 | Br | Br | C1 | *i*-Pr | H | Cl | 197-199 |
| 43 | Br | Br | Cl | Me | H | Cl | 188-190 |
| 44 | Br | Br | Cl | *t*-Bu | H | Cl | 194-196 |
| 45 | Br | Br | Cl | Et | H | Cl | 192-194 |
| 46 | Cl | Cl | Cl | *i*-Pr | H | Cl | 197-199 |
| 47 | Cl | C1 | C1 | Me | H | Cl | 205-206 |
| 48 | Cl | Cl | Cl | *t*-Bu | H | Cl | 172-173 |
| 49 | Cl | Cl | Cl | Et | H | Cl | 206-208 |
| 50 | Me | F | Br | *t*-Bu | H | Cl | 124-125 |
| 51 | Br | Br | Br | Et | H | Cl | 196-197 |
| 52 | Cl | Cl | Br | Me | H | Cl | 245-246 |
| 53 | Cl | Cl | Br | Et | H | Cl | 214-215 |
| 54 | Me | Br | Br | Et | H | Cl | 194-196 |
| 55 | Me | I | Br | Me | H | Cl | 229-230 |
| 56 | Me | I | Br | *i*-Pr | H | Cl | 191-192 |
| 57 | Me | $CF_3$ | $CF_3$ | Me | H | Cl | 249-250 |
| 58 | Me | Cl | $CF_3$ | Et | H | Cl | 163-164 |
| 59 | Me | I | $CF_3$ | Et | H | Cl | 199-200 |
| 60 | Me | I | $CF_3$ | *t*-Bu | H | Cl | 242-243 |
| 61 | Me | Cl | Br | Et | H | Cl | 194-195 |
| 62 | Me | F | $CF_3$ | Me | H | Cl | 213-214 |
| 63 | Me | F | $CF_3$ | Et | H | Cl | 212-213 |
| 64 | Me | F | $CF_3$ | *t*-Bu | H | Cl | 142-143 |
| 65 | Me | F | Br | Me | H | Cl | 214-215 |
| 66 | Me | F | Br | Et | H | Cl | 205-205 |
| 67 | Me | F | Br | *i*-Pr | H | Cl | 206-208 |
| 68 | Me | F | Cl | *i*-Pr | H | Cl | 184-185 |
| 69 | Me | F | Cl | Me | H | Cl | 180-182 |
| 70 | Me | F | Cl | Et | H | Cl | 163-165 |
| 71 | Me | Br | Cl | Et | H | Cl | 192-194 |
| 72 | Me | I | Cl | Me | H | Cl | 233-234 |
| 73 | Me | I | Cl | Et | H | Cl | 196-197 |
| 74 | Me | I | Cl | *i*-Pr | H | Cl | 189-190 |
| 75 | Me | I | Cl | *t*-Bu | H | Cl | 228-229 |
| 76 | Me | Br | Cl | *t*-Bu | H | Cl | 224-225 |
| 77 | Br | Br | Cl | Me | Me | Cl | 153-155 |
| 78 | Me | Br | $CF_3$ | Me | Me | Cl | 207-208 |

(continued)

| Compound | $R^1$ | $R^2$ | $R^3$ | $R^{4a}$ | $R^{4b}$ | $R^5$ | m.p. (°C) |
|---|---|---|---|---|---|---|---|
| 79 | Cl | Cl | Cl | Me | Me | Cl | 231-232 |
| 80 | Br | Br | Br | Me | Me | Cl | 189-190 |
| 81 | Cl | Cl | Br | Me | Me | Cl | 216-218 |
| 82 | Cl | Cl | $CF_3$ | Me | Me | Cl | 225-227 |
| 83 | Me | Br | $OCH_2CF_3$ | *i*-Pr | H | Cl | 213-215 |
| 84 | Me | Br | $OCH_2CF_3$ | Me | H | Cl | 206-208 |
| 85 | Me | Cl | $OCH_2CF_3$ | *i*-Pr | H | Cl | 217-218 |
| 86 | Me | Cl | $OCH_2CF_3$ | Et | H | Cl | 205-207 |
| 87 | Me | Cl | $OCH_2CF_3$ | Me | H | Cl | 207-208 |
| 88 | Me | Br | $OCH_2CF_3$ | Et | H | Cl | 208-211 |
| 89 | Me | Br | $OCH_2CF_3$ | *t*-Bu | H | Cl | 213-216 |
| 90 | Br | Br | $CF_3$ | Me | Me | Cl | 228-229 |
| 91 | Cl | Br | $CF_3$ | Me | Me | Cl | 238-239 |
| 92 | Cl | C | $OCH_2CF_3$ | *i*-Pr | H | Cl | 232-235 |
| 93 | Cl | Cl | $OCH_2CF_3$ | Me | H | Cl | 192-195 |
| 94 | Cl | Cl | $OCH_2CF_3$ | Me | Me | Cl | 132-135 |
| 95 | Br | Br | $OCH_2CF_3$ | *i*-Pr | H | Cl | 225-227 |
| 96 | Br | Br | $OCH_2CF_3$ | Me | H | Cl | 206-208 |
| 97 | Br | Br | $OCH_2CF_3$ | Me | Me | Cl | 175-177 |
| 98 | Cl | Br | Br | Me | Me | Cl | 237-238 |
| 99 | Cl | Br | Cl | Me | H | Cl | 228-229 |
| 100 | Cl | Br | Cl | Me | Me | Cl | 236-237 |
| 101 | Cl | Br | Br | Me | H | Cl | 226-227 |
| 102 | Cl | F | $CF_3$ | Me | Me | Cl | 215-216 |
| 103 | Cl | F | $CF_3$ | Me | H | Cl | 219-220 |
| 104 | Br | F | Br | Me | Me | Cl | 235-236 |
| 105 | Br | F | Br | Me | H | Cl | 238-239 |
| 106 | Br | F | Br | *i*-Pr | H | Cl | 236-237 |
| 107 | Br | F | Cl | Me | Me | Cl | 246-247 |
| 108 | Br | F | Cl | Me | H | Cl | 233-234 |
| 109 | Br | F | Cl | *i*-Pr | H | Cl | 153-154 |
| 110 | Me | F | Cl | Me | Me | Cl | 242-243 |
| 111 | Cl | F | Br | Me | Me | Cl | 245-246 |
| 112 | Cl | F | Br | Me | H | Cl | 217-218 |
| 113 | Cl | F | Br | *i*-Pr | H | Cl | 168-169 |
| 114 | Cl | F | Cl | Me | Me | Cl | 239-240 |
| 115 | Cl | F | Cl | Me | H | Cl | 248-249 |
| 116 | Cl | F | Cl | *i*-Pr | H | Cl | 169-170 |

(continued)

| Compound | $R^1$ | $R^2$ | $R^3$ | $R^{4a}$ | $R^{4b}$ | $R^5$ | m.p. (°C) |
|---|---|---|---|---|---|---|---|
| 117 | Br | F | $CF_3$ | Me | Me | Cl | 191-192 |
| 118 | Br | F | $CF_3$ | Me | H | Cl | 228-229 |
| 119 | Br | F | $CF_3$ | *i*-Pr | H | Cl | 224-226 |
| 120 | Br | Cl | Br | Me | Me | Cl | 188-189 |
| 121 | Br | Cl | Br | Me | H | Cl | 248-249 |
| 122 | Br | Cl | Br | *i*-Pr | H | Cl | 252-253 |
| 123 | Br | Cl | Cl | Me | Me | Cl | 147-148 |
| 124 | Br | Cl | Cl | Me | H | Cl | 249-250 |
| 125 | Br | Cl | Cl | *i*-Pr | H | Cl | 239-240 |
| 126 | Br | Cl | $CF_3$ | Me | Me | Cl | 200-201 |
| 127 | Br | Cl | $CF_3$ | Me | H | Cl | 158-159 |
| 128 | Br | Cl | $CF_3$ | *i*-Pr | H | Cl | 250-250 |
| 129 | Me | Cl | Cl | Me | Me | Cl | 232-233 |
| 130 | Me | Cl | Br | Me | Me | Cl | 210-211 |
| 131 | F | F | Br | Me | H | Cl | 197-198 |
| 132 | F | F | Br | Me | Me | Cl | 218-222 |
| 133 | F | Cl | Br | Me | H | Cl | 203-204 |
| 134 | F | Cl | Br | Me | Me | Cl | 226-227 |
| 135 | F | Cl | Br | *i*-Pr | H | Cl | 207-208 |
| 136 | F | Cl | Cl | Me | H | Cl | 211-212 |
| 137 | F | Cl | Cl | Me | Me | Cl | 237-238 |
| 138 | F | F | Cl | Me | H | Cl | 159-160 |
| 139 | F | F | Cl | Me | Me | Cl | 225-226 |
| 140 | F | F | Cl | *i*-Pr | H | Cl | 201-202 |
| 141 | F | Br | Br | Me | H | Cl | 209 210 |
| 142 | F | Br | Br | Me | Me | Cl | 225-226 |
| 143 | F | Br | Br | *i*-Pr | H | Cl | 208-209 |
| 144 | F | Br | Cl | Me | H | Cl | 209-210 |
| 145 | F | Br | Cl | Me | Me | Cl | 244-245 |
| 146 | F | Br | Cl | *i*-Pr | H | Cl | 207-208 |
| 147 | F | Br | $OCH_2CF_3$ | Me | H | Cl | 210-211 |
| 148 | F | Br | $OCH_2CF_3$ | Me | Me | Cl | 204-206 |

Octopamine receptor ligands (b11) include amitraz and chlordimeform.

Mitochondrial electron transport inhibitors (b12) include ligands that bind to complex I, II, or III sites to inhibit cellular respiration. Such mitochondrial electron transport inhibitors include acequinocyl, chlorfenapyr, diafenthiuron, dicofol, fenazaquin, fenpyroximate, hydramethylnon, pyridaben, rotenone, tebufenpyrad and tolfenpyrad.

Nereistoxin analogs (b13) include bensultap, cartap, thiocyclam and thiosultap.

Biological agents (b19) include entomopathogenic bacteria such as *Bacillus thuringiensis* ssp. *aizawai*, *Bacillus thuringiensis* ssp. *kurstaki*, *Bacillus thuringiensis* encapsulated delta-endotoxins, entomopathogenic fungi such as *Beauvaria bassiana*, and entomopathogenic viruses such as granulosis virus (CpGV and CmGV) and nuclear polyhedrosis

virus (NPV, e.g., "Gemstar").

Other Insecticides, Acaricides, Nematicides

There are many known insecticides, acaricides and nematicides as disclosed in The Pesticide Manual 13th Ed. 2003 including those whose mode of action is not yet clearly defined and those which are a single compound class including pyridalyl (b14), flonicamid (b15), pymetrozine (b16), amidoflumet (S-1955), bifenazate, chlorofenmidine, diofenolan, fenothiocarb, flufenerim (UR-50701), metaldehyde, metaflumizone (BASF-320) (b18), and methoxychlor; bactericides such as streptomycin; acaricides such as chinomethionat, chlorobenzilate, cyhexatin, dienochlor, etoxazole, fenbutatin oxide, hexythiazox and propargite.

Of note are weight ratios of component (b) to the compound of Formula 1, an *N*-oxide, or a salt thereof in the mixtures, compositions and methods of the present invention which range typically from 500:1 to 1:250. One embodiment of these weight ratios is from 200:1 to 1:150, another from 150:1 to 1:50, and another from 50:1 to 1:10. Also of note are weight ratios of component (b) to the compound of Formula 1, an *N*-oxide, or a salt thereof in the mixtures, compositions and methods of the present invention are typically from 450:1 to 1:300. One embodiment of these weight ratios is from 150:1 to 1:100, another from 30:1 to 1:25, and another from 10:1 to 1:10. Of note are mixtures, compositions and methods wherein component (b) is a compound selected from (b1) neonicotinoids and the weight ratio of component (b) to the compound of Formula 1, an *N*-oxide, or a salt thereof is from 150:1 to 1:200, and another embodiment is 150:1 to 1:100.

Of further note are mixtures, compositions and methods of the present invention wherein component (b) is a compound selected from (b1) and the weight ratio of component (b) to the compound of Formula 1, an *N*-oxide, or a salt thereof, is from 50:1 to 1:50, and another embodiment is 30:1 to 1:25.

Of note are mixtures, compositions and methods wherein component (b) is a compound selected from (b10) anthranilamides and the weight ratio of component (b) to the compound of Formula 1, an *N*-oxide, or a salt thereof is from 100:1 to 1:120, and another embodiment is 20:1 to 1:10.

Of note are mixtures, compositions and methods wherein component (b) comprises at least one compound from each of two different groups selected from (b1), (b2), (b3), (b4), (b5), (b6), (b7), (b8), (b9), (b10), (b11), (b12), (b13), (b14), (b15), (b16), (b18) and (b19).

Tables 1A and 1B list specific combinations of the compound of Formula 1 with other invertebrate pest control agents illustrative of the mixtures, compositions and methods of the present invention. The first column of Tables 1A and 1B lists the group to which the component (b) belongs (e.g., "b1" in the first line). The second column of Tables 1A and 1B list specific invertebrate pest control agents (e.g., "Acetamiprid" in the first line). The third column of Tables 1A and 1B list embodiment(s) of ranges of weight ratios for rates at which component (b) can be applied relative to the compound of Formula 1, an *N*-oxide, or a salt thereof, (e.g., "150:1 to 1:200" of acetamiprid relative to the compound of Formula 1 by weight). The fourth and fifth columns respectively list additional embodiments of weight ratio ranges for application rates. Thus, for example, the first line of Tables 1A and 1B specifically discloses the combination of the compound of Formula 1 with acetamiprid, identifies that acetamiprid is a member of component (b) group (b1), and indicates that acetamiprid and the compound of Formula 1 can be applied in a weight ratio between 150:1 to 1:200, with another embodiment being 10:1 to 1:50 and a further embodiment being 5:1 to 1:25. The remaining lines of Tables 1A and 1B are to be construed similarly. Of further note Table 1B lists specific combinations of the compound of Formula 1 with other invertebrate pest control agents illustrative of the mixtures, compositions and methods of the present invention and includes additional embodiments of weight ratio ranges for application rates some of the specific mixtures showing notable synergistic effect.

Table 1A

| Component (b) | Invertebrate Pest Control Agent | Typical Weight Ratio | Preferred Weight Ratio | More Preferred Weight Ratio |
|---|---|---|---|---|
| b1 | Acetamiprid | 150:1 to 1:200 | 10:1 to 1:50 | 5:1 to 1:25 |
| b1 | Clothianidin | 100:1 to 1:400 | 10:1 to 1:25 | 5:1 to 1:5 |
| b1 | Dinotefuran | 150:1 to 1:200 | 10:1 to 1:50 | 5:1 to 1:25 |
| b1 | Nitenpyram | 150:1 to 1:200 | 10:1 to 1:50 | 5:1 to 1:25 |
| b1 | Nithiazine | 150:1 to 1:200 | 10:1 to 1:50 | 5:1 to 1:25 |
| b1 | Thiacloprid | 100:1 to 1:200 | 15:1 to 1:30 | 5:1 to 1:5 |
| b2 | Oxamyl | 100:1 to 1:50 | 50:1 to 1:10 | 5:1 to 1:1 |

(continued)

| Component (b) | Invertebrate Pest Control Agent | Typical Weight Ratio | Preferred Weight Ratio | More Preferred Weight Ratio |
|---|---|---|---|---|
| b2 | Thiodicarb | 200:1 to 1:100 | 150:1 to 1:25 | 50:1 to 1:5 |
| b2 | Triazamate | 200:1 to 1:100 | 150:1 to 1:25 | 50:1 to 1:5 |
| b3 | Deltamethrin | 50:1 to 1:10 | 25:1 to 1:5 | 10:1 to 1:1 |
| b3 | Esfenvalerate | 100:1 to 1:10 | 50:1 to 1:5 | 5:1 to 1:1 |
| b3 | Lambda-cyhalothrin | 50:1 to 1:10 | 25:1 to 1:5 | 5:1 to 1:1 |
| b3 | Pyrethrin | 100:1 to 1:10 | 50:1 to 1:5 | 5:1 to 1:1 |
| b4 | Buprofezin | 10:1 to 1:150 | 5:1 to 1:50 | 1:1 to 1:5 |
| b4 | Cyromazine | 10:1 to 1:150 | 5:1 to 1:50 | 1:1 to 1:5 |
| b4 | Hexaflumuron | 10:1 to 1:150 | 5:1 to 1:50 | 1:1 to 1:5 |
| b4 | Lufenuron | 10:1 to 1:150 | 5:1 to 1:50 | 1:1 to 1:5 |
| b4 | Novaluron | 10:1 to 1:150 | 5:1 to 1:50 | 1:1 to 1:5 |
| b5 | Azadirachtin | 100:1 to 1:120 | 20:1 to 1:10 | 1:1 to 1:5 |
| b5 | Methoxyfenozide | 50:1 to 1:250 | 25:1 to 1:150 | 1:1 to 1:25 |
| b5 | Tebufenozide | 50:1 to 1:250 | 25:1 to 1:150 | 1:1 to 1:25 |
| b6 | Spiridiclofen | 200:1 to 1:200 | 20:1 to 1:20 | 10:1 to 1:10 |
| b6 | Spiromesifen | 200:1 to 1:200 | 20:1 to 1:20 | 10:1 to 1:10 |
| b7 | Abamectin | 50:1 to 1:100 | 25:1 to 1:50 | 5:1 to 1:25 |
| b7 | Emamectin Benzoate | 50:1 to 1:10 | 25:1 to 1:5 | 5:1 to 1:1 |
| b7 | Spinosad | 50:1 to 1:10 | 25:1 to 1:5 | 5:1 to 1:1 |
| b8 | Fipronil | 50:1 to 1:100 | 25:1 to 1:50 | 5:1 to 1:25 |
| b9 | Fenoxycarb | 200:1 to 1:100 | 150:1 to 1:25 | 50:1 to 1:5 |
| b9 | Methoprene | 500:1 to 1:100 | 250:1 to 1:50 | 50:1 to 1:10 |
| b9 | Pyriproxyfen | 200:1 to 1:100 | 100:1 to 1:50 | 50:1 to 1:10 |
| b10 | Anthranilamides | 100:1 to 1:120 | 20:1 to 1:10 | 1:1 to 1:5 |
| b10 | Phthalic diamides | 100:1 to 1:120 | 20:1 to 1:10 | 1:1 to 1:5 |
| b10 | Ryanodine | 100:1 to 1:120 | 20:1 to 1:10 | 1:1 to 1:5 |
| b11 | Amitraz | 200:1 to 1:100 | 100:1 to 1:50 | 25:1 to 1:10 |
| b12 | Chlorfenapyr | 1200:1 to 1:200 | 400:1 to 1:100 | 200:1 to 1:50 |
| b12 | Hydramethylnon | 100:1 to 1:120 | 20:1 to 1:10 | 1:1 to 1:5 |
| b12 | Pyridaben | 200:1 to 1:100 | 100:1 to 1:50 | 50:1 to 1:10 |
| b13 | Cartap | 100:1 to 1:1000 | 50:1 to 1:500 | 5:1 to 1:50 |
| b14 | Pyridalyl | 200:1 to 1:100 | 100:1 to 1:50 | 50:1 to 1:10 |
| b15 | Flonicamid | 200:1 to 1:100 | 150:1 to 1:25 | 50:1 to 1:5 |
| b16 | Pymetrozine | 200:1 to 1:100 | 150:1 to 1:25 | 50:1 to 1:5 |
| b19 | *Bacillus thuringiensis* | 50:1 to 1:10 | 25:1 to 1:5 | 5:1 to 1:1 |
| b19 | *Beauvaria bassiana* | 50:1 to 1:10 | 25:1 to 1:5 | 5:1 to 1:1 |
| b19 | NPV (e.g., Gemstar) | 50:1 to 1:10 | 25:1 to 1:5 | 5:1 to 1:1 |

(continued)

| Component (b) | Invertebrate Pest Control Agent | Typical Weight Ratio | Preferred Weight Ratio | More Preferred Weight Ratio |
|---|---|---|---|---|
| b1 | Acetamiprid | 150:1 to 1:200 | 10:1 to 1:50 | 5:1 to 1:25 |
| b1 | Clothianidin | 100:1 to 1:400 | 50:1 to 1:100 | 20:1 to 1:25 |
| b1 | Dinotefuran | 150:1 to 1:200 | 20:1 to 1:50 | 10:1 to 1:25 |
| b1 | Imidacloprid | 100:1 to 1:400 | 20:1 to 1:50 | 5:1 to 1:25 |
| b1 | Nitenpyram | 150:1 to 1:200 | 10:1 to 1:50 | 10:1 to 1:25 |
| b1 | Nithiazine | 150:1 to 1:200 | 10:1 to 1:50 | 5:1 to 1:25 |
| b1 | Thiacloprid | 100:1 to 1:200 | 15:1 to 1:30 | 5:1 to 1:10 |
| b1 | Thiamethoxam | 100:1 to 1:100 | 30:1 to 1:30 | 15:1 to 1:15 |
| b2 | Chlorpyrifos | 500:1 to 1:200 | 250:1 to 1:100 | 50:1 to 1:10 |
| b2 | Methomyl | 500:1 to 1:100 | 250:1 to 1:25 | 50:1 to 1:10 |
| b2 | Oxamyl | 200:1 to 1:200 | 50:1 to 1:50 | 5:1 to 1:10 |
| b2 | Thiodicarb | 500:1 to 1:400 | 250:1 to 1:50 | 100:1 to 1:10 |
| b2 | Triazamate | 250:1 to 1:100 | 150:1 to 1:25 | 50:1 to 1:5 |
| b3 | Bifenthrin | 100:1 to 1:10 | 50:1 to 1:5 | 10:1 to 1:1 |
| b3 | Deltamethrin | 50:1 to 1:400 | 25:1 to 1:100 | 10:1 to 1:20 |
| b3 | Esfenvalerate | 100:1 to 1:400 | 50:1 to 1:100 | 5:1 to 1:50 |
| b3 | Indoxacarb | 200:1 to 1:50 | 100:1 to 1:25 | 20:1 to 1:5 |
| b3 | Lambda-cyhalothrin | 50:1 to 1:250 | 25:1 to 1:50 | 5:1 to 1:25 |
| b3 | Pyrethrin | 100:1 to 1:10 | 50:1 to 1:5 | 5:1 to 1:1 |
| b4 | Buprofezin | 500:1 to 1:50 | 150:1 to 1:25 | 50:1 to 1:10 |
| b4 | Cyromazine | 400:1 to 1:50 | 100:1 to 1:10 | 50:1 to 1:5 |
| b4 | Hexaflumuron | 300:1 to 1:50 | 100:1 to 1:10 | 50:1 to 1:5 |
| b4 | Lufenuron | 500:1 to 1:250 | 100:1 to 1:100 | 50:1 to 1:10 |
| b4 | Novaluron | 500:1 to 1:150 | 200:1 to 1:100 | 50:1 to 1:10 |
| b5 | Azadirachtin | 100:1 to 1:120 | 20:1 to 1:10 | 1:1 to 1:5 |
| b5 | Methoxyfenozide | 50:1 to 1:50 | 25:1 to 1:25 | 10:1 to 1:10 |
| b5 | Tebufenozide | 500:1 to 1:250 | 250:1 to 1:50 | 100:1 to 1:1 |
| b6 | Spiridiclofen | 200:1 to 1:200 | 20:1 to 1:20 | 10:1 to 1:10 |
| b6 | Spiromesifen | 200:1 to 1:200 | 20:1 to 1:20 | 10:1 to 1:10 |
| b7 | Abamectin | 50:1 to 1:50 | 25:1 to 1:25 | 5:1 to 1:5 |
| b7 | Emamectin Benzoate | 50:1 to 1:10 | 25:1 to 1:5 | 5:1 to 1:1 |
| b7 | Spinosad | 500:1 to 1:10 | 250:1 to 1:5 | 50:1 to 1:1 |
| b8 | Fipronil | 150:1 to 1:100 | 50:1 to 1:50 | 10:1 to 1:25 |
| b9 | Fenoxycarb | 500:1 to 1:100 | 100:1 to 1:25 | 50:1 to 1:10 |
| b9 | Methoprene | 500:1 to 1:100 | 250:1 to 1:50 | 50:1 to 1:10 |
| b9 | Pyriproxyfen | 500:1 to 1:100 | 100:1 to 1:50 | 50:1 to 1:10 |
| b10 | Anthranilamides | 100:1 to 1:120 | 20:1 to 1:10 | 1:1 to 1:5 |

(continued)

| Component (b) | Invertebrate Pest Control Agent | Typical Weight Ratio | Preferred Weight Ratio | More Preferred Weight Ratio |
|---|---|---|---|---|
| b10 | Phthalic diamides | 100:1 to 1:120 | 20:1 to 1:10 | 1:1 to 1:5 |
| b10 | Ryanodine | 100:1 to 1:120 | 20:1 to 1:10 | 1:1 to 1:5 |
| b11 | Amitraz | 200:1 to 1:100 | 100:1 to 1:50 | 50:1 to 1:10 |
| b12 | Chlorfenapyr | 300:1 to 1:200 | 150:1 to 1:100 | 50:1 to 1:50 |
| b12 | Hydramethylnon | 150:1 to 1:250 | 20:1 to 1:50 | 10:1 to 1:10 |
| b12 | Pyridaben | 200:1 to 1:100 | 100:1 to 1:50 | 50:1 to 1:25 |
| b13 | Cartap | 100:1 to 1:200 | 50:1 to 1:100 | 10:1 to 1:50 |
| b14 | Pyridalyl | 200:1 to 1:100 | 100:1 to 1:50 | 50:1 to 1:10 |
| b15 | Flonicamid | 200:1 to 1:100 | 150:1 to 1:50 | 50:1 to 1:25 |
| b16 | Pymetrozine | 200:1 to 1:100 | 100:1 to 1:50 | 50:1 to 1:25 |
| b18 | Metaflumizone | 200:1 to 1:200 | 100:1 to 1:100 | 20:1 to 1:20 |
| b19 | *Bacillus thuringiensis* | 50:1 to 1:10 | 25:1 to 1:5 | 5:1 to 1:1 |
| b19 | *Beauvaria bassiana* | 50:1 to 1:10 | 25:1 to 1:5 | 5:1 to 1:1 |
| b19 | NPV (e.g., Gemstar) | 50:1 to 1:10 | 25:1 to 1:5 | 5:1 to 1:1 |

Of note are mixtures and compositions of this invention that can also be mixed with one or more other biologically active compounds or agents including insecticides, fungicides, nematicides, bactericides, acaricides, growth regulators such as rooting stimulants, chemosterilants, semiochemicals, repellents, attractants, pheromones, feeding stimulants, other biologically active compounds or entomopathogenic bacteria, virus or fungi to form a multi-component pesticide giving an even broader spectrum of agricultural or nonagronomic utility. Thus the present invention also pertains to a composition comprising a biologically effective amount of a mixture of the invention which comprises a compound of Formula 1, an *N*-oxide, or a salt thereof and at least one component (b); and at least one additional component selected from the group consisting of a surfactant, a solid diluent and a liquid diluent, said composition optionally further comprising an effective amount of at least one additional biologically active compound or agent. Examples of such biologically active compounds or agents with which mixtures and compositions of this invention can be formulated are: insecticides such as amidoflumet (S-1955), bifenazate, chlorofenmidine, diofenolan, fenothiocarb, flufenerim (UR-50701), metaldehyde, methoxychlor; fungicides such as acibenzolar-S-methyl, azoxystrobin, benalazy-M, benthiayalicarb, benomyl, blasticidin-S, Bordeaux mixture (tribasic copper sulfate), boscalid, bromuconazole, buthiobate, carpropamid, captafol, captan, carbendazim, chloroneb, chlorothalonil, clotrimazole, copper oxychloride, copper salts, cymoxanil, cyazofamid, cyflufenamid, cyproconazole, cyprodinil, diclocymet, diclomezine, dicloran, difenoconazole, dimethomorph, dimoxystrobin, diniconazole, diniconazole-M, dodine, edifenphos, epoxiconazole, ethaboxam, famoxadone, fenarimol, fenbuconazole, fenhexamid, fenoxanil, fenpiclonil, fenpropidin, fenpropimorph, fentin acetate, fentin hydroxide, fluazinam, fludioxonil, flumorph, fluoxastrobin, fluquinconazole, flusilazole, flutolanil, flutriafol, folpet, fosetyl-aluminum, furalaxyl, furametapyr, guazatine, hexaconazole, hymexazol, imazalil, imibenconazole, iminoctadine, ipconazole, iprobenfos, iprodione, iprovalicarb, isoconazole, isoprothiolane, kasugamycin, kresoxim-methyl, mancozeb, maneb, mefenoxam, mepanapyrim, mepronil, metalaxyl, metconazole, metominostrobin/fenominostrobin, metrafenone, miconazole, myclobutanil, neoasozin (ferric methanearsonate), nuarimol, oryzastrobin, oxadixyl, oxpoconazole, penconazole, pencycuron, picobenzamid, picoxystrobin, probenazole, prochloraz, propamocarb, propiconazole, proquinazid, prothioconazole, pyraclostrobin, pyrimethanil, pyrifenox, pyroquilon, quinoxyfen, silthiofam, simeconazole, sipconazole, spiroxamine, sulfur, tebuconazole, tetraconazole, tiadinil, thiabendazole, thifluzamide, thiophanate-methyl, thiram, tolylfluanid, triadimefon, triadimenol, triarimol, tricyclazole, trifloxystrobin, triflumizole, triforine, triticonazole, uniconazole, validamycin, vinclozolin and zoxamide. Compositions of this invention can be applied to plants genetically transformed to express proteins toxic to invertebrate pests (such as *Bacillus thuringiensis* toxin). The effect of the exogenously applied invertebrate pest control compounds of this invention may be synergistic with the expressed toxin proteins. The weight ratios of these various mixing partners to the compound of Formula 1 of this invention typically are between 500:1 and 1:250, with one embodiment being between 200:1 and 1:150, another embodiment being between 150:1 and 1:50, another embodiment being between 150:1 and 1:25, another embodiment being between 50:1 and 1:10, and another embodiment being between

10:1 and 1:5.

The mixtures and compositions of this invention are useful to control invertebrate pests. In certain instances, combinations with other invertebrate pest control active ingredients having a similar spectrum of control but a different mode of action will be particularly advantageous for resistance management.

Formulation/Utility

Mixtures of this invention can generally be used as a formulation or composition with a carrier suitable for agronomic and nonagronomic uses comprising at least one of a liquid diluent, a solid diluent or a surfactant. The formulation, mixture or composition ingredients can be selected to be consistent with the physical properties of the active ingredients, mode of application and environmental factors such as soil type, moisture and temperature. Useful formulations include liquids such as solutions (including emulsifiable concentrates), suspensions, emulsions (including microemulsions and/or suspoemulsions) and the like which optionally can be thickened into gels. Useful formulations further include solids such as dusts, powders, granules, pellets, tablets, films (including seed treatment), and the like which can be water-dispersible ("wettable") or water-soluble. Active ingredient can be (micro)encapsulated and further formed into a suspension or solid formulation; alternatively the entire formulation of active ingredient can be encapsulated (or "overcoated"). Encapsulation can control or delay release of the active ingredient. Compositions of the invention can also optionally comprise plant nutrients, e.g. a fertilizer composition comprising at least one plant nutrient selected from nitrogen, phosphorus, potassium, sulfur, calcium, magnesium, iron, copper, boron, manganese, zinc, and molybdenum. Of note are compositions comprising at least one fertilizer composition comprising at least one plant nutrient selected from nitrogen, phosphorus, potassium, sulfur, calcium and magnesium. Compositions of the present invention which further comprise at least one plant nutrient can be in the form of liquids or solids. Of note are solid formulations in the form of granules, small sticks or tablets. Solid formulations comprising a fertilizer composition can be prepared by mixing the mixture or composition of the present invention with the fertilizer composition together with formulating ingredients and then preparing the formulation by methods such as granulation or extrusion. Alternatively solid formulations can be prepared by spraying a solution or suspension of a mixture or composition of the present invention in a volatile solvent onto a previously prepared fertilizer composition in the form of dimensionally stable mixtures, e.g., granules, small sticks or tablets, and then evaporating the solvent. Sprayable formulations can be extended in suitable media and used at spray volumes from about one to several hundred liters per hectare. High-strength compositions can be primarily used as intermediates for further formulation.

The formulations will typically contain effective amounts of active ingredient, diluent and surfactant within the following approximate ranges which add up to 100 percent by weight.

| | Weight Percent | | |
|---|---|---|---|
| | Active Ingredient | Diluent | Surfactant |
| Water-Dispersible and Water-soluble Granules, Tablets and Powders. | 0.001-90 | 0-99.999 | 0-15 |
| Suspensions, Emulsions, Solutions (including Emulsifiable Concentrates) | 1-50 | 40-99 | 0-50 |
| Dusts Granules and Pellets | 1-25 0.001-99 | 70-99 5-99.999 | 0-5 0-15 |
| High Strength Compositions | 90-99 | 0-10 | 0-2 |

Typical solid diluents are described in Watkins, et al., Handbook of Insecticide Dust Diluents and Carriers, 2nd Ed., Dorland Books, Caldwell, New Jersey. Typical liquid diluents are described in Marsden, Solvents Guide, 2nd Ed., Interscience, New York, 1950. McCutcheon's Detergents and Emulsifiers Annual, Allured Publ. Corp., Ridgewood, New Jersey, as well as Sisely and Wood, Encyclopedia of Surface Active Agents, Chemical Publ. Co., Inc., New York, 1964, list surfactants and recommended uses. All formulations can contain minor amounts of additives to reduce foam, caking, corrosion, microbiological growth and the like, or thickeners to increase viscosity.

Surfactants include, for example, polyethoxylated alcohols, polyethoxylated alkylphenols, polyethoxylated sorbitan fatty acid esters, dialkyl sulfosuccinates, alkyl sulfates, alkylbenzene sulfonates, organosilicones, *N*,*N*-dialkyltaurates, lignin sulfonates, naphthalene sulfonate formaldehyde condensates, polycarboxylates, glycerol esters, polyoxyethylene/polyoxypropylene block copolymers, and alkylpolyglycosides where the number of glucose units, referred to as degree of polymerization (D.P.), can range from 1 to 3 and the alkyl units can range from $C_6$-$C_{14}$ (see Pure and Applied Chemistry 72, 1255-1264). Solid diluents include, for example, clays such as bentonite, montmorillonite, attapulgite and kaolin, starch, sugar, silica, talc, diatomaceous earth, urea, calcium carbonate, sodium carbonate and bicarbonate, and sodium sulfate. Liquid diluents include, for example, water, *N*,*N*-dimethylformamide, dimethyl sulfoxide,

*N*-alkylpyrrolidone, ethylene glycol, polypropylene glycol, paraffins, alkylbenzenes, alkylnaphthalenes, glycerine, triacetine, oils of olive, castor, linseed, tung, sesame, corn, peanut, cotton-seed, soybean, rape-seed and coconut, fatty acid esters, ketones such as cyclohexanone, 2-heptanone, isophorone and 4-hydroxy-4-methyl-2-pentanone, acetates and alcohols such as methanol, cyclohexanol, decanol and tetrahydrofurfuryl alcohol.

Useful formulations of this invention can also contain materials known as formulation aids including antifoams, film formers and dyes and are well known to those skilled in the art.

Antifoams can include water dispersible liquids comprising polyorganosiloxanes such as Rhodorsil® 416. The film formers can include polyvinyl acetates, polyvinyl acetate copolymers, polyvinylpyrrolidone-vinyl acetate copolymer, polyvinyl alcohols, polyvinyl alcohol copolymers and waxes. Dyes can include water dispersible liquid colorant compositions such as Pro-lzed® Colorant Red. One skilled in the art will appreciate that this is a non-exhaustive list of formulation aids. Suitable examples of formulation aids include those listed herein and those listed in McCutcheon's 2001, Volume 2: Functional Materials, published by MC Publishing Company and PCT Publication WO 03/024222.

Solutions, including emulsifiable concentrates, can be prepared by simply mixing the ingredients. Dusts and powders can be prepared by blending and, usually, grinding as in a hammer mill or fluid-energy mill. Suspensions are usually prepared by wet-milling; see, for example, U.S. 3,060,084. Granules and pellets can be prepared by spraying the active material upon preformed granular carriers or by agglomeration techniques. See Browning, "Agglomeration", Chemical Engineering, December 4, 1967, pp 147-48, Perry's Chemical Engineer's Handbook, 4th Ed., McGraw-Hill, New York, 1963, pages 8-57 and following, and WO 91/13546. Pellets can be prepared as described in U.S. 4,172,714. Water-dispersible and water-soluble granules can be prepared as taught in U.S. 4,144,050, U.S. 3,920,442 and DE 3,246,493. Tablets can be prepared as taught in U.S. 5,180,587, U.S. 5,232,701 and U.S. 5,208,030. Films can be prepared as taught in GB 2,095,558 and U.S. 3,299,566.

For further information regarding the art of formulation, see U.S. 3,235,361, Col. 6, line 16 through Col. 7, line 19 and Examples 10-41; U.S. 3,309,192, Col. 5, line 43 through Col. 7, line 62 and Examples 8, 12, 15, 39, 41, 52, 53, 58, 132, 138-140, 162-164, 166, 167 and 169-182; U.S. 2,891,855, Col. 3, line 66 through Col. 5, line 17 and Examples 1-4; Klingman, Weed Control as a Science, John Wiley and Sons, Inc., New York, 1961, pp 81-96; and Hance et al., Weed Control Handbook, 8th Ed., Blackwell Scientific Publications, Oxford, 1989; Developments in formulation technology, PJB Publications, Richmond, UK, 2000.

In the following Examples, all percentages are by weight and all formulations are prepared in conventional ways. "Active ingredients" refers to the aggregate of invertebrate pest control agents consisting of agents selected from the group (b) in combination with the compound of Formula 1. Without further elaboration, it is believed that one skilled in the art using the preceding description can utilize the present invention to its fullest extent. The following Examples are, therefore, to be constructed as merely illustrative, and not limiting of the disclosure in any way whatsoever. Percentages are by weight except where otherwise indicated.

Example A

| Wettable Powder | |
|---|---|
| active ingredients | 65.0% |
| dodecylphenol polyethylene glycol ether | 2.0% |
| sodium ligninsulfonate | 4.0% |
| sodium silicoaluminate | 6.0% |
| montmorillonite (calcined) | 23.0% |

Example B

| Granule | |
|---|---|
| active ingredients | 10.0% |
| attapulgite granules (low volatile matter, 0.71/0.30 mm; U.S.S. No. 25-50 sieves) | 90.0% |

Example C

| Extruded Pellet | |
|---|---|
| active ingredients | 25.0% |
| anhydrous sodium sulfate | 10.0% |
| crude calcium ligninsulfonate | 5.0% |
| sodium alkylnaphthalenesulfonate | 1.0% |
| calcium/magnesium bentonite | 59.0% |

Example D

| Emulsifiable Concentrate | |
|---|---|
| active ingredients | 20.0% |
| blend of oil soluble sulfonates and polyoxyethylene ethers | 10.0% |
| isophorone | 70.0% |

Example E

| Microemulsion | |
|---|---|
| active ingredients | 5.0% |
| polyvinylpyrrolidone-vinyl acetate copolymer | 30.0% |
| alkylpolyglycoside | 30.0% |
| glyceryl monooleate | 15.0% |
| water | 20.0% |

Example F

| Seed Treatment | |
|---|---|
| active ingredients | 20.00% |
| polyvinylpyrrolidone-vinyl acetate copolymer | 5.00% |
| montan acid wax | 5.00% |
| calcium ligninsulfonate | 1.00% |
| polyoxyethylene/polyoxypropylene block copolymers | 1.00% |
| stearyl alcohol (POE 20) | 2.00% |
| polyorganosilane | 0.20% |
| colorant red dye | 0.05% |
| water | 65.75% |

Example G

| Fertilizer Stick | |
|---|---|
| active ingredients | 2.50% |
| pyrrolidone-styrene copolymer | 4.80% |
| tristyrylphenyl 16-ethoxylate | 2.30% |
| talc | 0.80% |
| corn starch | 5.00% |
| Nitrophoska® Permanent 15-9-15 slow-release fertilizer (BASF) | 36.00% |
| kaolin | 38.00% |
| water | 10.60% |

Compositions and mixtures of this invention are characterized by favorable metabolic and/or soil residual patterns and exhibit activity controlling a spectrum of agronomic and non-agronomic invertebrate pests. (In the context of this disclosure "invertebrate pest control" means inhibition of invertebrate pest development (including mortality) that causes significant reduction in feeding or other injury or damage caused by the pest; related expressions are defined analogously.) As referred to in this disclosure, the term "invertebrate pest" includes arthropods, gastropods and nematodes of economic importance as pests. The term "arthropod" includes insects, mites, spiders, scorpions, centipedes, millipedes, pill bugs and symphylans. The term "gastropod" includes snails, slugs and other Stylommatophora. The term "nematode" includes all of the helminths, such as: roundworms, heartworms, and phytophagous nematodes (Nematoda), flukes (Tematoda), Acanthocephala, and tapeworms (Cestoda). Those skilled in the art will recognize that not all compositions or mixtures are equally effective against all pests. Compositions and mixtures of this invention display activity against economically important agronomic and nonagronomic pests. The term "agronomic" refers to the production of field crops such as for food and fiber and includes the growth of corn, soybeans and other legumes, rice, cereal (e.g., wheat, oats, barley, rye, rice, maize), leafy vegetables (e.g., lettuce, cabbage, and other cole crops), fruiting vegetables (e.g., tomatoes, pepper, eggplant, crucifers and cucurbits), potatoes, sweet potatoes, grapes, cotton, tree fruits (e.g., pome, stone and citrus), small fruit (berries, cherries) and other specialty crops (e.g., canola, sunflower, olives). The term "nonagronomic" refers to other horticultural crops (e.g., greenhouse, nursery or ornamental plants not grown in a field), residential and commercial structures in urban and industrial settings, turf (commercial, golf, residential, recreational, etc.), wood products, stored product agro-forestry and vegetation management public health (human) and animal health (pets, livestock, poultry, non-domesticated animals such as nature animals) applications. For reasons of invertebrate pest control spectrum and economic importance, protection of agronomic crops from damage or injury caused by invertebrate pests by controlling invertebrate pests are embodiments of the invention.

Agronomic or nonagronomic pests include larvae of the order Lepidoptera, such as armyworms, cutworms, loopers, and heliothines in the family Noctuidae (e.g., fall armyworm (*Spodoptera fugiperda* J. E. Smith), beet armyworm (*Spodoptera exigua* Hübner), black cutworm (*Agrotis ipsilon* Hufnagel), cabbage looper (*Trichoplusia ni* Hübner), tobacco budworm (*Heliothis virescens* Fabricius)); borers, casebearers, webworms, coneworms, cabbageworms and skeletonizers from the family Pyralidae (e.g., European corn borer (*Ostrinia nubilalis* Hübner), navel orangeworm (*Amyelois transitella* Walker), corn root webworm (*Crambus caliginosellus* Clemens), sod webworms (Pyralidae: *Crambinae*) such as sod webworm (*Herpetogramma licarsisalis* Walker)); leafrollers, budworms, seed worms, and fruit worms in the family Tortricidae (e.g., codling moth (*Cydia pomonella* Linnaeus), grape berry moth (*Endopiza viteana* Clemens), oriental fruit moth (*Grapholita molesta* Busck)); and many other economically important lepidoptera (e.g., diamondback moth (*Plutella xylostella* Linnaeus), pink bollworm (*Pectinophora gossypiella* Saunders), gypsy moth (*Lymantria dispar* Linnaeus)); nymphs and adults of the order Blattodea including cockroaches from the families Blattellidae and Blattidae (e.g., oriental cockroach (*Blatta orientalis* Linnaeus), Asian cockroach (*Blatella asahinai* Mizukubo), German cockroach (*Blattella germanica* Linnaeus), brownbanded cockroach (*Supella longipalpa* Fabricius), American cockroach (*Periplaneta americana* Linnaeus), brown cockroach (*Periplaneta brunnea* Burmeister), Madeira cockroach (*Leucophaea maderae* Fabricius), smoky brown cockroach (*Periplaneta fuliginosa* Service), Australian Cockroach (*Periplaneta australasiae* Fabr.), lobster cockroach (*Nauphoeta cinerea* Olivier) and smooth cockroach (*Symploce pallens* Stephens)); foliar feeding larvae and adults of the order Coleoptera including weevils from the families Anthribidae, Bruchidae, and Curculionidae (e.g., boll weevil (*Anthonomus grandis* Boheman), rice water weevil (*Lissorhoptrus oryzophilus* Kuschel), granary weevil (*Sitophilus granarius* Linnaeus), rice weevil (*Sitophilus oryzae* Linnaeus), annual bluegrass weevil (*Listronotus maculicollis Dietz*), bluegrass billbug (*Sphenophorus parvulus* Gyllenhal), hunting billbug (*Sphenophorus venatus vestitus*), Denver billbug (*Sphenophorus cicatristriatus* Fahraeus)); flea beetles, cucumber beetles, rootworms, leaf beetles, potato beetles, and leafminers in the family Chrysomelidae (e.g., Colorado potato beetle (*Leptinotarsa decemlineata* Say), western corn rootworm (*Diabrotica virgifera virgifera* LeConte)); chafers and other beetles from the family Scaribaeidae (e.g., Japanese beetle (*Popillia japonica* Newman), oriental beetle (*Anomala orientalis* Waterhouse), northern masked chafer (*Cyclocephala borealis* Arrow), southern masked chafer (*Cyclocephala immaculata* Olivier), black turfgrass ataenius (*Ataenius spretulus* Haldeman), green June beetle (*Cotinis nitida* Linnaeus), Asiatic garden beetle (*Maladera castanea* Arrow), May/June beetles (*Phyllophaga* spp.) and European chafer (*Rhizotrogus majalis* Razoumowsky)); carpet beetles from the family Dermestidae; wireworms from the family Elateridae; bark beetles from the family Scolytidae and flour beetles from the family Tenebrionidae. In addition, agronomic and nonagronomic pests include: adults and larvae of the order Dermaptera including earwigs from the family Forficulidae (e.g., European earwig (*Forficula auricularia* Linnaeus), black earwig (*Chelisoches morio* Fabricius)); adults and nymphs of the orders Hemiptera and Homoptera such as, plant bugs from the family Miridae, cicadas from the family Cicadidae, leafhoppers (e.g. *Empoasca* spp.) from the family Cicadellidae, planthoppers from the families Fulgoroidae and Delphacidae, treehoppers from the family Membracidae, psyllids from the family Psyllidae, whiteflies from the family Aleyrodidae, aphids from the family Aphididae, phylloxera from the family Phylloxeridae, mealybugs from the family Pseudococcidae, scales from the families Coccidae, Diaspididae and Margarodidae, lace bugs from the family Tingidae, stink bugs from the family Pentatomidae, cinch bugs (e.g., hairy chinch bug (*Blissus leucopterus hirtus* Montandon) and southern chinch bug (*Blissus insularis* Barber)) and other seed bugs from the family Lygaeidae, spittlebugs from the family Cercopidae squash bugs from the family Coreidae, and red bugs and cotton stainers from the family Pyrrhocoridae. Also included are adults and larvae of the order Acari (mites) such as spider mites and red mites in the family Tetranychidae (e.g., European red mite (*Panonychus ulmi* Koch), two spotted spider mite (*Tetranychus urticae* Koch), McDaniel mite (*Tetranychus mcdanieli* McGregor)); flat mites in the family Tenuipalpidae (e.g., citrus flat mite (*Brevipalpus lewisi* McGregor)); rust. and bud mites in the family Eriophyidae and other foliar feeding mites and mites important in human and animal health, i.e. dust mites in the family Epidermoptidae, follicle mites in the family Demodicidae, grain mites in the family Glycyphagidae, ticks in the order Ixodidae (e.g., deer tick (*Ixodes scapularis* Say), Australian paralysis tick (*Ixodes holocyclus* Neumann), American dog tick (*Dermacentor variabilis* Say), lone star tick (*Amblyomma americanum* Linnaeus)) and scab and itch mites in the families Psoroptidae, Pyemotidae, and Sarcoptidae; adults and immatures of the order Orthoptera including grasshoppers, locusts and crickets (e.g., migratory grasshoppers (e.g., *Melanoplus sanguinipes Fabricius*, *M. differentialis* Thomas), American grasshoppers (e.g., *Schistocerca americana* Drury), desert locust (*Schistocerca gregaria* Forskal), migratory locust (*Locusta migratoria* Linnaeus), bush locust (*Zonocerus* spp.), house cricket (*Acheta domesticus* Linnaeus), mole crickets (e.g., tawny mole cricket (*Scapteriscus vicinus* Scudder) and southern mole cricket (*Scapteriscus borellii* Giglio-Tos)); adults and immatures of the order Diptera including leafminers, midges, fruit flies (Tephritidae), frit flies (e.g., *Oscinella frit* Linnaeus), soil maggots, house flies (e.g., *Musca domestica* Linnaeus), lesser house flies (e.g., *Fannia canicularis* Linnaeus, *F. femoralis* Stein), stable flies (e.g., *Stomoxys calcitrans* Linnaeus), face flies, horn flies, blow flies (e.g., *Chrysomya* spp., *Phormia* spp.), and other muscoid fly pests, horse flies (e.g., *Tabanus* spp.), bot flies (e.g., *Gastrophilus* spp., *Oestrus* spp.), cattle grubs (e.g., *Hypoderma* spp.), deer flies (e.g., *Chrysops* spp.), keds (e.g., *Melophagus ovinus* Linnaeus) and other Brachycera, mosquitoes (e.g., *Aedes* spp., *Anopheles* spp., *Culex* spp.), black flies (e.g., *Prosimulium* spp., *Simulium* spp.), biting midges, sand flies, sciarids, and other Nematocera; adults and immatures of the order Thysanoptera including onion thrips (*Thrips tabaci* Lindeman), flower thrips (*Frankliniella* spp.), and other foliar feeding thrips; insect pests of the order Hymenoptera including ants (e.g., red carpenter ant (*Camponotus ferrugineus* Fabricius), black carpenter ant (*Camponotus pennsylvanicus* De Geer), Pharaoh ant (*Monomorium pharaonis* Linnaeus), little fire ant (*Wasmannia auropunctata* Roger), fire ant (*Solenopsis geminata* Fabricius), red imported fire ant (*Solenopsis invicta* Buren), Argentine ant (*Iridomyrmex humilis* Mayr), crazy ant (*Paratrechina longicornis* Latreille), pavement ant (*Tetramorium caespitum* Linnaeus), cornfield ant (*Lasius alienus* Förster), odorous house ant (*Tapinoma sessile* Say), bees (including carpenter bees), hornets, yellow jackets, wasps, and sawflies (*Neodiprion* spp.; *Cephus* spp.); insect pests of the Family Formicidae including the Florida carpenter ant (*Camponotus floridanus* Buckley), white-footed ant (*Technomyrmex albipes* fr. Smith), big headed ants (*Pheidole* sp.) and ghost ant (*Tapinoma melanocephalum* Fabricius); insect pests of the order Isoptera including termites in the Termitidae (ex. *Macrotemies* sp.), Kalotermitidae (ex. *Cryptotermes* sp.), and Rhinotermitidae (ex. *Reticulitennes* sp., *Coptotermes* sp.) families, the eastern subterranean termite (*Reticulitermes flavipes* Kollar), western subterranean termite (*Reticulitermes hesperus* Banks), Formosan subterranean termite (*Coptotermes formosanus* Shiraki), West Indian drywood termite (*Incisitermes immigrans* Snyder), powder post termite (*Cryptotermes brevis* Walker), drywood termite (*Incisitermes snyderi* Light), southeastern subterranean termite (*Reticulitermes virginicus* Banks), western drywood termite (*Incisitermes minor* Hagen), arboreal termites such as *Nasutitermes* sp. and other termites of economic importance; insect pests of the order Thysanura such as silverfish (*Lepisma saccharina* Linnaeus) and firebrat (*Thermobia domestica* Packard); insect pests of the order Mallophaga and including the head louse (*Pediculus humanus capitis* De Geer), body louse (*Pediculus humanus* Linnaeus), chicken body louse (*Menacanthus stramineus* Nitszch), dog biting louse (*Trichodectes canis* De Geer), fluff louse (*Goniocotes gallinae* De Geer), sheep body louse (*Bovicola ovis* Schrank), short-nosed cattle louse (*Haematopinus eurysternus* Nitzsch), long-nosed cattle louse (*Linognathus vituli* Linnaeus) and other sucking and chewing parasitic lice that attack man and animals; insect pests of the order Siphonoptera including the oriental rat flea (*Xenopsylla cheopis* Rothschild), cat flea (*Ctenocephalides felis* Bouche), dog flea (*Ctenocephalides canis* Curtis), hen flea (*Ceratophyllus gallinae* Schrank), sticktight flea (*Echidnophaga gallinacea* Westwood), human flea (*Pulex irritans* Linnaeus) and other fleas afflicting mammals and birds. Additional arthropod pests covered include: spiders in the order Araneae such as the brown recluse

spider (*Loxosceles reclusa* Gertsch & Mulaik) and the black widow spider (*Latrodectus mactans* Fabricius), and centipedes in the order Scutigeromorpha such as the house centipede (*Scutigera coleoptrata* Linnaeus). Mixtures and compositions of the present invention also have activity on members of the Classes Nematoda, Cestoda, Trematoda, and Acanthocephala including economically important members of the orders Strongylida, Ascaridida, Oxyurida, Rhabditida, Spirurida, and Enoplida such as but not limited to economically important agricultural pests (i.e. root knot nematodes in the genus *Meloidogyne,* lesion nematodes in the genus *Pratylenchus,* stubby root nematodes in the genus *Trichodorus,* etc.) and animal and human health pests (i.e. all economically important flukes, tapeworms, and roundworms, such as *Strongylus vulgaris* in horses, *Toxocara canis* in dogs, *Haemonchus contortus* in sheep, *Dirofilaria immitis* Leidy in dogs, *Anoplocephala perfoliata* in horses, *Fasciola hepatica* Linnaeus in ruminants, etc.).

Of note is use of a mixture of this invention for controlling silverleaf whitefly (*Bemisia argentifolii*), wherein one embodiment comprises using a mixture wherein component (b) is a (b1) compound, e.g., acetamiprid, imidacloprid, thiacloprid or thiamethoxam; a (b2) compound, e.g., chlorpyrifos, oxamyl or thiodicarb; a (b3) compound, e.g., deltamethrin or esfenvalerate; a (b4) compound, e.g., buprofezin, cyromazine, hexaflumuron or novaluron; a (b5) compound, e.g., tebufenozide; a (b8) compound, e.g., fipronil; a (b9) compound, e.g., fenoxycarb or methoprene; a (b11) compound, e.g., amitraz; a (b12) compound, e.g., chlorfenapyr or hydramethylnon; a (b13) compound, cartap; a (b14) compound, pyridalyl; a (b15) compound, flonicamid; or a (b16) compound, pymetrozine. Of further note is another embodiment for controlling silverleaf whitefly wherein component (b) comprises at least one invertebrate pest control agent (or salt thereof) from each of two different groups selected from (b1), (b2), (b3), (b4), (b5), (b6), (b7), (b8), (b9), (b10), (b11), (b12), (b13), (b14), (b15), (b16), (b18) and (b19).

Of note is use of a mixture of this invention for controlling western flower thrip (*Frankliniella occidentalis*), wherein one embodiment comprises using a mixture wherein component (b) is a (b1) compound, e.g., dinotefuran, imidacloprid or thiamethoxam; a (b2) compound, e.g., chlorpyrifos or methomyl; a (b3) compound, e.g., esfenvalerate; a (b4) compound, e.g., lufenuron or novaluron; a (b11) compound, e.g., amitraz; a (b15) compound or flonicamid. Of further note is another embodiment for controlling western flower thrip wherein component (b) comprises at least one invertebrate pest control agent (or salt thereof) from each of two different groups selected from (b1), (b2), (b3), (b4), (b5), (b6), (b7), (b8), (b9), (b10), (b11), (b12), (b13), (b14), (b15), (b16), (b18) and (b19).

Of note is use of a mixture of this invention for controlling potato leafhopper (*Empoasca fabae*), wherein one embodiment comprises using a mixture wherein component (b) is a (b1) compound, e.g., acetamiprid, dinotefuran, imidacloprid, nitenpyram or thiacloprid; a (b2) compound, e.g., chlorpyrifos, methomyl or thiodicarb; a (b3) compound, e.g., deltamethrin or lambda-cyhalothrin; a (b4) compound, e.g., cyromazine, lufenuron or novaluron; a (b7) compound, e.g., spinosad; a (b8) compound, e.g., fipronil; a (b9) compound, e.g., fenoxycarb, methoprene or pyriproxyfen; a (b11) compound, e.g., amitraz; a (b12) compound, e.g., hydramethylnon or pyridaben; a (b14) compound, pyridalyl or a (b16) compound, pymetrozine. Of further note is another embodiment for controlling potato leafhopper wherein component (b) comprises at least one invertebrate pest control agent (or salt thereof) from each of two different groups selected from (b1), (b2), (b3), (b4), (b5), (b6), (b7), (b8), (b9), (b10), (b11), (b12), (b13), (b14), (b15), (b16), (b18) and (b19).

Of note is use of a mixture of this invention for controlling corn planthopper (*Peregrinus maidis*), wherein one embodiment comprises using a mixture wherein component (b) is a (b1) compound, e.g., acetamiprid, dinotefuran, imidacloprid, nitenpyram, thiacloprid or thiamethoxam; a (b2) compound, e.g., methomyl, oxamyl, thiodicarb or triazamate; a (b3) compound, e.g., deltamethrin, esfenvalerate, indoxacarb or lambda-cyhalothrin; a (b4) compound, e.g., cyromazine, hexaflumuron, lufenuron or novaluron; a (b5) compound, e.g., methoxyfenozide or tebufenozide; a (b7) compound, e.g., abamectin; a (b8) compound, e.g., fipronil; a (b9) compound, e.g., fenoxycarb, methoprene or pyriproxyfen; a (b11) compound, e.g., amitraz; a (b12) compound, e.g., chlorfenapyr, hydramethylnon or pyridaben; a (b14) compound, pyridalyl; a (b15) compound, flonicamid; a (b16) compound or pymetrozine. Of further note is another embodiment for controlling corn planthopper wherein component (b) comprises at least one invertebrate pest control agent (or salt thereof) from each of two different groups selected from (b1), (b2), (b3), (b4), (b5), (b6), (b7), (b8), (b9), (b10), (b11), (b12), (b13), (b14), (b15), (b16), (b18) and (b19).

Of note is use of a mixture of this invention for controlling cotton melon aphid (*Aphis gossypii*), wherein one embodiment comprises using a mixture wherein component (b) is a (b1) compound, e.g., clothianidin, dinotefuran, imidacloprid, nitenpyram, thiacloprid or thiamethoxam; a (b2) compound, e.g., methomyl, oxamyl or thiodicarb; a (b3) compound, e.g., indoxacarb or lambda-cyhalothrin; a (b4) compound, e.g., buprofezin, hexaflumuron, lufenuron or novaluron; a (b7) compound, e.g., abamectin or spinosad; a (b8) compound, e.g., fipronil; a (b9) compound, e.g., fenoxycarb or methoprene; a (b12) compound, e.g., chlorfenapyr or pyridaben; a (b13) compound, e.g., cartap; a (b15) compound, flonicamid; a (b16) compound or pymetrozine. Of further note is another embodiment for controlling cotton melon aphid wherein component (b) comprises at least one invertebrate pest control agent (or salt thereof) from each of two different groups selected from (b1), (b2), (b3), (b4), (b5), (b6), (b7), (b8), (b9), (b10), (b11), (b12), (b13), (b14), (b15), (b 16), (b18) and (b19).

Of note is use of a mixture of this invention for controlling green peach aphid (*Myzus persicae*), wherein one embodiment comprises using a mixture wherein component (b) is a (b1) compound, e.g., acetamiprid, imidacloprid,

nitenpyram, thiacloprid or thiamethoxam; a (b2) compound, e.g., methomyl or oxamyl; a (b3) compound, e.g., indoxacarb; a (b4) compound, e.g., lufenuron; a (b7) compound, e.g., spinosad; a (b8) compound, e.g., fipronil; a (b9) compound, e.g., fenoxycarb, methoprene or pyriproxyfen; a (b11) compound, e.g., amitraz; a (b12) compound, e.g., chlorfenapyr or pyridaben; a (b15) compound, flonicamid; a (b16) compound or pymetrozine. Of further note is another embodiment for controlling green peach aphid wherein component (b) comprises at least one invertebrate pest control agent (or salt thereof) from each of two different groups selected from (b1), (b2), (b3), (b4), (b5), (b6), (b7), (b8), (b9), (b10), (b11), (b12), (b13), (b14), (b15), (b16), (b18) and (b19).

Of note is use of a mixture of this invention for controlling diamondback moth (*Plutella xylostella*), wherein one embodiment comprises using a mixture wherein component (b) is a (b15) compound, flonicamid. Of further note is another embodiment for controlling diamondback moth wherein component (b) comprises at least one invertebrate pest control agent (or salt thereof) from each of two different groups selected from (b1), (b2), (b3), (b4), (b5), (b6), (b7), (b8), (b9), (b10), (b11), (b12), (b13), (b14), (b15), (b16), (b18) and (b19).

Invertebrate pests are controlled in agronomic and nonagronomic applications by applying a composition or mixture of this invention, in an effective amount, to the environment of the pests, including the agronomic and/or nonagronomic locus of infestation, to the area to be protected, or directly on the pests to be controlled. Agronomic applications include protecting a field crop from invertebrate pests typically by applying a composition or a mixture of the invention to the seed of the crop before the planting, to the foliage, stems, flowers and/or fruit of crop plants, or to the soil or other growth medium before or after the crop is planted. Nonagronomic applications refer to invertebrate pest control in the areas other than fields of crop plants. Nonagronomic applications include control of invertebrate pests in stored grains, beans and other foodstuffs, and in textiles such as clothing and carpets. Nonagronomic applications also include invertebrate pest control in ornamental plants, forests, in yards, along roadsides and railroad rights of way, and on turf such as lawns, golf courses and pastures. Nonagronomic applications also include invertebrate pest control in houses and other buildings which may be occupied by humans and/or companion, farm, ranch, zoo or other animals. Nonagronomic applications also include the control of pests such as termites that can damage wood or other structural materials used in buildings. Nonagronomic applications also include protecting human and animal health by controlling invertebrate pests that are parasitic or transmit infectious diseases. Such pests include, for example, chiggers, ticks, lice and fleas.

Therefore, the present invention further comprises a method for controlling an invertebrate pest in agronomic and/or nonagronomic applications, comprising contacting the invertebrate pest or its environment with a biologically effective amount of a mixture comprising the compound of Formula 1, an *N*-oxide, or a salt thereof, and at least one invertebrate pest control agent (or salt thereof) selected from the group consisting of (b1), (b2), (b3), (b4), (b5), (b6), (b7), (b8), (b9), (b10), (b11), (b12), (b13), (b14), (b15), (b16), (b18) and (b19). Examples of suitable mixtures or compositions comprising the compound of Formula 1 and an effective amount of at least one component (b) include granular compositions wherein the invertebrate pest control agent of component (b) is present on the same granule as the compound of Formula 1 or on granules separate from those of the compound of Formula 1. Of note is an embodiment wherein component (b) is a (b1) compound, e.g. imidacloprid or thiamethoxam or component (b) comprises at least one invertebrate pest control agent (or salt thereof) from each of two different groups selected from (b1), (b2), (b3), (b4), (b5), (b6), (b7), (b8), (b9), (b10), (b11), (b12), (b13), (b14), (b15), (b16), (b18) and (b19).

One embodiment of a method of contact is by spraying. Alternatively, a granular composition comprising a mixture or composition of the invention can be applied to the plant foliage or the soil. Mixtures and compositions of this invention can also be effectively delivered through plant uptake by contacting the plant with a mixture or composition of this invention comprising the compound of Formula 1 and an invertebrate pest control agent of component (b) applied as a soil drench of a liquid formulation, a granular formulation to the soil, a nursery box treatment or a dip of transplants. Of note is a composition of the present invention in the form of a soil drench liquid formulation. Also of note is a method for controlling an invertebrate pest comprising contacting the soil environment of the invertebrate pest with a biologically effective amount of the mixture of the present invention. Of further note are such methods wherein the mixture is a mixture of any of Embodiment 1, 2, 4, 5, 7, 8, 10, 11, 24, 25, 29, 30, 31, 32, 38, 39, 44 or 45.

Mixtures and compositions of this invention are also effective by topical application to the locus of infestation. Other methods of contact include application of a mixture or composition of the invention by direct and residual sprays, aerial sprays, gels, seed coatings, microencapsulations, systemic uptake, baits, ear tags, boluses, foggers, fumigants, aerosols, dusts and many others. One embodiment of a method of contact is a dimensionally stable fertilizer granule, stick or tablet comprising a mixture or composition of the invention. The compositions and mixtures of this invention can also be impregnated into materials for fabricating invertebrate control devices (e.g. insect netting). Seed coatings can be applied to all types of seeds, including those from which plants genetically transformed to express specialized traits will germinate. Representative examples include those expressing proteins toxic to invertebrate pests, such as *Bacillus thuringiensis* toxin or those expressing herbicide resistance, such as "Roundup Ready" seed.

A mixture or composition of this invention can be incorporated into a bait composition that is consumed by an invertebrate pest or used within a device such as a trap, bait station, and the like. Such a bait composition can be in the form of granules which comprise (a) active ingredients, namely the compound of Formula 1, an *N*-oxide, or a salt thereof;

(b) an invertebrate pest control agent (or salt thereof) selected from the group consisting of (b1), (b2), (b3), (b4), (b5), (b6), (b7), (b8), (b9), (b10), (b11), (b12), (b13), (b14), (b15), (b16), (b18) and (b19); (c) one or more food materials; optionally (d) an attractant, and optionally (e) one or more humectants. Of note are granules or bait compositions which comprise between about 0.001-5% active ingredients, about 40-99% food material and/or attractant; and optionally about 0.05-10% humectants, which are effective in controlling soil invertebrate pests at very low application rates, particularly at doses of active ingredient that are lethal by ingestion rather than by direct contact. Some food materials can function both as a food source and an attractant. Food materials include carbohydrates, proteins and lipids. Examples of food materials are vegetable flour, sugar, starches, animal fat, vegetable oil, yeast extracts and milk solids. Examples of attractants are odorants and flavorants, such as fruit or plant extracts, perfume, or other animal or plant component, pheromones or other agents known to attract a target invertebrate pest. Examples of humectants, i.e. moisture retaining agents, are glycols and other polyols, glycerine and sorbitol. Of note is a bait composition (and a method utilizing such a bait composition) used to control at least one invertebrate pest selected from the group consisting of ants, termites and cockroaches, including individually or in combinations. A device for controlling an invertebrate pest can comprise the present bait composition and a housing adapted to receive the bait composition, wherein the housing has at least one opening sized to permit the invertebrate pest to pass through the opening so the invertebrate pest can gain access to the bait composition from a location outside the housing, and wherein the housing is further adapted to be placed in or near a locus of potential or known activity for the invertebrate pest.

The mixtures and compositions of this invention can be applied without other adjuvants, but most often application will be of a formulation comprising one or more active ingredients with suitable carriers, diluents, and surfactants and possibly in combination with a food depending on the contemplated end use. One method of application involves spraying a water dispersion or refined oil solution of the mixture or composition of the present invention. Combinations with spray oils, spray oil concentrations, spreader stickers, adjuvants, other solvents, and synergists such as piperonyl butoxide often enhance compound efficacy. For nonagronomic uses such sprays can be applied from spray containers such as a can, a bottle or other container, either by means of a pump or by releasing it from a pressurized container, e.g., a pressurized aerosol spray can. Such spray compositions can take various forms, for example, sprays, mists, foams, fumes or fog. Such spray compositions thus can further comprise propellants, foaming agents, etc. as the case may be. Of note is a spray composition comprising a mixture or composition of the present invention and a propellant. Representative propellants include, but are not limited to, methane, ethane, propane, butane, isobutane, butene, pentane, isopentane, neopentane, pentene, hydrofluorocarbons, chlorofluorocarbons, dimethyl ether, and mixtures of the foregoing. Of note is a spray composition (and a method utilizing such a spray composition dispensed from a spray container) used to control at least one invertebrate pest selected from the group consisting of mosquitoes, black flies, stable flies, deer flies, horse flies, wasps, yellow jackets, hornets, ticks, spiders, ants, gnats, and the like, including individually or in combinations.

The rate of application required for effective control (i.e. "biologically effective amount") will depend on such factors as the species of invertebrate to be controlled, the pest's life cycle, life stage, its size, location, time of year, host crop or animal, feeding behavior, mating behavior, ambient moisture, temperature, and the like. Under normal circumstances, application rates of about 0.01 to 2 kg of active ingredients per hectare are sufficient to control pests in agronomic ecosystems, but as little as 0.0001 kg/hectare may be sufficient or as much as 8 kg/hectare may be required. For nonagronomic applications, effective use rates will range from about 1.0 to 50 mg/square meter but as little as 0.1 mg/square meter may be sufficient or as much as 150 mg/square meter may be required. One skilled in the art can easily determine the biologically effective amount necessary for the desired level of invertebrate pest control.

Synergism has been described as "the cooperative action of two components (e.g., component (a) and component (b)) in a mixture, such that the total effect is greater or more prolonged than the sum of the effects of the two (or more) taken independently" (see P. M. L. Tames, Neth. J. Plant Pathology 1964, 70, 73-80). Mixtures containing the compound of Formula 1 together with other invertebrate pest control agents are found to exhibit synergistic effects against certain important invertebrate pests.

The presence of a synergistic effect between two active ingredients is established with the aid of the Colby equation (see S. R. Colby, "Calculating Synergistic and Antagonistic Responses of Herbicide Combinations", Weeds, 1967, 15, 20-22):

$$p = A + B - \left[ \frac{A \times B}{100} \right]$$

Using the method of Colby, the presence of a synergistic interaction between two active ingredients is established by first calculating the predicted activity, p, of the mixture based on activities of the two components applied alone. If p is lower than the experimentally established effect, synergism has occurred. If p is equal or higher than the experimentally established effect, the interaction between the two components is characterized to be only additive or antagonism. In the equation above, A is the observed result of one component applied alone at rate x. The B term is the observed result of the second component applied at rate y. The equation estimates p, the observed result of the mixture of A at rate x with B at rate y if their effects are strictly additive and no interaction has occurred. To use the Colby equation the active ingredients of the mixture are applied in the test separately as well as in combination.

BIOLOGICAL EXAMPLES OF THE INVENTION

The following tests demonstrate the control efficacy of mixtures or compositions of this invention on specific pests. The pest control protection afforded by the mixtures or compositions is not limited, however, to these species. The analysis of synergism or antagonism between the mixtures or compositions was determined using Colby's equation. The average % mortality data for the test compounds alone were inserted into the Colby's equation. If the observed average % mortality was higher than "p", the expected % mortality, the mixture or composition had synergistic effects. If the observed average % mortality was equal to or lower than the expected mortality, the mixture or composition either had no synergistic effect or an antagonistic effect. In these tests, Compound 1 is the compound of Formula 1.

TEST A

For evaluating control of silverleaf whitefly (*Bemisia argentifolii* Bellows and Perring) through contact and/or systemic means, each test unit consisted of a small open container with a 12- to 14-day-old cotton plant inside. This was pre-infested by placing test units into cages infested with adult whiteflies so that oviposition on the cotton leaves could occur. The adults were removed from the plants with an air-blast nozzle, and the test units were capped. The test units were then stored 2 to 3 days before spraying.

Test compounds were formulated using a solution containing 10% acetone, 90% water and 300 ppm X-77® Spreader Lo-Foam Formula non-ionic surfactant containing alkylarylpolyoxyethylene, free fatty acids, glycols and isopropanol (Loveland Industries, Inc.) to provide the desired concentration in ppm. Formulated test solutions were then applied in 1 mL volumes through a SUJ2 atomizer nozzle with 1/8 JJ custom body (Spraying Systems Co.) positioned 1.27 cm (0.5 inches) above the top of each test unit.

The results for all experimental compositions in this test were replicated three times. After spraying of the formulated test composition, each test unit was allowed to dry for 1 hour and the cap removed. The test units were held for 13 days in a growth chamber at 28 °C and 50-70% relative humidity. Each test unit was then assessed for insect mortality using a binocular microscope; the results are listed in Tables 2A and 2B.

Table 2A

| Silverleaf Whitefly | | | | | |
|---|---|---|---|---|---|
| Compound 1 (ppm) | Imidacloprid (ppm) | Thiamethoxam (ppm) | Ratio (b) : (a) | % Mortality (observed) | % Mortality (calculated) |
| 7 | - | - | - | 58 | - |
| 9 | - | - | - | 69 | - |
| 12 | - | - | - | 72 | - |
| - | 10 | - | - | 1 | - |
| - | 22 | - | - | 2 | - |
| - | 48 | - | - | 25 | - |
| - | - | 8.5 | - | 42 | - |
| - | - | 15 | - | 53 | - |
| - | - | 26 | - | 65 | - |
| 7 | 10 | - | 1.4:1 | 24 | 58 |
| 7 | 22 | - | 3.1:1 | 56 | 59 |
| 7 | 48 | - | 6.9:1 | 70 | 69 |
| 9 | 10 | - | 1.1:1 | 38 | 69 |

(continued)

| Silverleaf Whitefly | | | | | |
|---|---|---|---|---|---|
| Compound 1 (ppm) | Imidacloprid (ppm) | Thiamethoxam (ppm) | Ratio (b) : (a) | % Mortality (observed) | % Mortality (calculated) |
| 9 | 22 | - | 2.4:1 | 90 | 70 |
| 9 | 48 | - | 5.3:1 | 89 | 77 |
| 12 | 10 | - | 1:1:1.2 | 39 | 72 |
| 12 | 22 | - | 1.8:1 | 66 | 73 |
| 12 | 48 | - | 4:1 | 62 | 79 |
| 7 | - | 8.5 | 1.2:1 | 18 | 76 |
| 7 | - | 15 | 2.1:1 | 65 | 80 |
| 7 | - | 26 | 3.7:1 | 51 | 85 |
| 9 | - | 8.5 | 1:1.1 | 47 | 82 |
| 9 | - | 15 | 1.7:1 | 50 | 85 |
| 9 | - | 26 | 3.7:1 | 93 | 89 |
| 12 | - | 8.5 | 1:1.4 | 69 | 84 |
| 12 | - | 15 | 1.3:1 | 61 | 87 |
| 12 | - | 26 | 2.2:1 | 95 | 90 |

Table 2B

* indicates the observed % mortality is higher than the calculated % mortality by Colby equation.

| Silverleaf Whitefly | rate (ppm) | % mortality (obs) | rate (ppm) | % mortality (obs) | rate (ppm) | % mortality (obs) |
|---|---|---|---|---|---|---|
| Compound 1 | 7 | 30 | 9 | 53 | 12 | 71 |
| Methomyl | 10 | 4 | 100 | 3 | 1000 | 6 |
| Cpd 1 + Methomyl | 7 + 10 | 3 | 9 + 10 | 51 | 12 + 10 | 39 |
| Cpd 1 + Methomyl | 7 + 100 | 27 | 9 + 100 | 65* | 12 + 100 | 64 |
| Cpd 1 + Methomyl | 7 + 1000 | 9 | 9 + 1000 | 69* | 12 + 1000 | 48 |
| Amitraz | 500 | 5 | 1000 | 0 | 2000 | 0 |
| Cpd 1 + Amitraz | 7 + 500 | 39* | 9 + 500 | 58* | 12 + 500 | 89* |
| Cpd 1 + Amitraz | 7 + 1000 | 34 | 9 + 1000 | 30 | 12 + 1000 | 47 |
| Cpd 1 + Amitraz | 7 + 2000 | 9 | 9 + 2000 | 44 | 12 + 2000 | 87* |
| Thiamethoxam | 5 | 15 | 15 | 78 | 30 | 92 |
| Cpd 1 + Thiamethoxam | 7 + 5 | 22 | 9 + 5 | 53 | 12 + 5 | 83* |
| Cpd 1 + Thiamethoxam | 7 + 15 | 22 | 9 + 15 | 100* | 12 + 15 | 100* |
| Cpd 1 + Thiamethoxam | 7 + 30 | 99* | 9 + 30 | 100* | 12 + 30 | 95 |
| Pyridaben | 20 | 21 | 30 | 55 | 50 | 73 |
| Cpd 1 + Pyridaben | 7 + 20 | 0 | 9 + 20 | 39 | 12 + 20 | 65 |

(continued)

* indicates the observed % mortality is higher than the calculated % mortality by Colby equation.

| Silverleaf Whitefly | rate (ppm) | % mortality (obs) | rate (ppm) | % mortality (obs) | rate (ppm) | % mortality (obs) |
|---|---|---|---|---|---|---|
| Cpd 1 + Pyridaben | 7 + 30 | 33 | 9 + 30 | 46 | 12 + 30 | 69 |
| Cpd 1 + Pyridaben | 7 + 50 | 20 | 9 + 50 | 66 | 12 + 50 | 73 |
| Flonicamid | 0.1 | 2 | 0.2 | 2 | 0.5 | 2 |
| Cpd 1 + Flonicamid | 7 + 0.1 | 17 | 9 + 0.1 | 39 | 12 + 0.1 | 44 |
| Cpd 1 + Flonicamid | 7 + 0.2 | 34 | 9 + 0.2 | 78* | 12 + 0.2 | 47 |
| Cpd 1 + Flonicamid | 7 + 0.5 | 12 | 9 + 0.5 | 31 | 12 + 0.5 | 89* |
| Spinosad | 100 | 66 | 150 | 69 | 300 | 95 |
| Cpd 1 + Spinosad | 7 + 100 | 66 | 9 + 100 | 62 | 12 + 100 | 86 |
| Cpd 1 + Spinosad | 7 + 150 | 70 | 9 + 150 | 100* | 12 + 150 | 100* |
| Cpd 1 + Spinosad | 7 + 300 | 86 | 9 + 300 | 99* | 12 + 300 | 100* |
| Fipronil | 50 | 1 | 100 | 0 | 1000 | 13 |
| Cpd 1 + Fipronil | 7 + 50 | 46* | 9 + 50 | 77* | 12 + 50 | 67 |
| Cpd 1 + Fipronil | 7 + 100 | 33* | 9 + 100 | 85* | 12 + 100 | 68 |
| Cpd 1 + Fipronil | 7 + 1000 | 73* | 9 + 1000 | 80* | 12 + 1000 | 98* |
| Pyriproxyfen | 10 | 100 | 15 | 100 | 20 | 100 |
| Cpd 1 + Pyriproxyfen | 7 + 10 | 100 | 9 + 10 | 100 | 12 + 10 | 96 |
| Cpd 1 + Pyriproxyfen | 7 + 15 | 100 | 9 + 15 | 100 | 12 + 15 | 100 |
| Cpd 1 + Pyriproxyfen | 7 + 20 | 100 | 9 + 20 | 100 | 12 + 20 | 100 |
| Pymetrozine | 10 | 3 | 100 | 7 | 1000 | 52 |
| Cpd 1 + Pymetrozine | 7 + 10 | 65* | 9 + 10 | 69* | 12 + 10 | 99* |
| Cpd 1 +Pymetrozine | 7 + 100 | 61* | 9 + 100 | 100* | 12 + 100 | 98* |
| Cpd 1 + Pymetrozine | 7 + 1000 | 98* | 9 + 1000 | 100* | 12 + 1000 | 90* |
| Buprofezin | 300 | 75 | 500 | 65 | 1000 | 96 |
| Cpd 1 +Buprofezin | 7 + 300 | 57 | 9 + 300 | 99* | 12 + 300 | 98* |
| Cpd 1 + Buprofezin | 7 + 500 | 93* | 9 + 500 | 97* | 12 + 500 | 96* |
| Cpd 1 + Buprofezin | 7 + 1000 | 99* | 9 + 1000 | 100* | 12 + 1000 | 98* |
| Chlorfenapyr | 10 | 6 | 100 | 14 | 1000 | 18 |
| Cpd 1 + Chlorfenapyr | 7 + 10 | 62* | 9 + 10 | 83* | 12 + 10 | 100* |
| Cpd 1 + Chlorfenapyr | 7 + 100 | 61 * | 9 + 100 | 100* | 12 + 100 | 96* |

(continued)

* indicates the observed % mortality is higher than the calculated % mortality by Colby equation.

| Silverleaf Whitefly | rate (ppm) | % mortality (obs) | rate (ppm) | % mortality (obs) | rate (ppm) | % mortality (obs) |
|---|---|---|---|---|---|---|
| Cpd 1 + Chlorfenapyr | 7 + 1000 | 90* | 9 + 1000 | 81* | 12 + 1000 | 97* |
| Chlorpyrifos | 500 | 0 | 1000 | 0 | 2000 | 0 |
| Cpd 1 + Chlorpyrifos | 7 + 500 | 24 | 9 + 500 | 69* | 12 + 500 | 74* |
| Cpd 1 + Chlorpyrifos | 7 + 1000 | 68* | 9 + 1000 | 54* | 12 + 1000 | 95* |
| Cpd 1 + Chlorpyrifos | 7+ 2000 | 56* | 9 + 2000 | 85* | 12 + 2000 | 62 |
| Cyromazine | 10 | 1 | 100 | 2 | 1000 | 2 |
| Cpd 1 + Cyromazine | 7 + 10 | 42* | 9 + 10 | 84* | 12 + 10 | 79* |
| Cpd 1 + Cyromazine | 7 + 100 | 63* | 9 + 100 | 75* | 12 + 100 | 88* |
| Cpd 1 + Cyromazine | 7 + 1000 | 511* | 9 + 1000 | 66* | 12 + 1000 | 91* |
| Fenoxycarb | 2 | 0 | 10 | 0 | 20 | 21 |
| Cpd 1 + Fenoxycarb | 7 + 2 | 60* | 9 + 2 | 20 | 12 + 2 | 85* |
| Cpd 1 + Fenoxycarb | 7 + 10 | 64* | 9 + 10 | 52 | 12 + 10 | 50 |
| Cpd 1 + Fenoxycarb | 7 + 20 | 64* | 9 + 20 | 56 | 12 + 20 | 47 |
| Methoprene | 500 | 11 | 1000 | 22 | 2000 | 60 |
| Cpd 1 + Methoprene | 7 + 500 | 45* | 9 + 500 | 77* | 12 + 500 | 87* |
| Cpd 1 + Methoprene | 7 + 1000 | 100* | 9 + 1000 | 100* | 12 + 1000 | 100* |
| Cpd 1 + Methoprene | 7 + 2000 | 98* | 9+ 2000 | 97* | 12 + 2000 | 99* |
| Indoxacarb | 1 | 0 | 3 | 0 | 10 | 0 |
| Cpd 1 + Indoxacarb | 7 + 1 | 18 | 9 + 1 | 12 | 12 + 1 | 31 |
| Cpd 1 + Indoxacarb | 7 + 3 | 2 | 9 + 3 | 12 | 12 + 3 | 5 |
| Cpd 1 + Indoxacarb | 7 + 10 | 32* | 9 + 10 | 13 | 12 + 10 | 41 |
| Triazamate | 0.2 | 0 | 0.3 | 0 | 0.5 | 0 |
| Cpd 1 + Triazamate | 7 + 0.2 | 0 | 9 + 0.2 | 51 | 12 + 0.2 | 52 |
| Cpd 1 + Triazamate | 7 + 0.3 | 10 | 9 + 0.3 | 30 | 12 + 0.3 | 73* |
| Cpd 1 + Triazamate | 7 + 0.5 | 1 | 9 + 0.5 | 49 | 12 + 0.5 | 0 |
| Thiodicarb | 100 | 1 | 1000 | 0 | 3000 | 6 |
| Cpd 1 + Thiodicarb | 7 + 100 | 50* | 9 + 100 | 59* | 12 + 100 | 76* |

(continued)

* indicates the observed % mortality is higher than the calculated % mortality by Colby equation.

| Silverleaf Whitefly | rate (ppm) | % mortality (obs) | rate (ppm) | % mortality (obs) | rate (ppm) | % mortality (obs) |
|---|---|---|---|---|---|---|
| Cpd 1 + Thiodicarb | 7 + 1000 | 51* | 9 + 1000 | 78* | 12 + 1000 | 88* |
| Cpd 1 + Thiodicarb | 7 + 3000 | 42* | 9 + 3000 | 64* | 12 + 3000 | 76* |
| Tebufenozide | 100 | 2 | 1000 | 6 | 3000 | 7 |
| Cpd 1 + Tebufenozide | 7 + 100 | 48* | 9 + 100 | 78* | 12 + 100 | 72 |
| Cpd 1 + Tebufenozide | 7 + 1000 | 70* | 9 + 1000 | 56 | 12 + 1000 | 67 |
| Cpd 1 + Tebufenozide | 7 + 3000 | 64* | 9 + 3000 | 58* | 12 + 3000 | 70 |
| Deltamethrin | 30 | 2 | 40 | 0 | 50 | 1 |
| Cpd 1 + Deltamethrin | 7 + 30 | 27 | 9 + 30 | 65* | 12 + 30 | 91* |
| Cpd 1 + Deltamethrin | 7 + 40 | 46* | 9 + 40 | 78* | 12 + 40 | 92* |
| Cpd 1 + Deltamethrin | 7 + 50 | 63* | 9 + 50 | 78* | 12 + 50 | 84* |
| Oxamyl | 0.1 | 2 | 0.3 | 0 | 1 | 1 |
| Cpd 1 + Oxamyl | 7 + 0.1 | 63* | 9 + 0.1 | 59* | 12 + 0.1 | 48 |
| Cpd 1 + Oxamyl | 7 + 0.3 | 76* | 9 + 0.3 | 67* | 12 + 0.3 | 52 |
| Cpd 1 + Oxamyl | 7 + 1 | 61* | 9 + 1 | 26 | 12 + 1 | 83* |
| Hexaflumuron | 10 | 1 | 60 | 0 | 360 | 0 |
| Cpd 1 + Hexaflumuron | 7 + 10 | 37 | 9 + 10 | 41 | 12 + 10 | 90* |
| Cpd 1 + Hexaflumuron | 7 + 60 | 51* | 9 + 60 | 71* | 12 + 60 | 75* |
| Cpd 1 + Hexaflumuron | 7 + 360 | 78* | 9 + 360 | 75* | 12 + 360 | 75* |
| Acetamiprid | 1 | 3 | 5 | 45 | 20 | 83 |
| Cpd 1 + Acetamiprid | 7 + 1 | 83* | 9 + 1 | 51 | 12 + 1 | 98* |
| Cpd 1 + Acetamiprid | 7 + 5 | 81* | 9 + 5 | 85* | 12 + 5 | 94* |
| Cpd 1 + Acetamiprid | 7 + 20 | 92* | 9 + 20 | 94* | 12 + 20 | 100* |
| Cartap | 0.1 | 0 | 0.2 | 0 | 0.5 | 0 |
| Cpd 1 + Cartap | 7+0.1 | 51* | 9+0.1 | 61* | 12 + 0.1 | 65 |
| Cpd 1 + Cartap | 7 + 0.2 | 35 | 9 + 0.2 | 39 | 12 + 0.2 | 80* |
| Cpd 1 + Cartap | 7 + 0.5 | 69* | 9 + 0.5 | 42 | 12 + 0.5 | 55 |
| Esfenvalerate | 50 | 1 | 100 | .0 | 200 | 0 |
| Cpd 1 + Esfenvalerate | 7 + 50 | 30 | 9 + 50 | 37 | 12 + 50 | 94* |
| Cpd 1 + Esfenvalerate | 7 + 100 | 49* | 9 + 100 | 78* | 12 + 100 | 82* |
| Cpd 1 + Esfenvalerate | 7 + 200 | 41* | 9 + 200 | 76* | 12 + 200 | 91* |

(continued)

* indicates the observed % mortality is higher than the calculated % mortality by Colby equation.

| Silverleaf Whitefly | rate (ppm) | % mortality (obs) | rate (ppm) | % mortality (obs) | rate (ppm) | % mortality (obs) |
|---|---|---|---|---|---|---|
| Thiacloprid | 15 | 40 | 25 | 83 | 35 | 61 |
| Cpd 1 + Thiacloprid | 7 + 15 | 81* | 9 + 15 | 66 | 12 + 15 | 97* |
| Cpd 1 + Thiacloprid | 7 + 25 | 89* | 9 + 25 | 75 | 12 + 25 | 93 |
| Cpd 1 + Thiacloprid | 7 + 35 | 99* | 9 + 35 | 100* | 12 + 35 | 99* |
| Lambda-cyhalothrin | 10 | 0 | 50 | 1 | 250 | 100 |
| Cpd 1 + Lambda-cyhalothrin | 7 + 10 | 2 | 9 + 10 | 42 | 12 + 10 | 74* |
| Cpd 1 + Lambda-cyhalothrin | 7 + 50 | 61* | 9 + 50 | 59* | 12 + 50 | 46 |
| Cpd 1 + Lambda-cyhalothrin | 7 + 250 | 97* | 9 + 250 | 91 | 12 + 250 | 94 |
| Hydramethylnon | 10 | 2 | 100 | 1 | 1000 | 0 |
| Cpd 1 + Hydramethylnon | 7 + 10 | 27 | 9 + 10 | 87* | 12 + 10 | 77* |
| Cpd 1 + Hydramethylnon | 7 + 100 | 71* | 9 + 100 | 90* | 12 + 100 | 86* |
| Cpd 1 + Hydramethylnon | 7 + 1000 | 51* | 9 + 1000 | 83* | 12 + 1000 | 82* |
| Methoxyfenozide | 2 | 1 | 10 | 2 | 50 | 1 |
| Cpd 1 + Methoxyfenozide | 7 + 2 | 29 | 9 + 2 | 23 | 12 + 2 | 61 |
| Cpd 1 + Methoxyfenozide | 7 + 10 | 46* | 9 + 10 | 51 | 12 + 10 | 66 |
| Cpd 1 + Methoxyfenozide | 7 + 50 | 40* | 9 + 50 | 56* | 12 + 50 | 68 |
| Nitenpyram | 20 | 53 | 30 | 84 | 40 | 85 |
| Cpd 1 + Nitenpyram | 7 + 20 | 51 | 9 + 20 | 79* | 12 + 20 | 97* |
| Cpd 1 + Nitenpyram | 7 + 30 | 67 | 9 + 30 | 90 | 12 + 30 | 100* |
| Cpd 1 + Nitenpyram | 7 + 40 | 75 | 9 + 40 | 84 | 12 + 40 | 96 |
| Pyridalyl | 10 | 0 | 25 | 0 | 100 | 0 |
| Cpd 1 + Pyridalyl | 7 + 10 | 62* | 9 + 10 | 74* | 12 + 10 | 95* |
| Cpd 1 + Pyridalyl | 7 + 25 | 18 | 9 + 25 | 81* | 12 + 25 | 88* |
| Cpd 1 + Pyridalyl | 7 + 100 | 40* | 9 + 100 | 81* | 12 + 100 | 92* |
| Dinotefuran | 10 | 74 | 25 | 97 | 100 | 100 |

(continued)

* indicates the observed % mortality is higher than the calculated % mortality by Colby equation.

| Silverleaf Whitefly | rate (ppm) | % mortality (obs) | rate (ppm) | % mortality (obs) | rate (ppm) | % mortality (obs) |
|---|---|---|---|---|---|---|
| Cpd 1 + Dinotefuran | 7 + 10 | 83* | 9 + 10 | 85 | 12 + 10 | 90 |
| Cpd 1 + Dinotefuran | 7 + 25 | 91 | 9 + 25 | 93 | 12 + 25 | 99 |
| Cpd 1 + Dinotefuran | 7 + 100 | 100 | 9 + 100 | 100 | 12 + 100 | 100 |
| Novaluron | 2 | 2 | 10 | 0 | 250 | 28 |
| Cpd 1 + Novaluron | 7 + 2 | 92* | 9 + 2 | 86* | 12 + 2 | 99* |
| Cpd 1 + Novaluron | 7 + 10 | 47* | 9 + 10 | 88* | 12 + 10 | 98* |
| Cpd 1 + Novaluron | 7 + 250 | 86* | 9 + 250 | 86* | 12 + 250 | 98* |

TEST B

For evaluating control of the western flower thrip (*Frankliniella occidentalis* Pergande) through contact and/or systemic means, each test unit consisted of a small open container with a 5- to 7-day-old bean (var. Soleil) plant inside.

Test solutions were formulated and sprayed with 3 replications as described for Test A. After spraying, the test units were allowed to dry for 1 hour, 22 to 27 adult thrips were added to each unit and then a black, screened cap was placed on top. The test units were held for 7 days at 25 °C and 45-55% relative humidity. Each test unit was then visually assessed, the results are listed in Tables 3A and 3B.

Table 3A

| Western Flower Thrips | | | | | |
|---|---|---|---|---|---|
| Compound 1 (ppm) | Imidacloprid (ppm) | Thiamethoxam (ppm) | Ratio (b) : (a) | % Mortality (observed) | % Mortality (calculated) |
| 0.3 | - | - | - | 25 | - |
| 1.3 | - | - | - | 55 | - |
| 6 | - | - | - | 72 | - |
| - | 11 | - | - | 20 | - |
| - | 77 | - | - | 37 | - |
| - | 561 | - | - | 90 | - |
| - | - | 1 | - | 33 | - |
| - | - | 5.5 | - | 43 | - |
| - | - | 29 | - | 43 | - |
| 0.3 | 11 | - | 37:1 | 13 | 40 |
| 0.3 | 77 | - | 257:1 | 53 | 53 |
| 0.3 | 561 | - | 1870:1 | 97 | 93 |
| 1.3 | 11 | - | 8.5:1 | 40 | 64 |
| 1.3 | 77 | - | 59:1 | 67 | 72 |
| 1.3 | 561 | - | 432:1 | 97 | 96 |
| 6 | 11 | - | 1.8:1 | 77 | 77 |

(continued)

| Western Flower Thrips | | | | | |
|---|---|---|---|---|---|
| Compound 1 (ppm) | Imidacloprid (ppm) | Thiamethoxam (ppm) | Ratio (b) : (a) | % Mortality (observed) | % Mortality (calculated) |
| 6 | 77 | - | 13:1 | 83 | 82 |
| 6 | 561 | - | 94:1 | 93 | 97 |
| 0.3 | - | 1 | 3.3:1 | 30 | 50 |
| 0.3 | - | 5.5 | 18.3:1 | 53 | 57 |
| 0.3 | - | 29 | 97:1 | 60 | 57 |
| 1.3 | - | 1 | 1:1.3 | 40 | 70 |
| 1.3 | - | 5.5 | 4.2:1 | 30 | 74 |
| 1.3 | - | 29 | 22.3:1 | 33 | 74 |
| 6 | - | 1 | 1:6 | 70 | 81 |
| 6 | - | 5.5 | 1:1.1: | 57 | 84 |
| 6 | - | 29 | 4.8:1 | 77 | 84 |

Table 3B

* indicates the observed % mortality is higher than the calculated % mortality by Colby equation.

| Western Flower Thrip | rate (ppm) | % mortality (obs) | rate (ppm) | % mortality (obs) | rate (ppm) | % mortality (obs) |
|---|---|---|---|---|---|---|
| Compound 1 | 0.3 | 42 | 1.5 | 50 | 6 | 61 |
| Methomyl | 30 | 60 | 100 | 60 | 300 | 100 |
| Cpd 1 + Methomyl | 0.3 + 30 | 20 | 1.5 + 30 | 60 | 6 + 30 | 90* |
| Cpd 1 + Methomyl | 0.3 + 100 | 90* | 1.5 +100 | 80 | 6 + 100 | 100* |
| Cpd 1 + Methomyl | 0.3 + 300 | 90 | 1.5 + 300 | 90 | 6 + 300 | 100 |
| Amitraz | 10 | 40 | 100 | 30 | 1000 | 20 |
| Cpd 1 + Amitraz | 0.3 + 10 | 30 | 1.5 + 10 | 60 | 6 + 10 | 70 |
| Cpd 1 + Amitraz | 0.3 + 100 | 70* | 1.5 + 100 | 70* | 6 + 100 | 80* |
| Cpd 1 + Amitraz | 0.3 + 1000 | 60* | 1.5 + 1000 | 50 | 6 + 1000 | 60 |
| Thiamethoxam | 5 | 20 | 50 | 80 | 250 | 90 |
| Cpd 1 + Thiamethoxam | 0.3 + 5 | 20 | 1.5 + 5 | 50 | 6 + 5 | 70* |
| Cpd 1 + Thiamethoxam | 0.3 + 70 | 30 | 1.5+70 | 80 | 6 + 70 | 80 |
| Cpd 1 + Thiamethoxam | 0.3 + 250 | 90 | 1.5+250 | 90 | 6 + 250 | 90 |
| Pyridaben | 10 | 30 | 80 | 50 | 200 | 60 |
| Cpd 1 + Pyridaben | 0.3 + 10 | 30 | 1.5+10 | 40 | 6 + 10 | 60 |
| Cpd 1 + Pyridaben | 0.3 + 80 | 70 | 1.5 + 80 | 30 | 6 + 80 | 50 |
| Cpd 1 + Pyridaben | 0.3 + 200 | 70 | 1.5 + 200 | 80 | 6 + 200 | 70 |

(continued)

* indicates the observed % mortality is higher than the calculated % mortality by Colby equation.

| Western Flower Thrip | rate (ppm) | % mortality (obs) | rate (ppm) | % mortality (obs) | rate (ppm) | % mortality (obs) |
|---|---|---|---|---|---|---|
| Flonicamid | 10 | 20 | 100 | 80 | 1000 | 70 |
| Cpd 1 + Flonicamid | 0.3 + 10 | 40 | 1.5+10 | 70* | 6 + 10 | 70* |
| Cpd 1 + Flonicamid | 0.3 + 100 | 50 | 1.5 + 100 | 70 | 6 + 100 | 80 |
| Cpd 1 + Flonicamid | 0.3 + 1000 | 90* | 1.5 + 1000 | 80 | 6 + 1000 | 90* |
| Spinosad | 0.1 | 20 | 0.5 | 60 | 3 | 90 |
| Cpd 1 + Spinosad | 0.3 + 0.1 | 30 | 1.5 + 0.1 | 40 | 6 + 0.1 | 40 |
| Cpd 1 + Spinosad | 0.3 + 0.5 | 30 | 1.5 + 0.5 | 80 | 6 + 0.5 | 50 |
| Cpd 1 + Spinosad | 0.3 + 3 | 80 | 1.5 + 3 | 70 | 6 + 3 | 80 |
| Fipronil | 0.5 | 100 | 2 | 100 | 10 | 100 |
| Cpd 1 + Fipronil | 0.3 + 0.5 | 100 | 1.5 + 0.5 | 100 | 6 + 0.5 | 100 |
| Cpd 1 + Fipronil | 0.3 + 2 | 100 | 1.5 + 2 | 100 | 6 + 2 | 100 |
| Cpd 1 + Fipronil | 0.3 + 10 | 100 | 1.5 + 10 | 100 | 6 + 10 | 100 |
| Pyriproxyfen | 10 | 100 | 100 | 100 | 1000 | 100 |
| Cpd 1 + Pyriproxyfen | 0.3 + 10 | 100 | 1.5 + 10 | 100 | 6 + 10 | 100 |
| Cpd 1 + Pyriproxyfen | 0.3 + 100 | 100 | 1.5 + 100 | 100 | 6 + 100 | 100 |
| Cpd 1 + Pyriproxyfen | 0.3 + 1000 | 100 | 1.5 + 1000 | 100 | 6 + 1000 | 100 |
| Pymetrozine | 10 | 100 | 100 | 100 | 1000 | 100 |
| Cpd 1 + Pymetrozine | 0.3 + 10 | 100 | 1.5 + 10 | 100 | 6 + 10 | 100 |
| Cpd 1 + Pymetrozine | 0.3 + 100 | 100 | 1.5 + 100 | 100 | 6 + 100 | 100 |
| Cpd 1 + Pymetrozine | 0.3 + 1000 | 100 | 1.5 + 1000 | 100 | 6 + 1000 | 100 |
| Buprofezin | 10 | 20 | 100 | 20 | 1000 | 30 |
| Cpd 1 + Buprofezin | 0.3 + 10 | 20 | 1.5 + 10 | 10 | 6 + 10 | 20 |
| Cpd 1 + Buprofezin | 0.3 + 100 | 10 | 1.5 + 100 | 20 | 6 + 100 | 30 |
| Cpd 1 + Buprofezin | 0.3 + 1000 | 30 | 1.5 + 1000 | 30 | 6 + 1000 | 50 |
| Chlorfenapyr | 5 | 40 | 20 | 70 | 150 | 90 |
| Cpd 1 + Chlorfenapyr | 0.3 + 5 | 30 | 1.5 + 5 | 20 | 6 + 5 | 60 |
| Cpd 1 + Chlorfenapyr | 0.3 + 20 | 50 | 1.5 + 20 | 50 | 6 + 20 | 80 |
| Cpd 1 + Chlorfenapyr | 0.3 + 150 | 90 | 1.5 + 150 | 90 | 6 + 150 | 90 |
| Chlorpyrifos | 10 | 20 | 100 | 10 | 1000 | 10 |
| Cpd 1 + Chlorpyrifos | 0.3 + 10 | 0 | 1.5 + 10 | 20 | 6 + 10 | 30 |

(continued)

* indicates the observed % mortality is higher than the calculated % mortality by Colby equation.

| Western Flower Thrip | rate (ppm) | % mortality (obs) | rate (ppm) | % mortality (obs) | rate (ppm) | % mortality (obs) |
|---|---|---|---|---|---|---|
| Cpd 1 + Chlorpyrifos | 0.3 + 100 | 0 | 1.5 + 100 | 20 | 6 + 100 | 20 |
| Cpd 1 + Chlorpyrifos | 0.3 + 1000 | 90* | 1.5 + 1000 | 70* | 6 + 1000 | 90* |
| Cyromazine | 200 | 70 | 500 | 80 | 1000 | 70 |
| Cpd 1 + Cyromazine | 0.3 + 200 | 60 | 1.5 + 200 | 60 | 6 + 200 | 80 |
| Cpd 1 + Cyromazine | 0.3 + 500 | 40 | 1.5 + 500 | 80 | 6 + 500 | 80 |
| Cpd 1 + Cyromazine | 0.3 + 1000 | 70 | 1.5 + 1000 | 70 | 6 + 1000 | 70 |
| Fenoxycarb | 10 | 40 | 100 | 70 | 1000 | 60 |
| Cpd 1 + Fenoxycarb | 0.3 + 10 | 60 | 1.5 + 10 | 70 | 6 + 10 | 80* |
| Cpd 1 + Fenoxycarb | 0.3 + 100 | 70 | 1.5 + 100 | 30 | 6 + 100 | 70 |
| Cpd 1 + Fenoxycarb | 0.3 + 1000 | 50 | 1.5 + 1000 | 60 | 6 + 1000 | 80 |
| Methoprene | 10 | 80 | 100 | 60 | 1000 | 70 |
| Cpd 1 + Methoprene | 0.3 + 10 | 60 | 1.5 + 10 | 60 | 6 + 10 | 70 |
| Cpd 1 + Methoprene | 0.3 + 100 | 70 | 1.5 + 100 | 40 | 6 + 100 | 80 |
| Cpd 1 + Methoprene | 0.3 + 1000 | 70 | 1.5 + 1000 | 70 | 6 + 1000 | 90* |
| Indoxacarb | 1 | 50 | 500 | 50 | 3000 | 50 |
| Cpd 1 + Indoxacarb | 0.3 + 1 | 50 | 1.5 + 1 | 70 | 6 + 1 | 90 |
| Cpd 1 + Indoxacarb | 0.3 + 500 | 50 | 1.5 + 500 | 70 | 6 + 500 | 90 |
| Cpd 1 + Indoxacarb | 0.3 + 3000 | 50 | 1.5 + 3000 | 80* | 6 + 3000 | 90 |
| Triazamate | 10 | 70 | 1000 | 80 | 3000 | 90 |
| Cpd 1 + Triazamate | 0.3 + 10 | 60 | 1.5 + 10 | 70 | 6 + 10 | 90* |
| Cpd 1 + Triazamate | 0.3 + 1000 | 70 | 1.5 + 1000 | 60 | 6 + 1000 | 80 |
| Cpd 1 + Triazamate | 0.3 + 3000 | 70 | 1.5 + 3000 | 80 | 6 + 3000 | 80 |
| Thiodicarb | 20 | 60 | 200 | 80 | 2000 | 1000 |
| Cpd 1 + Thiodicarb | 0.3 + 20 | 7 | 1.5 + 20 | 7 | 6 + 20 | |
| Cpd 1 + Thiodicarb | 0.3 + 200 | 2 | 1.5 + 200 | 3 | 6 + 200 | 1 |
| Cpd 1 + Thiodicarb | 0.3 + 2000 | 0 | 1.5 + 2000 | 1 | 6 + 2000 | 1 |
| Tebufenozide | 100 | 70 | 1000 | 60 | 3000 | 60 |

(continued)

* indicates the observed % mortality is higher than the calculated % mortality by Colby equation.

| Western Flower Thrip | rate (ppm) | % mortality (obs) | rate (ppm) | % mortality (obs) | rate (ppm) | % mortality (obs) |
|---|---|---|---|---|---|---|
| Cpd 1 + Tebufenozide | 0.3 + 100 | 70 | 1.5 + 100 | 70 | 6 + 100 | 80 |
| Cpd 1 + Tebufenozide | 0.3 + 1000 | 50 | 1.5 + 1000 | 50 | 6 + 1000 | 90* |
| Cpd 1 + Tebufenozide | 0.3 + 3000 | 50 | 1.5 + 3000 | 80 | 6 + 3000 | 50 |
| Deltamethrin | 10 | 70 | 1000 | 70 | 3000 | 50 |
| Cpd 1 + Deltamethrin | 0.3 + 10 | 70 | 1.5 + 10 | 80 | 6 + 10 | 60 |
| Cpd 1 + Deltamethrin | 0.3 + 1000 | 60 | 1.5 + 1000 | 60 | 6 + 1000 | 80 |
| Cpd 1 + Deltamethrin | 0.3 + 3000 | 80* | 1.5 + 3000 | 70 | 6 + 3000 | 80 |
| Oxamyl | 1 | 30 | 50 | 40 | 500 | 100 |
| Cpd 1 + Oxamyl | 0.3 + 1 | 30 | 1.5 + 1 | 70* | 6 + 1 | 70 |
| Cpd 1 + Oxamyl | 0.3 + 50 | 60 | 1.5 + 50 | 60 | 6 + 50 | 80* |
| Cpd 1 + Oxamyl | 0.3 + 500 | 100 | 1.5 + 500 | 100 | 6 + 500 | 100 |
| Hexaflumuron | 10 | 20 | 1000 | 30 | 3000 | 60 |
| Cpd 1 + Hexaflumuron | 0.3 + 10 | 50 | 1.5 + 10 | 40 | 6 + 10 | 50 |
| Cpd 1 + Hexaflumuron | 0.3 + 1000 | 50 | 1.5 + 1000 | 60 | 6 + 1000 | 70 |
| Cpd 1 + Acetamiprid | 0.3 + 3000 | - | 1.5 + 3000 | - | 6 + 3000 | 70 |
| Acetamiprid | 1 | 70 | 100 | 90 | 3000 | 100 |
| Cpd 1 + Acetamiprid | 0.3 + 1 | 50 | 1.5 + 1 | 80 | 6 + 1 | 70 |
| Cpd 1 + Acetamiprid | 0.3 + 100 | 80 | 1.5 + 100 | 90 | 6 + 100 | 90 |
| Cpd 1 + Acetamiprid | 0.3 + 3000 | 100 | 1.5 + 3000 | 100 | 6 + 3000 | 100 |
| Cartap | 1 | 40 | 1000 | 100 | 3000 | 100 |
| Cpd 1 + Cartap | 0.3 + 1 | 100* | 1.5 + 1 | 100* | 6 + 1 | 100* |
| Cpd 1 + Cartap | 0.3 + 1000 | 100 | 1.5 + 1000 | 100 | 6 + 1000 | 100 |
| Cpd 1 + Cartap | 0.3 + 3000 | 100 | 1.5 + 3000 | 100 | 6 + 3000 | 100 |
| Esfenvalerate | 10 | 20 | 20 | 40 | 30 | 30 |
| Cpd 1 + Esfenvalerate | 0.3 + 10 | 30 | 1.5 + 10 | 40 | 6 + 10 | 90* |
| Cpd 1 + Esfenvalerate | 0.3 + 20 | 60 | 1.5 + 20 | 50 | 6 + 20 | 90* |
| Cpd 1 + Esfenvalerate | 0.3 + 30 | 60* | 1.5 + 30 | 70 | 6 + 30 | 80* |
| Thiacloprid | 1 | 20 | 100 | 30 | 3000 | 40 |
| Cpd 1 + Thiacloprid | 0.3 + 1 | 20 | 1.5 + 1 | 30 | 6 + 1 | 60 |
| Cpd 1 + Thiacloprid | 0.3 + 100 | 40 | 1.5 + 100 | 70* | 6 + 100 | - |

(continued)

* indicates the observed % mortality is higher than the calculated % mortality by Colby equation.

| Western Flower Thrip | rate (ppm) | % mortality (obs) | rate (ppm) | % mortality (obs) | rate (ppm) | % mortality (obs) |
|---|---|---|---|---|---|---|
| Cpd 1 + Thiacloprid | 0.3 + 3000 | 40 | 1.5 + 3000 | 60 | 6 + 3000 | 70 |
| Lambda-cyhalothrin | 10 | 40 | 50 | 40 | 250 | 40 |
| Cpd 1 + Lambda-cyhalothrin | 0.3 + 10 | 30 | 1.5 + 10 | 40 | 6 + 10 | 50 |
| Cpd 1 + Lambda-cyhalothrin | 0.3 + 50 | 50 | 1.5 + 50 | 50 | 6 + 50 | 50 |
| Cpd 1 + Lambda-cyhalothrin | 0.3 + 250 | 40 | 1.5 + 250 | 40 | 6 + 250 | 50 |
| Hydramethylnon | 10 | 60 | 500 | 50 | 1000 | 40 |
| Cpd 1 + Hydramethylnon | 0.3 + 10 | 60 | 1.5 + 10 | 70 | 6 + 10 | 50 |
| Cpd 1 + Hydramethylnon | 0.3 + 500 | 50 | 1.5 + 500 | 40 | 6 + 500 | 70 |
| Cpd 1 + Hydramethylnon | 0.3 + 1000 | 5 | 1.5 + 1000 | 40 | 6 + 1000 | 60 |
| Clothianidin | 100 | 90 | 500 | 100 | 1000 | 100 |
| Cpd 1 + Clothianidin | 0.3 + 100 | 100* | 1.5 + 100 | 90 | 6 + 100 | 100* |
| Cpd 1 + Clothianidin | 0.3 + 500 | 100 | 1.5 + 500 | 100 | 6 + 500 | 100 |
| Cpd 1 + Clothianidin | 0.3 + 1000 | 100 | 1.5 + 1000 | 100 | 6 + 1000 | 100 |
| Lufenuron | 10 | 90 | 100 | 80 | 500 | 80 |
| Cpd 1 + Lufenuron | 0.3 + 10 | 80 | 1.5 + 10 | 90 | 6 + 10 | 90 |
| Cpd 1 + Lufenuron | 0.3 + 100 | 90* | 1.5 + 100 | 100* | 6 + 100 | 100* |
| Cpd 1 + Lufenuron | 0.3 + 500 | 90* | 1.5 + 500 | 90 | 6 + 500 | 100* |
| Abamectin | 1 | 100 | 10 | 100 | 100 | 100 |
| Cpd 1 + Abamectin | 0.3 + 1 | 100 | 1.5 + 1 | 100 | 6 + 1 | 100 |
| Cpd 1 + Abamectin | 0.3 + 10 | 100 | 1.5 + 10 | 100 | 6 + 10 | 100 |
| Cpd 1 + Abamectin | 0.3 + 100 | 100 | 1.5 + 100 | 100 | 6 + 100 | 100 |
| Methoxyfenozide | 10 | 60 | 100 | 60 | 500 | 60 |
| Cpd 1 + Methoxyfenozide | 0.3 + 10 | 50 | 1.5 + 10 | 70 | 6 + 10 | 80 |
| Cpd 1 + Methoxyfenozide | 0.3 + 50 | 50 | 1.5 + 50 | 70 | 6 + 50 | 90* |
| Cpd 1 + Methoxyfenozide | 0.3 + 500 | 50 | 1.5 + 500 | 80 | 6 + 500 | 90* |
| Nitenpyram | 5 | 20 | 50 | 50 | 500 | 80 |
| Cpd 1 + Nitenpyram | 0.3 + 5 | 40 | 1.5 + 5 | 40 | 6 + 5 | 50 |

(continued)

* indicates the observed % mortality is higher than the calculated % mortality by Colby equation.

| Western Flower Thrip | rate (ppm) | % mortality (obs) | rate (ppm) | % mortality (obs) | rate (ppm) | % mortality (obs) |
|---|---|---|---|---|---|---|
| Cpd 1 + Nitenpyram | 0.3+ 50 | 60 | 1.5 + 50 | 70 | 6 + 50 | 50 |
| Cpd 1 + Nitenpyram | 0.3 + 500 | 100* | 1.5 + 500 | 90 | 6 + 500 | 100* |
| Pyridalyl | 5 | 30 | 50 | 60 | 500 | 100 |
| Cpd 1 + Pyridalyl | 0.3 + 5 | 40 | 1.5 + 5 | 30 | 6 + 5 | 40 |
| Cpd 1 + Pyridalyl | 0.3 + 50 | 60 | 1.5 + 50 | 60 | 6 + 50 | 50 |
| Cpd 1 + Pyridalyl | 0.3 + 500 | 100 | 1.5 + 500 | 90 | 6 + 500 | 100 |
| Dinotefuran | 0.5 | 50 | 20 | 60 | 100 | 70 |
| Cpd 1 + Dinotefuran | 0.3 + 0.5 | 60 | 1.5 + 0.5 | 60 | 6 + 0.5 | 90* |
| Cpd 1 + Dinotefuran | 0.3 + 20 | 60 | 1.5 + 20 | 80 | 6 + 20 | 90* |
| Cpd 1 + Dinotefuran | 0.3 + 100 | 60 | 1.5 + 100 | 80 | 6 + 100 | 90* |
| Novaluron | 1 | 50 | 100 | 50 | 1000 | 80 |
| Cpd 1 + Novaluron | 0.3 + 1 | 50 | 1.5 + 1 | 40 | 6 + 1 | 90* |
| Cpd 1 + Novaluron | 0.3 + 100 | 60 | 1.5 + 100 | 50 | 6 + 100 | 90* |
| Cpd 1 + Novaluron | 0.3 + 1000 | 70 | 15 + 1000 | 80 | 6 + 1000 | 90* |

TEST C

For evaluating control of potato leafhopper (*Empoasca fabae* Harris) through contact and/or systemic means, each test unit consisted of a small open container with a 5- to 6-day-old Longio bean plant (primary leaves emerged) inside. White sand was added to the top of the soil, and one of the primary leaves was excised prior to application. Test compounds were formulated and sprayed with 3 replications as described for Test A. After spraying, the test units were allowed to dry for 1 hour before they were infested with 5 potato leafhoppers (18- to 21-day-old adults). A black, screened cap was placed on the top of each container. The test units were held for 6 days in a growth chamber at 19-21 °C and 50-70% relative humidity. Each test unit was then visually assessed for insect mortality; the results are listed in Tables 4A and 4B.

Table 4A

| Potato Leafhopper | | | | |
|---|---|---|---|---|
| Compound 1 (ppm) | Imidacloprid (ppm) | Ratio (b) : (a) | % Mortality (observed) | % Mortality (calculated) |
| 0.3 | 0 | - | 0 | - |
| 2.3 | 0 | - | 0 | - |
| 18 | 0 | - | 100 | - |
| 0 | 0.4 | - | 20 | - |
| 0 | 1.4 | - | 0 | - |
| 0 | 4.6 | - | 20 | - |
| 0.3 | 0.4 | 1.3:1 | 13 | 20 |
| 0.3 | 1.4 | 4.7:1 | 13 | 0 |

(continued)

| Potato Leafhopper | | | | |
|---|---|---|---|---|
| Compound 1 (ppm) | Imidacloprid (ppm) | Ratio (b) : (a) | % Mortality (observed) | % Mortality (calculated) |
| 0.3 | 4.6 | 15:1 | 47 | 20 |
| 2.3 | 0.4 | 1:5.8 | 33 | 20 |
| 2.3 | 1.4 | 1:1.6 | 33 | 0 |
| 2.3 | 4.6 | 2:1 | 47 | 20 |
| 18 | 0.4 | 1:45 | 27 | 100 |
| 18 | 1.4 | 1:12.9 | 27 | 100 |
| 18 | 4.6 | 1:3.9 | 33 | 100 |

Table 4B

* indicates the observed % mortality is higher than the calculated % mortality by Colby equation.

| Potato Leaf Hopper | rate (ppm) | % mortality (obs) | rate (ppm) | % mortality (obs) | rate (ppm) | % mortality (obs) |
|---|---|---|---|---|---|---|
| Compound 1 | 0.3 | 26 | 2.5 | 36 | 18 | 91 |
| Methomyl | 1 | 0 | 2 | 53 | 5 | 100 |
| Cpd 1 + Methomyl | 0.3 + 1 | 20 | 2.5 + 1 | 20 | 18 + 1 | 100* |
| Cpd 1 + Methomyl | 0.3 + 2 | 67* | 2.5 + 2 | 80* | 18 + 2 | 93 |
| Cpd 1 + Methomyl | 0.3 + 5 | 73 | 2.5 + 5 | 100 | 18 + 5 | 100 |
| Amitraz | 10 | 0 | 100 | 7 | 1000 | 13 |
| Cpd 1 + Amitraz | 0.3 + 10 | 7 | 2.5 + 10 | 40* | 18 + 10 | 100* |
| Cpd 1 + Amitraz | 0.3 + 100 | 7 | 2.5 + 100 | 33 | 18 + 100 | 100* |
| Cpd 1 + Amitraz | 0.3 + 1000 | 7 | 2.5 + 1000 | 40 | 18 + 1000 | 100* |
| Thiamethoxam | 0.1 | 80 | 0.2 | 100 | 0.4 | 100 |
| Cpd 1 + Thiamethoxam | 0.3 + 0.1 | 53 | 2.5 + 0.1 | 100* | 18 + 0.1 | 87 |
| Cpd 1 + Thiamethoxam | 0.3 + 0.2 | 100 | 2.5 + 0.2 | 93 | 18 + 0.2 | 100 |
| Cpd 1 + Thiamethoxam | 0.3 + 0.4 | 100 | 2.5 + 0.4 | 100 | 18 + 0.4 | 100 |
| Pyridaben | 1 | 0 | 2.5 | 13 | 10 | 100 |
| Cpd 1 + Pyridaben | 0.3 + 1 | 7 | 2.5 + 1 | 13 | 18 + 1 | 100* |
| Cpd 1 + Pyridaben | 0.3 + 2.5 | 0 | 2.5 + 2.5 | 7 | 18 + 2.5 | 100* |
| Cpd 1 + Pyridaben | 0.3 + 10 | 87 | 2.5 + 10 | 60 | 18 + 10 | 100 |
| Flonicamid | 100 | 100 | 400 | 100 | 1000 | 40 |
| Cpd 1 + Flonicamid | 0.3 + 100 | 87 | 2.5 + 100 | 93 | 18 + 100 | 100 |
| Cpd 1 + Flonicamid | 0.3 + 400 | 87 | 2.5 + 400 | 100 | 18 + 400 | 100 |

(continued)

* indicates the observed % mortality is higher than the calculated % mortality by Colby equation.

| Potato Leaf Hopper | rate (ppm) | % mortality (obs) | rate (ppm) | % mortality (obs) | rate (ppm) | % mortality (obs) |
|---|---|---|---|---|---|---|
| Cpd 1 + Flonicamid | 0.3 + 1000 | 100* | 2.5 + 1000 | 10 | 18 + 1000 | 100* |
| Spinosad | 110 | 47 | 30 | 73 | 100 | 80 |
| Cpd 1 + Spinosad | 0.3 + 10 | 40 | 2.5 + 10 | 93* | 18 + 10 | 100* |
| Cpd 1 + Spinosad | 0.3 + 30 | 93* | 2.5 + 30 | 100* | 18 + 30 | 100* |
| Cpd 1 + Spinosad | 0.3 + 100 | 100* | 2.5 + 100 | 100* | 18 + 100 | 100* |
| Fipronil | 0.5 | 7 | 1 | 20 | 1.5 | 27 |
| Cpd 1 + Fipronil | 0.3 + 0.5 | 7 | 2.5 + 0.5 | 40 | 1 + 0.5 | 100* |
| Cpd 1 + Fipronil | 0.3 + 1 | 13 | 2.5 + 1 | 73* | 18 + 1 | 100* |
| Cpd 1 + Fipronil | 0.3 + 1.5 | 10 | 2.5 + 1.5 | 80* | 18 + 1.5 | 100* |
| Pyriproxyfen | 10 | 13 | 100 | 0 | 1000 | 7 |
| Cpd 1 + Pyriproxyfen | 0.3 + 10 | 13 | 2.5 + 10 | 40 | 18 + 10 | 100* |
| Cpd 1 + Pyriproxyfen | 0.3 + 100 | 13 | 2.5 + 100 | 33 | 18 + 100 | 100* |
| Cpd 1 + Pyriproxyfen | 0.3 + 1000 | 27 | 2.5 + 1000 | 27 | 18 + 1000 | 100* |
| Pymetrozine | 2 | 0 | 15 | 13 | 200 | 60 |
| Cpd 1 + Pymetrozine | 0.3 + 2 | 0 | 2.5 + 2 | 20 | 18 + 2 | 100* |
| Cpd 1 + Pymetrozine | 0.3 + 15 | 27 | 2.5 ± 15 | 40 | 18 + 15 | 100* |
| Cpd 1 + Pymetrozine | 0.3 + 200 | 60 | 2.5 + 200 | 100* | 18 + 200 | 100* |
| Buprofezin | 10 | 20 | 100 | 20 | 1000 | 0 |
| Cpd 1 + Buprofezin | 0.3 + 10 | 0 | 2.5 + 10 | 7 | 18 + 10 | 87 |
| Cpd 1 + Buprofezin | 0.3 + 100 | 0 | 2.5 + 100 | 13 | 18 + 100 | 100* |
| Cpd 1 + Buprofezin | 0.3 + 1000 | 0 | 2.5 + 1000 | 27 | 18 + 1000 | 100* |
| Chlorfenapyr | 1 | 73 | 5 | 100 | 20 | 100 |
| Cpd 1 + Chlorfenapyr | 0.3 + 1 | 80 | 2.5 + 1 | 87* | 18 + 1 | 100* |
| Cpd 1 + Chlorfenapyr | 0.3 + 5 | 100 | 2.5 + 5 | 100 | 18+5 | 100 |
| Cpd 1 + Chlorfenapyr | 0.3 + 20 | 87 | 2.5 + 20 | 100 | 18 + 20 | 100 |
| Chlorpyrifos | 10 | 13 | 100 | 0 | 1000 | 7 |
| Cpd 1 + Chlorpyrifos | 0.3 + 10 | 0 | 2.5 + 10 | 0 | 18 + 10 | 93* |
| Cpd 1 + Chlorpyrifos | 0.3 + 100 | 0 | 2.5 + 100 | 7 | 18 + 100 | 100* |

(continued)

* indicates the observed % mortality is higher than the calculated % mortality by Colby equation.

| Potato Leaf Hopper | rate (ppm) | % mortality (obs) | rate (ppm) | % mortality (obs) | rate (ppm) | % mortality (obs) |
|---|---|---|---|---|---|---|
| Cpd 1 + Chlorpyrifos | 0.3 + 1000 | 33* | 2.5 + 1000 | 100* | 18 + 1000 | 100* |
| Cyromazine | 10 | 7 | 100 | 0 | 1000 | 0 |
| Cpd 1 + Cyromazine | 0.3 + 10 | 0 | 2.5 + 10 | 40 | 18 + 10 | 100* |
| Cpd 1 + Cyromazine | 0.3 + 100 | 7 | 2.5 + 100 | 20 | 18 + 100 | 100* |
| Cpd 1 + Cyromazine | 0.3 + 1000 | 7 | 2.5 + 1000 | 47* | 18 + 1000 | 100* |
| Fenoxycarb | 10 | 0 | 100 | 20 | 1000 | 0 |
| Cpd 1 + Fenoxycarb | 0.3 + 10 | 7 | 2.5 + 10 | 53* | 18 + 10 | 100* |
| Cpd 1 + Fenoxycarb | 0.3 + 100 | 0 | 2.5 + 100 | 40 | 18 + 100 | 100* |
| Cpd 1 + Fenoxycarb | 0.3 + 1000 | 0 | 2.5 + 1000 | 27 | 18 + 1000 | 100* |
| Methoprene | 10 | 0 | 100 | 0 | 1000 | 0 |
| Cpd 1 + Methoprene | 0.3 + 10 | 7 | 2.5 + 10 | 33 | 18 + 10 | 100* |
| Cpd 1 + Methoprene | 0.3 + 100 | 40* | 2.5 + 100 | 13 | 18 + 100 | 100* |
| Cpd 1 + Methoprene | 0.3 + 1000 | 13 | 2.5 + 1000 | 100* | 1 + 1000 | 100* |
| Indoxacarb | 0.5 | 33 | 1 | 20 | 2 | 27 |
| Cpd 1 + Indoxacarb | 0.3 + 0.5 | 7 | 2.5 + 0.5 | 27 | 18 + 0.5 | 67 |
| Cpd 1 + Indoxacarb | 0.3 + 1 | 7 | 2.5 + 1 | 33 | 18 + 1 | 100* |
| Cpd 1 + Indoxacarb | 0.3 + 2 | 7 | 2.5 + 2 | 33 | 18 + 2 | 100* |
| Triazamate | 0.5 | 13 | 1 | 0 | 2 | 7 |
| Cpd 1 + Triazamate | 0.3 + 0.5 | 0 | 2.5 + 0.5 | 7 | 18 + 0.5 | 60 |
| Cpd 1 + Triazamate | 0.3 + 1 | 20 | 2.5 + 1 | 7 | 18 + 1 | 93* |
| Cpd I + Triazamate | 0.3 + 2 | 7 | 2.5 + 2 | 33 | 18 + 2 | 100* |
| Thiodicarb | 0.08 | 0 | 0.16 | 20 | 0.4 | 20 |
| Cpd 1 + Thiodicarb | 0.3 + 0.08 | 10 | 2.5 + 0.08 | 87* | 18 + 0.08 | 100* |
| Cpd 1 + Thiodicarb | 0.3 + 0.16 | 0 | 2.5 + 0.16 | 60 | 18 + 0.16 | 100* |
| Cpd 1 + Thiodicarb | 0.3 + 0.4 | 20 | 2.5 + 0.4 | 27 | 18 + 0.4 | 100* |
| Tebufenozide | 3 | 40 | 4 | 27 | 5 | 20 |
| Cpd 1 + Tebufenozide | 0.3 + 3 | 0 | 2.5 + 3 | 20 | 18 + 3 | 100* |

(continued)

* indicates the observed % mortality is higher than the calculated % mortality by Colby equation.

| Potato Leaf Hopper | rate (ppm) | % mortality (obs) | rate (ppm) | % mortality (obs) | rate (ppm) | % mortality (obs) |
|---|---|---|---|---|---|---|
| Cpd 1 + Tebufenozide | 0.3 + 4 | 27 | 2.5 + 4 | 33 | 18 + 4 | 100* |
| Cpd 1 + Tebufenozide | 0.3 + 5 | 20 | 2.5 + 5 | 40 | 18 + 5 | 100* |
| Deltamethrin | 0.1 | 7 | 0.2 | 7 | 1 | 60 |
| Cpd 1 + Deltamethrin | 0.3 + 0.1 | 13 | 2.5 + 0.1 | 40 | 18 + 0.1 | 87 |
| Cpd 1 + Deltamethrin | 0.3 + 0.2 | 20 | 2.5 + 0.2 | 73* | 18 + 0.2 | 100* |
| Cpd 1 + Deltamethrin | 0.3 + 1 | 7 | 2.5 + 1 | 100* | 18 + 1 | 100* |
| Oxamyl | 0.1 | 20 | 2 | 20 | 100 | 100 |
| Cpd 1 + Oxamyl | 0.3 + 0.1 | 0 | 2.5 + 0.1 | 13 | 18 + 0.1 | 93 |
| Cpd 1 + Oxamyl | 0.3 + 2 | 20 | 2.5 + 2 | 27 | 18 + 2 | 100* |
| Cpd 1 + Oxamyl | 0.3 + 100 | 100 | 2.5 + 100 | 100 | + 100 | 100 |
| Hexaflumuron | 100 | 13 | 1000 | 13 | 3000 | 27 |
| Cpd 1 + Hexaflumuron | 0.3 + 100 | 13 | 2.5 + 100 | 27 | 18 + 100 | 93* |
| Cpd 1 + Hexaflumuron | 0.3 + 1000 | 13 | 2.5 + 1000 | 27 | 18 + 1000 | 100* |
| Cpd 1 + Hexaflumuron | 0.3 + 3000 | 0 | 2.5 + 3000 | 33 | 18 + 3000 | 100* |
| Acetamiprid | 1 | 27 | 4 | 60 | 12 | 87 |
| Cpd 1 + Acetamiprid | 0.3 + 1 | 73* | 2.5 + 1 | 7 | 18 + 1 | 100* |
| Cpd 1 + Acetamiprid | 0.3 + 4 | 67 | 2.5 + 4 | 100* | 18 + 4 | 100* |
| Cpd 1 + Acetamiprid | 0.3 + 12 | 93* | 2.5 + 12 | 100* | 18 + 12 | 100* |
| Cartap | 0.1 | 20 | 1 | 73 | 10 | 100 |
| Cpd 1 + Cartap | 0.3 + 0.1 | 20 | 2.5 + 0.1 | 20 | 1 + 0.1 | 100* |
| Cpd 1 + Cartap | 0.3 + 1 | 73 | 2.5 + 1 | 20 | 18 + 1 | 93 |
| Cpd 1 + Cartap | 0.3 + 10 | 100 | 2.5 + 10 | 100 | 18 + 10 | 100 |
| Esfenvalerate | 0.5 | 47 | 1 | 80 | 2 | 27 |
| Cpd 1 + Esfenvalerate | 0.3 + 0.5 | 20 | 2.5 + 0.5 | 33 | 18 + 0.5 | 100* |
| Cpd 1 + Esfenvalerate | 0.3 + 1 | 33 | 2.5 + 1 | 67 | 18 + 1 | 93 |
| Cpd 1 + Esfenvalerate | 0.3 + 2 | 33 | 2.5 + 2 | 67* | 18 + 2 | 100* |
| Thiacloprid | 0.2 | 73 | 0.5 | 93 | 1.5 | 80 |
| Cpd 1 + Thiacloprid | 0.3 + 0.2 | 27 | 2.5 + 0.2 | 53 | 18 + 0.2 | 100* |
| Cpd 1 + Thiacloprid | 0.3 + 0.5 | 53 | 2.5 + 0.5 | 80 | 18 + 0.5 | 80 |
| Cpd 1 + Thiacloprid | 0.3 + 1.5 | 100* | 2.5 + 1.5 | 100* | 18 + 1.5 | 100* |

(continued)

* indicates the observed % mortality is higher than the calculated % mortality by Colby equation.

| Potato Leaf Hopper | rate (ppm) | % mortality (obs) | rate (ppm) | % mortality (obs) | rate (ppm) | % mortality (obs) |
|---|---|---|---|---|---|---|
| Lambda-cyhalothrin | 0.016 | 73 | 0.08 | 0 | 0.4 | 87 |
| Cpd 1 + Lambda-cyhalothrin | 0.3 + 0.016 | 27 | 2.5 + 0.016 | 73 | 18 + 0.016 | 100* |
| Cpd 1 + Lambda-cyhalothrin | 0.3 + 0.08 | 0 | 2.5 + 0.08 | 67* | 18 + 0.08 | 100* |
| Cpd 1 + Lambda-cyhalothrin | 0.3 + 0.4 | 100* | 2.5 + 0.4 | 100* | 18 + 0.4 | 100* |
| Hydramethylnon | 0.01 | 0 | 1 | 27 | 2 | 60 |
| Cpd 1 + Hydramethylnon | 0.3 + 0.01 | 47* | 2.5 + 0.01 | 67* | 18 + 0.01 | 73 |
| Cpd 1 + Hydramethylnon | 0.3 + 1 | 13 | 2.5 + 1 | 27 | 18 + 1 | 100* |
| Cpd 1 + Hydramethylnon | 0.3 + 2 | 7 | 2.5 + 2 | 27 | 18 + 2 | 100* |
| Clothianidin | 10 | 93 | 100 | 100 | 1000 | 100 |
| Cpd 1 + Clothianidin | 0.3 + 10 | 93 | 2.5 + 10 | 100* | 18 + 10 | 100* |
| Cpd 1 + Clothianidin | 0.3 + 100 | 100 | 2.5 + 100 | 100 | 18 + 100 | 100 |
| Cpd 1 + Clothianidin | 0.3 + 1000 | 100 | 2.5 + 1000 | 100 | 18 + 1000 | 100 |
| Lufenuron | 0.08 | 40 | 0.4 | 53 | 2 | 40 |
| Cpd 1 + Lufenuron | 03 + 0.08 | 60* | 2.5 + 0.08 | 80* | 18 + 0.08 | 100* |
| Cpd 1 + Lufenuron | 0.3 + 0.4 | 53 | 2.5 + 0.4 | 73* | 18 + 0.4 | 100* |
| Cpd 1 + Lufenuron | 0.3 + 2 | 47 | 2.5 + 2 | 80* | 18 + 2 | 100* |
| Abamectin | 10 | 47 | 100 | 100 | 1000 | 100 |
| Cpd 1 + Abamectin | 0.3 + 10 | 53 | 2.5 + 10 | 67* | 18 + 10 | 100* |
| Cpd 1 + Abamectin | 0.3 + 100 | 80 | 2.5 + 100 | 87 | 18 + 100 | 100 |
| Cpd 1 + Abamectin | 0.3 + 1000 | 100 | 2.5 + 1000 | 100 | 18 + 1000 | 100 |
| Methoxyfenozide | 0.08 | 13 | 0.4 | 13 | 2 | 20 |
| Cpd 1 + Methoxyfenozide | 0.3 + 0.08 | 7 | 2.5 + 0.08 | 0 | 18 + 0.08 | 100* |
| Cpd 1 + Methoxyfenozide | 0.3 + 0.4 | 20 | 2.5 + 0.4 | 40 | 18 + 0.4 | 93* |

(continued)

* indicates the observed % mortality is higher than the calculated % mortality by Colby equation.

| Potato Leaf Hopper | rate (ppm) | % mortality (obs) | rate (ppm) | % mortality (obs) | rate (ppm) | % mortality (obs) |
|---|---|---|---|---|---|---|
| Cpd 1 + Methoxyfenozide | 0.3 + 2 | 13 | 2.5 + 2 | 40 | 18 + 2 | 100* |
| Nitenpyram | 0.3 | 7 | 0.4 | 73 | 0.5 | 33 |
| Cpd 1 + Nitenpyram | 0.3 + 0.3 | 7 | 2.5 + 0.3 | 7 | 18 + 0.3 | 100* |
| Cpd 1 + Nitenpyram | 0.3 + 0.4 | 47 | 2.5 + 0.4 | 100* | 18 + 0.4 | 100* |
| Cpd 1 + Nitenpyram | 0.3 + 0.5 | 33 | 2.5 + 0.5 | 100* | 18 + 0.5 | 100* |
| Pyridalyl | 0.5 | 13 | 5 | 13 | 50 | 7 |
| Cpd 1 + Pyridalyl | 0.3 + 0.5 | 7 | 2.5 + 0.5 | 13 | 18 + 0.5 | 100 |
| Cpd 1 + Pyridalyl | 0.3 + 5 | 20 | 2.5 + 5 | 20 | 18 + 5 | 100 |
| Cpd 1 + Pyridalyl | 0.3 + 50 | 0 | 2.5 + 50 | 7 | 18 + 50 | 100 |
| Dinotefuran | 0.02 | 7 | 0.08 | 7 | 0.4 | 47 |
| Cpd 1 + Dinotefuran | 0.3 + 0.02 | 7 | 2.5 + 0.02 | 0 | 18 + 0.02 | 100* |
| Cpd 1 + Dinotefuran | 0.3 + 0.08 | 7 | 2.5 + 0.08 | 7 | 18 + 0.08 | 100* |
| Cpd 1 + Dinotefuran | 0.3 + 0.4 | 100* | 2.5 + 0.4 | 100* | 18 + 0.4 | 100* |
| Novaluron | 250 | 7 | 500 | 7 | 1000 | 0 |
| Cpd 1 + Novaluron | 0.3 + 250 | 13 | 2.5 + 250 | 47* | 18 + 250 | 100* |
| Cpd 1 + Novaluron | 0.3 + 500 | 27 | 2.5 + 500 | 40 | 18 + 500 | 100* |
| Cpd 1 + Novaluron | 0.3 + 1000 | 27* | 2.5 + 1000 | 67* | 18 + 1000 | 100* |

TEST D

For evaluating control of corn planthopper (*Peregrinus maidis*) through contact and/or systemic means, each test unit consisted of a small open cylindrical container with a 3- to 4-day-old corn (maize) plant (spike) inside. White sand was added to the top of the soil prior to application. Test compounds were formulated and sprayed with 3 replications as described for Test A. After spraying, the test units were allowed to dry for 1 hour before they were post-infested with 10 to 20 corn planthoppers (18- to 20-day-old nymphs) by sprinkling them onto the sand with a salt shaker. A black, screened cap was placed on the top of each container. The test units were held for 6 days in a growth chamber at 19-21 °C and 50-70% relative humidity. Each test unit was then visually assessed for insect mortality; the results are listed in Tables 5A and 5B.

Table 5A

| Corn Planthopper | | | | |
|---|---|---|---|---|
| Compound 1 (ppm) | Imidacloprid (ppm) | Ratio (b) : (a) | % Mortality (observed) | % Mortality (calculated) |
| 0.3 | 0 | - | 6 | - |
| 3 | 0 | - | 10 | - |
| 30 | 0 | - | 100 | - |

(continued)

| Corn Planthopper | | | | |
|---|---|---|---|---|
| Compound 1 (ppm) | Imidacloprid (ppm) | Ratio (b) : (a) | % Mortality (observed) | % Mortality (calculated) |
| 0 | 0.1 | - | 27 | - |
| 0 | 0.3 | - | 37 | - |
| 0 | 1 | - | 60 | - |
| 0.3 | 0.1 | 1:3 | 3 | 31 |
| 0.3 | 0.3 | 1:1 | 100 | 41 |
| 0.3 | 1 | 3.3:1 | 100 | 62 |
| 3 | 0.1 | 1:30 | 6 | 34 |
| 3 | 0.3 | 1:10 | 75 | 43 |
| 3 | 1 | 1:3 | 100 | 64 |
| 30 | 0.1 | 1:300 | 100 | 100 |
| 30 | 0.3 | 1:100 | 100 | 100 |
| 30 | 1 | 1:30 | 100 | 100 |

Table 5B

* indicates the observed % mortality is higher than the calculated % mortality by Colby equation.

| Corn Plant Hopper | rate % (ppm) | mortality (obs) | rate % (ppm) | mortality (obs) | rate (ppm) | % mortality (obs) |
|---|---|---|---|---|---|---|
| Compound 1 | 0.3 | 15 | 3 | 26 | 30 | 90 |
| Methomyl | 0.5 | 5 | 1 | 21 | 2 | 19 |
| Cpd 1 + Methomyl | 0.3 + 0.5 | 52* | 3 + 0.5 | 89* | 30 + 0.5 | 100* |
| Cpd 1 + Methomyl | 0.3 + 1 | 2 | 3 + 1 | 100* | 30 + 1 | 100* |
| Cpd 1 + Methomyl | 0.3 + 2 | 100* | 3 + 2 | 91* | 30 + 2 | 100* |
| Amitraz | 5 | 6 | 10 | 3 | 50 | 5 |
| Cpd 1 + Amitraz | 0.3 + 5 | 6 | 3 + 5 | 100* | 30 + 5 | 100* |
| Cpd 1 + Amitraz | 0.3 + 10 | 31* | 3 + 10 | 100* | 30 + 10 | 100* |
| Cpd 1 + Amitraz | 0.3 + 50 | 3 | 3 + 50 | 76* | 30 + 50 | 100* |
| Thiamethoxam | 0.2 | 100 | 0.4 | 100 | 0.6 | 100 |
| Cpd 1 + Thiamethoxam | 0.3 + 0.2 | 25 | 3 + 0.2 | 70 | 30 + 0.2 | 86 |
| Cpd 1 + Thiamethoxam | 0.3 + 0.4 | 100 | 3 + 0.4 | 100 | 30 + 0.4 | 100 |
| Cpd 1 + Thiamethoxam | 0.3 + 0.6 | 100 | 3 + 0.6 | 100 | 30 + 0.6 | 100 |
| Pyridaben | 2 | 10 | 2.5 | 2 | 3 | 2 |
| Cpd 1 + Pyridaben | 0.3 + 2 | 3 | 3 + 2 | 13 | 30 + 2 | 100* |
| Cpd 1 + Pyridaben | 0.3 + 2.5 | 16 | 3 + 2.5 | 17 | 30 + 2.5 | 100* |
| Cpd 1 + Pyridaben | 0.3 + 3 | 17 | 3 + 3 | 9 | 30 + 3 | 100* |

(continued)

* indicates the observed % mortality is higher than the calculated % mortality by Colby equation.

| Corn Plant Hopper | rate % (ppm) | mortality (obs) | rate % (ppm) | mortality (obs) | rate (ppm) | % mortality (obs) |
|---|---|---|---|---|---|---|
| Flonicamid | 2 | 52 | 15 | 42 | 150 | 90 |
| Cpd 1 + Flonicamid | 0.3 + 2 | 3 | 3 + 2 | 98* | 30 + 2 | 100* |
| Cpd 1 + Flonicamid | 0.3 + 15 | 46 | 3 + 15 | 100* | 30 + 15 | 100* |
| Cpd 1 + Flonicamid | 0.3 + 150 | 80 | 3 + 150 | 100* | 30 + 150 | 100* |
| Spinosad | 5 | 100 | 10 | 100 | 20 | 100 |
| Cpd 1 + Spinosad | 0.3 + 5 | 100 | 3 + 5 | 100 | 30 + 5 | 100 |
| Cpd 1 + Spinosad | 0.3 + 10 | 74 | 3 + 10 | 100 | 30 + 10 | 100 |
| Cpd 1 + Spinosad | 0.3 + 20 | 100 | 3 + 20 | 100 | 30 + 20 | 100 |
| Fipronil | 0.5 | 5 | 1 | 41 | 1.5 | 15 |
| Cpd 1 + Fipronil | 0.3 + 0.5 | 21 | 3 + 0.5 | 56* | 30 + 0.5 | 100* |
| Cpd 1 + Fipronil | 0.3 + 1 | 34 | 3 + 1 | 38 | 30 + 1 | 100* |
| Cpd 1 + Fipronil | 0.3 + 1.5 | 66* | 3 + 1.5 | 83* | 30 + 1.5 | 95* |
| Pyriproxyfen | 10 | 0 | 100 | 8 | 1000 | 12 |
| Cpd 1 + Pyriproxyfen | 0.3 + 10 | 2 | 3 + 10 | 24 | 30 + 10 | 100* |
| Cpd 1 + Pyriproxyfen | 0.3 + 100 | 23* | 3 + 100 | 31 | 30 + 100 | 100* |
| Cpd 1 + Pyriproxyfen | 0.3 + 1000 | 19 | 3 + 1000 | 33 | 30 + 1000 | 100* |
| Pymetrozine | 2 | 51 | 10 | 29 | 30 | 89 |
| Cpd 1 + Pymetrozine | 0.3 + 2 | 21 | 3 + 2 | 63 | 30 + 2 | 100* |
| Cpd 1 + Pymetrozine | 0.3 + 10 | 31 | 3 + 10 | 85* | 30 + 10 | 100* |
| Cpd 1 + Pymetrozine | 0.3 + 30 | 27 | 3 + 30 | 100* | 30 + 30 | 100* |
| Buprofezin | 10 | 96 | 100 | 97 | 1000 | 98 |
| Cpd 1 + Buprofezin | 0.3 + 10 | 84 | 3 + 10 | 92 | 30 + 10 | 98 |
| Cpd 1 + Buprofezin | 0.3 + 100 | 94 | 3 + 100 | 93 | 30 + 100 | 100 |
| Cpd 1 + Buprofezin | 0.3 + 1000 | 94 | 3 + 1000 | 92 | 30 + 1000 | 100 |
| Chlorfenapyr | 1.5 | 31 | 2.5 | 15 | 3.5 | 11 |
| Cpd 1 + Chlorfenapyr | 0.3 + 1.5 | 53* | 3 + 1.5 | 44 | 30 + 1.5 | 89 |
| Cpd 1 + Chlorfenapyr | 0.3 + 2.5 | 24 | 3 + 2.5 | 25 | 30 + 2.5 | 100* |
| Cpd 1 + Chlorfenapyr | 0.3 + 3.5 | 28 | 3 + 3.5 | 39* | 30 + 3.5 | 100* |
| Chlorpyrifos | 0.1 | 46 | 0.2 | 24 | 0.3 | 19 |

(continued)

* indicates the observed % mortality is higher than the calculated % mortality by Colby equation.

| Corn Plant Hopper | rate % (ppm) | mortality (obs) | rate % (ppm) | mortality (obs) | rate (ppm) | % mortality (obs) |
|---|---|---|---|---|---|---|
| Cpd 1 + Chlorpyrifos | 0.3 + 0.1 | 16 | 3 + 0.1 | 42 | 30 + 0.1 | 89 |
| Cpd 1 + Chlorpyrifos | 0.3 + 0.2 | 21 | 3 + 0.2 | 43 | 30 + 0.2 | 89 |
| Cpd 1 + Chlorpyrifos | 0.3 + 0.3 | 21 | 3 + 0.3 | 39 | 30 + 0.3 | 71 |
| Cyromazine | 200 | 4 | 500 | 8 | 1000 | 8 |
| Cpd 1 + Cyromazine | 0.3 + 200 | 8 | 3 + 200 | 24 | 30 + 200 | 71 |
| Cpd 1 + Cyromazine | 0.3 + 500 | 14 | 3 + 500 | 16 | 30 + 500 | 100* |
| Cpd 1 + Cyromazine | 0.3 + 1000 | 47* | 3 + 1000 | 11 | 30 + 1000 | 100* |
| Fenoxycarb | 10 | 8 | 100 | 2 | 1000 | 5 |
| Cpd 1 + Fenoxycarb | 0.3 + 10 | 100* | 3 + 10 | 100* | 30 + 10 | 100* |
| Cpd 1 + Fenoxycarb | 0.3 + 100 | 35* | 3 + 100 | 51* | 30 + 100 | 100* |
| Cpd 1 + Fenoxycarb | 0.3 + 1000 | 49* | 3 + 1000 | 32* | 30 + 1000 | 100* |
| Methoprene | 15 | 100 | 50 | 65 | 150 | 86 |
| Cpd 1 + Methoprene | 0.3 + 15 | 100 | 3 + 15 | 100 | 30 + 15 | 100 |
| Cpd 1 + Methoprene | 0.3 + 50 | 81* | 3 + 50 | 100* | 30 + 50 | 100* |
| Cpd 1 + Methoprene | 0.3 + 150 | 75 | 3 + 150 | 100* | 30 + 150 | 100* |
| Indoxacarb | 50 | 3 | 500 | 4 | 3000 | 18 |
| Cpd 1 + Indoxacarb | 0.3 + 50 | 10 | 3 + 50 | 4 | 30 + 50 | 100* |
| Cpd 1 + Indoxacarb | 0.3 + 500 | 2 | 3 + 500 | 30* | 30 + 500 | 100* |
| Cpd 1 + Indoxacarb | 0.3 + 3000 | 4 | 3 + 3000 | 6 | 30 + 3000 | 100* |
| Triazamate | 50 | 5 | 75 | 94 | 100 | 94 |
| Cpd 1 + Triazamate | 0.3 + 50 | 7 | 3 + 50 | 16 | 30 + 50 | 100* |
| Cpd 1 + Triazamate | 0.3 + 75 | 100* | 3 + 500 | 100* | 30 + 500 | 100* |
| Cpd 1 + Triazamate | 0.3 + 100 | 70 | 3 + 3000 | 100* | 30 + 3000 | 100* |
| Thiodicarb | 0.08 | 2 | 0.16 | 6 | 0.4 | 7 |
| Cpd 1 + Thiodicarb | 0.3 + 0.08 | 6 | 3 + 0.08 | 61* | 30 + 0.08 | 100* |
| Cpd 1 + Thiodicarb | 0.3 + 0.16 | 16 | 3 + 0.16 | 7 | 30 + 0.16 | 100* |
| Cpd 1 + Thiodicarb | 0.3 + 0.4 | 2 | 3 + 0.4 | 83* | 30 + 0.4 | 100* |

(continued)

* indicates the observed % mortality is higher than the calculated % mortality by Colby equation.

| Corn Plant Hopper | rate % (ppm) | mortality (obs) | rate % (ppm) | mortality (obs) | rate (ppm) | % mortality (obs) |
|---|---|---|---|---|---|---|
| Tebufenozide | 100 | 12 | 1000 | 16 | 3000 | 12 |
| Cpd 1 + Tebufenozide | 0.3 + 100 | 17 | 3 + 100 | 34 | 30 + 100 | 100* |
| Cpd 1 + Tebufenozide | 0.3 + 1000 | 7 | 3 + 1000 | 100* | 30 + 1000 | 100* |
| Cpd 1 + Tebufenozide | 0.3 + 3000 | 29* | 3 + 3000 | 88* | 30 + 3000 | 100* |
| Deltamethrin | 0.1 | 11 | 0.2 | 14 | 0.3 | 7 |
| Cpd 1 + Deltamethrin | 0.3 + 0.1 | 10 | 3 + 0.1 | 8 | 30 + 0.1 | 100* |
| Cpd 1 + Deltamethrin | 0.3 + 0.2 | 9 | 3 + 0.2 | 100* | 30 + 0.2 | 100* |
| Cpd 1 + Deltamethrin | 0.3 + 0.3 | 14 | 3 + 0.3 | 100* | 30 + 0.3 | 100* |
| Oxamyl | 0.08 | 2 | 0.16 | 5 | 0.2 | 6 |
| Cpd 1 + Oxamyl | 0.3 + 0.08 | 5 | 3 + 0.08 | 12 | 30 + 0.08 | 100* |
| Cpd 1 + Oxamyl | 0.3 + 0.16 | 16 | 3 + 0.16 | 13 | 30 + 0.16 | 100* |
| Cpd 1 + Oxamyl | 0.3 + 0.2 | 2 | 3 + 0.2 | 10 | 30 + 0.2 | 100* |
| Hexaflumuron | 100 | 6 | 1000 | 5 | 3000 | 4 |
| Cpd 1 + Hexaflumuron | 0.3 + 100 | 12 | 3 + 100 | 6 | 30 + 100 | 100* |
| Cpd 1 + Hexaflumuron | 0.3 + 1000 | 17 | 3 + 1000 | 6 | 30 + 1000 | 100* |
| Cpd 1 + Hexaflumuron | 0.3 + 3000 | 6 | 3 + 3000 | 10 | 30 + 3000 | 100* |
| Acetamiprid | 0.3 | 43 | 0.4 | 85 | 0.5 | 100 |
| Cpd 1 + Acetamiprid | 0.3 + 0.3 | 82* | 3 + 0.3 | 59* | 30 + 0.3 | 100* |
| Cpd 1 + Acetamiprid | 0.3 + 0.4 | 97* | 3 + 0.4 | 100* | 30 + 0.4 | 100* |
| Cpd 1 + Acetamiprid | 0.3 + 0.5 | 100 | 3 + 0.5 | 100 | 30 + 0.5 | 100 |
| Cartap | 0.3 | 100 | 3 | 100 | 30 | 100 |
| Cpd 1 + Cartap | 0.3 + 0.3 | 100 | 3 + 0.3 | 100 | 30 + 0.3 | 100 |
| Cpd 1 + Cartap | 0.3 + 3 | 100 | 3 + 3 | 100 | 30 + 3 | 100 |
| Cpd 1 + Cartap | 0.3 + 30 | 100 | 3 + 30 | 100 | 30 + 30 | 100 |
| Esfenvalerate | 0.1 | 7 | 0.3 | 6 | 0.9 | 6 |
| Cpd 1 + Esfenvalerate | 0.3 + 0.1 | 5 | 3 + 0.1 | 6 | 30 + 0.1 | 100* |
| Cpd 1 + Esfenvalerate | 0.3 + 0.3 | 6 | 3 + 0.3 | 91* | 30 + 0.3 | 100* |
| Cpd 1 + Esfenvalerate | 0.3 + 0.9 | 5 | 3 + 0.9 | 16 | 30 + 0.9 | 100* |
| Thiacloprid | 0.3 | 6 | 3 | 100 | 30 | 100 |
| Cpd 1 + Thiacloprid | 0.3 + 0.3 | 81* | 3 + 0.3 | 100* | 30 + 0.3 | 100* |

(continued)

* indicates the observed % mortality is higher than the calculated % mortality by Colby equation.

| Corn Plant Hopper | rate % (ppm) | mortality (obs) | rate % (ppm) | mortality (obs) | rate (ppm) | % mortality (obs) |
|---|---|---|---|---|---|---|
| Cpd 1 + Thiacloprid | 0.3 + 3 | 100 | 3 + 3 | 100 | 30 + 3 | 100 |
| Cpd 1 + Thiacloprid | 0.3 + 30 | 100 | 3 + 30 | 100 | 30 + 30 | 100 |
| Lambda-cyhalothrin | 0.016 | 7 | 0.08 | 7 | 0.4 | 28 |
| Cpd 1 + Lambda-cyhalothrin | 0.3 + 0.016 | 10 | 3 + 0.016 | 25 | 30 + 0.016 | 100* |
| Cpd 1 + Lambda-cyhalothrin | 0.3 + 0.08 | 5 | 3 + 0.08 | 24 | 30 + 0.08 | 100* |
| Cpd 1 + Lambda-cyhalothrin | 0.3 + 0.4 | 100* | 3 + 0.4 | 73* | 30 + 0.4 | 100* |
| Hydramethylnon | 0.01 | 7 | 1 | 1 | 2 | 6 |
| Cpd 1 + Hydramethylnon | 0.3 + 0.01 | 7 | 3 + 0.01 | 20 | 30 + 0.01 | 100* |
| Cpd 1 + Hydramethylnon | 0.3 + 1 | 6 | 3 + 1 | 5 | 30 + 1 | 100* |
| Cpd 1 + Hydramethylnon | 0.3 + 2 | 2 | 3 + 2 | 29 | 30 + 2 | 100* |
| Clothianidin | 10 | 100 | 100 | 100 | 1000 | 100 |
| Cpd 1 + Clothianidin | 0.3 + 10 | 100 | 3 + 10 | 100 | 30 + 10 | 100 |
| Cpd 1 + Clothianidin | 0.3 + 100 | 100 | 3 + 100 | 100 | 30 + 100 | 100 |
| Cpd 1 + Clothianidin | 0.3 + 1000 | 100 | 3 + 1000 | 100 | 30 + 1000 | 100 |
| Lufenuron | 0.08 | 9 | 0.4 | 7 | 2 | 7 |
| Cpd 1 + Lufenuron | 0.3 + 0.08 | 4 | 3 + 0.08 | 8 | 30 + 0.08 | 89 |
| Cpd 1 + Lufenuron | 0.3 + 0.4 | 7 | 3 + 0.4 | 5 | 30 + 0.4 | 100* |
| Cpd 1 + Lufenuron | 0.3+2 | 3 | 3+2 | 3 | 30+2 | 100* |
| Abamectin | 1.6 | 7 | 8 | 93 | 40 | 100 |
| Cpd 1 + Abamectin | 0.3 + 1.6 | 2 | 3 + 1.6 | 7 | 30 + 1.6 | 100* |
| Cpd 1 + Abamectin | 0.3 + 8 | 100* | 3 + 8 | 92 | 30 + 8 | 100* |
| Cpd 1 + Abamectin | 0.3 + 40 | 100 | 3 + 40 | 100 | 30 + 40 | 100 |
| Methoxyfenozide | 10 | 7 | 100 | 2 | 1000 | 10 |
| Cpd 1 + Methoxyfenozide | 0.3 + 10 | 9 | 3 + 10 | 6 | 30 + 10 | 97 |

(continued)

* indicates the observed % mortality is higher than the calculated % mortality by Colby equation.

| Corn Plant Hopper | rate % (ppm) | mortality (obs) | rate % (ppm) | mortality (obs) | rate (ppm) | % mortality (obs) |
|---|---|---|---|---|---|---|
| Cpd 1 + Methoxyfenozide | 0.3 + 100 | 7 | 3 + 100 | 7 | 30 + 100 | 100 |
| Cpd 1 + Methoxyfenozide | 0.3 + 1000 | 6 | 3 + 1000 | 23 | 30 + 1000 | 100 |
| Nitenpyram | 0.1 | 27 | 0.2 | 100 | 0.3 | 100 |
| Cpd 1 + Nitenpyram | 0.3 + 0.1 | 100* | 3 + 0.1 | 83* | 30 + 0.1 | 90 |
| Cpd 1 + Nitenpyram | 0.3 + 0.2 | 100 | 3 + 0.2 | 100 | 30 + 0.2 | 100 |
| Cpd 1 + Nitenpyram | 0.3 + 0.3 | 100 | 3 + 0.3 | 100 | 30 + 0.3 | 100 |
| Pyridalyl | 10 | 2 | 100 | 6 | 1000 | 11 |
| Cpd 1 + Pyridalyl | 0.3 + 10 | 8 | 3 + 10 | 9 | 30 + 10 | 100* |
| Cpd 1 + Pyridalyl | 0.3 + 100 | 7 | 3 + 100 | 14 | 30 + 100 | 100* |
| Cpd 1 + Pyridalyl | 0.3 + 1000 | 5 | 3 + 1000 | 16 | 30 + 1000 | 100* |
| Dinotefuran | 0.02 | 5 | 0.08 | 5 | 0.4 | 86 |
| Cpd 1 + Dinotefuran | 0.3 + 0.02 | 6 | 3 + 0.02 | 4 | 30 + 0.02 | 100* |
| Cpd 1 + Dinotefuran | 0.3 + 0.08 | 8 | 3 + 0.08 | 68* | 30 + 0.08 | 100* |
| Cpd 1 + Dinotefuran | 0.3 + 0.4 | 89* | 3 + 0.4 | 100* | 30 + 0.4 | 100* |
| Novaluron | 250 | 7 | 500 | 5 | 1000 | 100 |
| Cpd 1 + Novaluron | 0.3 + 250 | 4 | 3 + 250 | 100* | 30 + 250 | 100* |
| Cpd 1 + Novaluron | 0.3 + 500 | 3 | 3 + 500 | 100* | 30 + 500 | 100* |
| Cpd 1 + Novaluron | 0.3 + 1000 | 12 | 3 + 1000 | 100 | 30 + 1000 | 100 |

TEST E

For evaluating control of cotton melon aphid (*Aphis gossypii* Glover) through contact and/or systemic means, each test unit consisted of a small open container with a 6- to 7-day-old cotton plant inside. This was pre-infested by placing on a leaf of the test plant 30 to 40 aphids on a piece of leaf excised from a culture plant (cut-leaf method). The larvae moved onto the test plant as the leaf piece desiccated. After pre-infestation, the soil of the test unit was covered with a layer of sand.

Test compounds were formulated and sprayed as described for Test A. The applications were replicated three times. After spraying of the formulated test compounds, each test unit was allowed to dry for 1 hour and then a black, screened cap was placed on top. The test units were held for 6 days in a growth chamber at 19-21 °C and 50-70% relative humidity. Each test unit was then visually assessed for insect mortality; the results are listed in Tables 6A and 6B.

Table 6A

| Cotton/ Melon Aphid | | | | | |
|---|---|---|---|---|---|
| Compound 1 (ppm) | Imidacloprid (ppm) | Thiamethoxam (ppm) | Ratio (b) : (a) | % Mortality (observed) | % Mortality (calculated) |
| 0.08 | - | - | - | 15 | - |
| 0.4 | - | - | - | 18 | - |
| 1.8 | - | - | - | 66 | - |
| - | 0.05 | - | - | 12 | - |
| - | 0.3 | - | - | 10 | - |
| - | 2.1 | - | - | 40 | - |
| - | - | 0.5 | - | 22 | - |
| - | - | 0.8 | - | 83 | - |
| - | - | 1 | - | 91 | - |
| 0.08 | 0.05 | - | 1:1.6 | 18 | 25 |
| 0.08 | 0.3 | - | 3.8:1 | 46 | 23 |
| 0.08 | 2.1 | - | 26:1 | 94 | 49 |
| 0.4 | 0.05 | - | 1:8 | 12 | 28 |
| 0.4 | 0.3 | - | 1:1.3 | 37 | 27 |
| 0.4 | 2.1 | - | 5.3:1 | 97 | 51 |
| 1.8 | 0.05 | - | 1:36 | 75 | 70 |
| 1.8 | 0.3 | - | 1:6 | 77 | 69 |
| 1.8 | 2.1 | - | 1.2:1 | 97 | 80 |
| 0.08 | - | 0.5 | 6.3:1 | 56 | 33 |
| 0.08 | - | 0.8 | 10:1 | 84 | 85 |
| 0.08 | - | 1 | 12.5:1 | 93 | 92 |
| 0.4 | - | 0.5 | 1.3:1 | 74 | 36 |
| 0.4 | - | 0.8 | 2:1 | 78 | 86 |
| 0.4 | - | 1 | 2.5:1 | 96 | 93 |
| 1.8 | - | 0.5 | 1:3.6 | 79 | 73 |
| 1.8 | - | 0.8 | 1:2.3 | 97 | 94 |
| 1.8 | - | 1 | 1:1.8 | 100 | 97 |

Table 6B

* indicates the observed % mortality is higher than the calculated % mortality by Colby equation.

| Cotton/Melon Aphid | rate (ppm) | % mortality (obs) | rate (ppm) | % mortality (obs) | rate (ppm) | % mortality (obs) |
|---|---|---|---|---|---|---|
| Compound 1 | 0.1 | 22 | 0.5 | 37 | 2 | 76 |
| Methomyl | 2 | 11 | 5 | 35 | 15 | 64 |
| Cpd 1 + Methomyl | 0.1 + 2 | 13 | 0.5 + 2 | 12 | 2 + 2 | 50 |
| Cpd 1 + Methomyl | 0.1 + 5 | 36 | 0.5 + 5 | 39 | 2 + 5 | 66 |

(continued)

* indicates the observed % mortality is higher than the calculated % mortality by Colby equation.

| Cotton/Melon Aphid | rate (ppm) | % mortality (obs) | rate (ppm) | % mortality (obs) | rate (ppm) | % mortality (obs) |
|---|---|---|---|---|---|---|
| Cpd 1 + Methomyl | 0.1 + 15 | 78* | 0.5 + 15 | 79* | 2 + 15 | 100* |
| Amitraz | 10 | 20 | 100 | 35 | 1000 | 29 |
| Cpd 1 + Amitraz | 0.1 + 10 | 14 | 0.5 + 10 | 28 | 2 + 10 | 57 |
| Cpd 1 + Amitraz | 0.1 + 100 | 34 | 0.5 + 100 | 55 | 2 + 100 | 55 |
| Cpd 1 + Amitraz | 0.1 + 1000 | 21 | 0.5 + 1000 | 50 | 2 + 1000 | 92* |
| Thiamethoxam | 0.2 | 24 | 0.4 | 48 | 0.6 | 66 |
| Cpd 1 + Thiamethoxam | 0.1 + 0.2 | 22 | 0.5 + 0.2 | 30 | 2 + 0.2 | 30 |
| Cpd 1 + Thiamethoxam | 0.1 + 0.4 | 56 | 0.5 + 0.4 | 79* | 2 + 0.4 | 78 |
| Cpd 1 + Thiamethoxam | 0.1 + 0.6 | 96* | 0.5 + 0,6 | 82* | 2 + 0.6 | 65 |
| Pyridaben | 1 | 11 | 2 | 15 | 10 | 71 |
| Cpd 1 + Pyridaben | 0.1 + 1 | 17 | 0.5 + 1 | 30 | 2 + 1 | 39 |
| Cpd 1 + Pyridaben | 0.1 + 2 | 22 | 0.5 + 2 | 55* | 2 + 2 | 90* |
| Cpd 1 + Pyridaben | 0.1 + 10 | 29 | 0.5 + 10 | 100* | 2 + 10 | 92 |
| Flonicamid | 0.2 | 9 | 1 | 46 | 5 | 92 |
| Cpd 1 + Flonicamid | 0.1+ 0.2 | 21 | 0.5 + 0.2 | 22 | 2 + 0.2 | 83* |
| Cpd 1 + Flonicamid | 0.1 + 1 | 40 | 0.5 + 1 | 43 | 2 + 1 | 100* |
| Cpd 1 + Flonicamid | 0.1 + 5 | 93 | 0.5 + 5 | 100* | 2 + 5 | 100* |
| Spinosad | 10 | 16 | 100 | 35 | 1000 | 30 |
| Cpd 1 + Spinosad | 0.1 + 10 | 21 | 0.5 + 10 | 47 | 2 + 10 | 71 |
| Cpd 1 + Spinosad | 0.1 + 100 | 20 | 0.5 + 100 | 66* | 2 + 100 | 79 |
| Cpd 1 + Spinosad | 0.1 + 1000 | 18 | 0.5 + 1000 | 41 | 2 + 1000 | 96* |
| Fipronil | 2 | 14 | 4 | 44 | 8 | 69 |
| Cpd 1 + Fipronil | 0.1 + 2 | 23 | 0.5 + 2 | 27 | 2 + 2 | 56 |
| Cpd 1 + Fipronil | 0.1 + 4 | 40 | 0.5 + 4 | 80* | 2 + 4 | 97* |
| Cpd 1 + Fipronil | 0.1 + 8 | 73 | 0.5 + 8 | 85* | 2 + 8 | 100* |
| Pyriproxyfen | 10 | 14 | 100 | 28 | 1000 | 33 |
| Cpd 1 + Pyriproxyfen | 0.1 + 10 | 19 | 0.5 + 10 | 23 | 2 + 10 | 46 |
| Cpd 1 + Pyriproxyfen | 0.1 + 100 | 31 | 0.5 + 100 | 31 | 2 + 100 | 60 |
| Cpd 1 + Pyriproxyfen | 0.1 + 1000 | 22 | 0.5 + 1000 | 27 | 2 + 1000 | 77 |
| Pymetrozine | 0.1 | 22 | 0.5 | 38 | 2 | 62 |

(continued)

* indicates the observed % mortality is higher than the calculated % mortality by Colby equation.

| Cotton/Melon Aphid | rate (ppm) | % mortality (obs) | rate (ppm) | % mortality (obs) | rate (ppm) | % mortality (obs) |
|---|---|---|---|---|---|---|
| Cpd 1 + Pymetrozine | 0.1 + 0.1 | 23 | 0.5 + 0.1 | 46 | 2 + 0.1 | 87* |
| Cpd 1 + Pymetrozine | 0.1 + 0.5 | 48 | 0.5 + 0.5 | 80* | 2 + 0.5 | 93* |
| Cpd 1 + Pymetrozine | 0.1 + 2 | 64 | 0.5 + 2 | 100* | 2 + 2 | 100* |
| Buprofezin | 10 | 34 | 100 | 30 | 1000 | 36 |
| Cpd 1 + Buprofezin | 0.1 + 10 | 26 | 0.5 + 10 | 29 | 2 + 10 | 93* |
| Cpd 1 + Buprofezin | 0.1 + 100 | 32 | 0.5 + 100 | 44 | 2 + 100 | 90* |
| Cpd 1 + Buprofezin | 0.1 + 1000 | 34 | 0.5 + 1000 | 41 | 2 + 1000 | 100* |
| Chlorfenapyr | 1 | 27 | 10 | 57 | 150 | 67 |
| Cpd 1 + Chlorfenapyr | 0.1 + 1 | 31 | 0.5 + 1 | 35 | 2 + 1 | 70 |
| Cpd 1 + Chlorfenapyr | 0.1 + 10 | 21 | 0.5 + 10 | 82* | 2 + 10 | 71 |
| Cpd 1 + Chlorfenapyr | 0.1 + 150 | 86* | 0.5 + 150 | 96* | 2 + 150 | 100* |
| Chlorpyrifos | 1 | 26 | 5 | 14 | 50 | 13 |
| Cpd 1 + Chlorpyrifos | 0.1 + 1 | 16 | 0.5 + 1 | 26 | 2 + 1 | 59 |
| Cpd 1 + Chlorpyrifos | 0.1 + 5 | 21 | 0.5 + 5 | 52* | 2 + 5 | 68 |
| Cpd 1 + Chlorpyrifos | 0.1 + 50 | 20 | 0.5 + 50 | 49* | 2 + 50 | 79 |
| Cyromazine | 10 | 23 | 100 | 34 | 1000 | 28 |
| Cpd 1 + Cyromazine | 0.1 + 10 | 25 | 0.5 + 10 | 60* | 2 + 10 | 49 |
| Cpd 1 + Cyromazine | 0.1 + 100 | 29 | 0.5 + 100 | 34 | 2 + 100 | 79 |
| Cpd 1 + Cyromazine | 0.1 + 1000 | 23 | 0.5 + 1000 | 41 | 2 + 1000 | 60 |
| Fenoxycarb | 10 | 16 | 100 | 23 | 1000 | 34 |
| Cpd 1 + Fenoxycarb | 0.1 + 10 | 29 | 0.5 + 10 | 72* | 2 + 10 | 78 |
| Cpd 1 + Fenoxycarb | 0.1 + 100 | 25 | 0.5 + 100 | 50 | 2 + 100 | 87* |
| Cpd 1 + Fenoxycarb | 0.1 + 1000 | 60* | 0.5 + 1000 | 72* | 2 + 1000 | 75 |
| Methoprene | 10 | 43 | 100 | 53 | 1000 | 50 |
| Cpd 1 + Methoprene | 0.1 + 10 | 50 | 20 + 10 | 50 | 2 + 10 | 70 |
| Cpd 1 + Methoprene | 0.1 + 100 | 41 | 20 + 100 | 80* | 2 + 100 | 100* |
| Cpd 1 + Methoprene | 0.1 + 1000 | 60 | 0.5 + 1000 | 90* | 2 + 1000 | 100* |

(continued)

* indicates the observed % mortality is higher than the calculated % mortality by Colby equation.

| Cotton/Melon Aphid | rate (ppm) | % mortality (obs) | rate (ppm) | % mortality (obs) | rate (ppm) | % mortality (obs) |
|---|---|---|---|---|---|---|
| Indoxacarb | 10 | 16 | 20 | 28 | 30 | 34 |
| Cpd 1 + Indoxacarb | 0.1 + 10 | 15 | 0.5 + 10 | 32 | 2 + 10 | 75 |
| Cpd 1 + Indoxacarb | 0.1 + 20 | 36 | 0.5 + 20 | 47 | 2 + 20 | 100* |
| Cpd 1 + Indoxacarb | 0.1 + 30 | 41 | 0.5 + 30 | 37 | 2 + 30 | 100* |
| Triazamate | 2 | 17 | 20 | 59 | 100 | 100 |
| Cpd 1 + Triazamate | 0.1 + 2 | 20 | 0.5 + 2 | 26 | 2 + 2 | 34 |
| Cpd 1 + Triazamate | 0.1 + 20 | 45 | 0.5 + 20 | 25 | 2 + 20 | 42 |
| Cpd 1 + Triazamate | 0.1 + 100 | 100 | 0.5 + 100 | 100 | 2 + 100 | 100 |
| Thiodicarb | 3 | 49 | 10 | 32 | 30 | 69 |
| Cpd 1 + Thiodicarb | 0.1 + 3 | 48 | 0.5 + 3 | 51 | 2 + 3 | 68 |
| Cpd 1 + Thiodicarb | 0.1 + 10 | 44 | 0.5 + 10 | 61* | 2 + 10 | 72 |
| Cpd 1 + Thiodicarb | 0.1 + 30 | 58 | 0.5 + 30 | 85* | 2 + 30 | 95* |
| Tebufenozide | 0.5 | 21 | 1.5 | 37 | 3 | 22 |
| Cpd 1 + Tebufenozide | 0.1 + 0.5 | 26 | 0.5 + 0.5 | 30 | 2 + 0.5 | 67 |
| Cpd 1 + Tebufenozide | 0.1 + 1.5 | 29 | 0.5 + 1.5 | 27 | 2 + 1.5 | 67 |
| Cpd 1 + Tebufenozide | 0.1 + 3 | 15 | 0.5 + 3 | 19 | 2 + 3 | 79 |
| Deltamethrin | 0.1 | 52 | 0.2 | 39 | 0.3 | 88 |
| Cpd 1 + Deltamethrin | 0.1 + 0.1 | 34 | 0.5 + 0.1 | 27 | 2 + 0.1 | 41 |
| Cpd 1 + Deltamethrin | 0.1 + 0.2 | 30 | 0.5 + 0.2 | 34 | 2 + 0.2 | 43 |
| Cpd 1 + Deltamethrin | 0.1 + 0.3 | 26 | 0.5 + 0.3 | 24 | 2 + 0.3 | 97 |
| Oxamyl | 1 | 29 | 10 | 37 | 1000 | 100 |
| Cpd 1 + Oxamyl | 0.1 + 1 | 33 | 0.5 + 1 | 44 | 2 + 1 | 97* |
| Cpd 1 + Oxamyl | 0.1 + 10 | 29 | 0.5 + 10 | 44 | 2 + 10 | 93* |
| Cpd 1 + Oxamyl | 0.1 + 1000 | 100 | 0.5 + 1000 | 100 | 2 + 1000 | 100 |
| Hexaflumuron | 30 | 32 | 1000 | 30 | 3000 | 29 |
| Cpd 1 + Hexaflumuron | 0.1 + 30 | 59* | 0.5 + 30 | 67* | 100 + 30 | 75 |
| Cpd 1 + Hexaflumuron | 0.1 + 1000 | 46* | 0.5 + 1000 | 44 | 100 + 1000 | 79 |
| Cpd 1 + Hexaflumuron | 0.1 + 3000 | 34 | 0.5 + 3000 | 34 | 100 + 3000 | 75 |
| Acetamiprid | 0.02 | 42 | 0.08 | 67 | 0.4 | 100 |

(continued)

* indicates the observed % mortality is higher than the calculated % mortality by Colby equation.

| Cotton/Melon Aphid | rate (ppm) | % mortality (obs) | rate (ppm) | % mortality (obs) | rate (ppm) | % mortality (obs) |
|---|---|---|---|---|---|---|
| Cpd 1 + Acetamiprid | 0.1 + 0.02 | 45 | 0.5 + 0.02 | 41 | 2 + 0.02 | 74 |
| Cpd 1 + Acetamiprid | 0.1 + 0.08 | 56 | 0.5 + 0.08 | 45 | 2 + 0.08 | 73 |
| Cpd 1 + Acetamiprid | 0.1 + 0.4 | 100 | 0.5 + 0.4 | 98 | 2 + 0.4 | 100 |
| Cartap | 0.2 | 29 | 2 | 34 | 200 | 83 |
| Cpd 1 + Cartap | 0.1 + 0.2 | 52* | 0.5 + 0.2 | 55 | 2 + 0.2 | 79 |
| Cpd 1 + Cartap | 0.1 + 2 | 32 | 0.5+2 | 53 | 2+2 | 94* |
| Cpd 1 + Cartap | 0.1 + 200 | 100* | 0.5 + 200 | 80 | 2 + 200 | 98* |
| Esfenvalerate | 0.1 | 95 | 0.3 | 94 | 1 | 100 |
| Cpd 1 + Esfenvalerate | 0.1 + 0.1 | 58 | 0.5 + 0.1 | 64 | 2 + 0.1 | 75 |
| Cpd 1 + Esfenvalerate | 0.1 + 0.3 | 69 | 0.5 + 0.3 | 76 | 2 + 0.3 | 100* |
| Cpd 1 + Esfenvalerate | 0.1 + 1 | 51 | 0.5 + 1 | 90 | 2 + 1 | 100 |
| Thiacloprid | 0.3 | 50 | 1.5 | 100 | 6 | 100 |
| Cpd 1 + Thiacloprid | 0.1 + 0.3 | 64* | 0.5 + 0.3 | 84* | 2 + 0.3 | 94* |
| Cpd 1 + Thiacloprid | 0.1 + 1.5 | 96 | 0.5 + 1.5 | 100 | 2 + 1.5 | 96 |
| Cpd 1 + Thiacloprid | 0.1 + 6 | 100 | 0.5 + 6 | 100 | 2 + 6 | 100 |
| Lambda-cyhalothrin | 0.08 | 22 | 0.4 | 81 | 2 | 100 |
| Cpd 1 + Lambda-cyhalothrin | 0.1 + 0.08 | 20 | 0.5 + 0.08 | 28 | 2 + 0.08 | 71 |
| Cpd 1 + Lambda-cyhalothrin | 0.1 + 0.4 | 100* | 0.5 + 0.4 | 78 | 2 + 0.4 | 84 |
| Cpd 1 + Lambda-cyhalothrin | 0.1 + 2 | 100 | 0.5 + 2 | 100 | 2 + 2 | 100 |
| Hydramethylnon | 500 | 21 | 1000 | 40 | 1500 | 39 |
| Cpd 1 + Hydramethylnon | + 500 | 37 | 0.5 + 500 | 39 | 2 + 500 | 78 |
| Cpd 1 + Hydramethylnon | + 1000 | 38 | 0.5 + 1000 | 36 | 2 + 1000 | 68 |
| Cpd 1 + Hydramethylnon | + 1500 | 49 | 0.5 + 1500 | 41 | 2 + 1500 | 75 |
| Clothianidin | 0.08 | 75 | 0.4 | 91 | 2 | 99 |
| Cpd 1 + Clothianidin | 0.1 + 0.08 | 92* | 0.5 + 0.08 | 79 | 2 + 0.08 | 100* |
| Cpd 1 + Clothianidin | 0.1 + 0.4 | 77 | 0.5 + 0.4 | 89 | 2 + 0.4 | 93 |

(continued)

* indicates the observed % mortality is higher than the calculated % mortality by Colby equation.

| Cotton/Melon Aphid | rate (ppm) | % mortality (obs) | rate (ppm) | % mortality (obs) | rate (ppm) | % mortality (obs) |
|---|---|---|---|---|---|---|
| Cpd 1 + Clothianidin | 0.1 + 2 | 100* | 0.5 + 2 | 68 | 2 + 2 | 100 |
| Lufenuron | 0.08 | 28 | 0.4 | 39 | 2 | 58 |
| Cpd 1 + Lufenuron | 0. 1 + 0.08 | 43 | 0.5 + 0.08 | 26 | 2 + 0.08 | 69 |
| Cpd 1 + Lufenuron | 0.1 + 0.4 | 36 | 0.5 + 0.4 | 41 | 2 + 0.4 | 91* |
| Cpd 1 + Lufenuron | 0.1 + 2 | 38 | 0.5 + 2 | 47 | 2 + 2 | 95* |
| Abamectin | 0.08 | 35 | 0.4 | 58 | 2 | 100 |
| Cpd 1 + Abamectin | 0.1 + 0.08 | 48 | 0.5 + 0.08 | 51 | 2 + 0.08 | 63 |
| Cpd 1 + Abamectin | 0.1 + 0.4 | 73* | 0.5 + 0.4 | 57 | 2 + 0.4 | 100* |
| Cpd 1 + Abamectin | 0.1 + 2 | 97 | 0.5 + 2 | 97 | 2 + 2 | 100 |
| Methoxyfenozide | 5 | 22 | 50 | 20 | 500 | 26 |
| Cpd 1 + Methoxyfenozide | 0.1 + 5 | 31 | 0.5 + 5 | 17 | 2 + 5 | 42 |
| Cpd 1 + Methoxyfenozide | 0.1 + 50 | 24 | 0.5 + 50 | 30 | 2 + 50 | 57 |
| Cpd 1 + Methoxyfenozide | 0.1 + 500 | 13 | 0.5 + 500 | 46 | 2 + 500 | 76 |
| Nitenpyram | 0.2 | 29 | 0.4 | 49 | 0.6 | 71 |
| Cpd 1 + Nitenpyram | + 0.2 | 17 | 0.5 + 0.2 | 29 | 2 + 0.2 | 51 |
| Cpd 1 + Nitenpyram | + 0.4 | 67* | 0.5 + 0.4 | 58 | 2 + 0.4 | 95* |
| Cpd 1 + Nitenpyram | + 0.6 | 81* | 0.5 + 0.6 | 83* | 2 + 0.6 | 96* |
| Pyridalyl | 1 | 22 | 1.5 | 34 | 2 | 32 |
| Cpd 1 + Pyridalyl | + 1 | 23 | 0.5 + 1 | 39 | 2 + 1 | 67 |
| Cpd 1 + Pyridalyl | + 1.5 | 38 | 0.5 + 1.5 | 32 | 2 + 1.5 | 95* |
| Cpd 1 + Pyridalyl | + 2 | 19 | 0.5 + 2 | 43 | 2 + 2 | 88* |
| Dinotefuran | 1 | 31 | 2 | 64 | 5 | 92 |
| Cpd 1 + Dinotefuran | + 1 | 62* | 0.5 + 1 | 49 | 2 + 1 | 60 |
| Cpd 1 + Dinotefuran | + 2 | 79* | 0.5 + 2 | 68 | 2 + 2 | 77 |
| Cpd 1 + Dinotefuran | + 5 | 100* | 0.5 + 5 | 89 | 2 + 5 | 90 |
| Novaluron | 50 | 28 | 250 | 30 | 1000 | 29 |

(continued)

* indicates the observed % mortality is higher than the calculated % mortality by Colby equation.

| Cotton/Melon Aphid | rate (ppm) | % mortality (obs) | rate (ppm) | % mortality (obs) | rate (ppm) | % mortality (obs) |
|---|---|---|---|---|---|---|
| Cpd 1 + Novaluron | + 50 | 24 | 0.5 + 50 | 53 | 2 + 50 | 90* |
| Cpd 1 + Novaluron | + 250 | 25 | 0.5 + 250 | 44 | 2 + 250 | 100* |
| Cpd 1 + Novaluron | + 1000 | 39 | 0.5 + 1000 | 51 | 2 + 1000 | 94* |

TEST F

For evaluating control of green peach aphid (*Myzus persicae* Sulzer) through contact and/or systemic means, each test unit consisted of a small open container with a 12- to 15-day-old radish plant inside. This was pre-infested by placing on a leaf of the test plant 30 to 40 aphids on a piece of leaf excised from a culture plant (cut-leaf method). The larvae moved onto the test plant as the leaf piece desiccated. After pre-infestation, the soil of the test unit was covered with a layer of sand.

Test compounds were formulated and sprayed as described in Test A, replicated three times. After spraying of the formulated test compound, each test unit was allowed to dry for 1 hour and then a black, screened cap was placed on top. The test units were held for 6 days in a growth chamber at 19-21 °C and 50-70% relative humidity. Each test unit was then visually assessed for insect mortality; the results are listed in Tables 7A and 7B.

Table 7A

| Green Peach Aphid | | | | | |
|---|---|---|---|---|---|
| Compound 1 (ppm) | Imidacloprid (ppm) | Thiamethoxam (ppm) | Ratio (b): (a) | % Mortality (observed) | % Mortality (calculated) |
| 0.5 | - | - | - | 14 | - |
| 1.1 | - | - | - | 22 | - |
| 2.1 | - | - | - | 49 | - |
| - | 0.08 | - | - | 4 | - |
| - | 0.15 | - | - | 12 | - |
| - | 0.3 | - | - | 50 | - |
| - | - | 0.2 | - | 23 | - |
| - | - | 0.3 | - | 23 | - |
| - | - | 0.5 | - | 93 | - |
| 0.5 | 0.08 | - | 1:6.3 | 9 | 17 |
| 0.5 | 0.15 | - | 1:3.3 | 37 | 24 |
| 0.5 | 0.3 | - | 1:1.7 | 76 | 57 |
| 1.1 | 0.08 | - | 1:13.8 | 45 | 26 |
| 1.1 | 0.15 | - | 1:7.3 | 86 | 32 |
| 1.1 | 0.3 | - | 1:3.7 | 100 | 61 |
| 2.1 | 0.08 | - | 1:26 | 90 | 51 |
| 2.1 | 0.15 | - | 1:14 | 98 | 55 |
| 2.1 | 0.3 | - | 1:7 | 92 | 74 |
| 0.5 | - | 0.2 | 1;2.5 | 9 | 33 |

(continued)

| Green Peach Aphid | | | | | |
|---|---|---|---|---|---|
| Compound 1 (ppm) | Imidacloprid (ppm) | Thiamethoxam (ppm) | Ratio (b): (a) | % Mortality (observed) | % Mortality (calculated) |
| 0.5 | - | 0.3 | 1:1.7 | 37 | 33 |
| 0.5 | - | 0.5 | 1:1 | 58 | 94 |
| 1.1 | - | 0.2 | 1:5.5 | 25 | 40 |
| 1.1 | - | 0.3 | 1:3.7 | 41 | 40 |
| 1.1 | - | 0.5 | 1:2.2 | 70 | 95 |
| 2.1 | - | 0.2 | 1:10.5 | 18 | 60 |
| 2.1 | - | 0.3 | 1:7 | 77 | 60 |
| 2.1 | - | 0.5 | 1:4.2 | 84 | 96 |

Table 7B

* indicates the observed % mortality is higher than the calculated % mortality by Colby equation.

| Green Peach Aphid | rate (ppm) | % mortality (obs) | rate (ppm) | % mortality (obs) | rate (ppm) | % mortality (obs) |
|---|---|---|---|---|---|---|
| Compound 1 | 0.5 | 21 | 1 | 35 | 2 | 71 |
| Methomyl | 50 | 20 | 100 | 61 | 200 | 100 |
| Cpd 1 + Methomyl | 0.5 + 50 | 40* | 1 + 50 | 37 | 2 + 50 | 56 |
| Cpd 1 + Methomyl | 0.5+ 100 | 75* | 1 + 100 | 93* | 2 + 100 | 81 |
| Cpd 1 + Methomyl | 0.5+ 200 | 100 | 1 + 200 | 100 | 2 + 200 | 99 |
| Amitraz | 10 | 16 | 100 | 12 | 1000 | 34 |
| Cpd 1 + Amitraz | 0.5 + 10 | 33 | 10 + 10 | 90* | 2 + 10 | 79* |
| Cpd 1 + Amitraz | 0.5 + 100 | 68* | 10 + 100 | 72* | 2 + 100 | 80* |
| Cpd 1 + Amitraz | 0.5 + 1000 | 63* | 10 + 1000 | 80* | 2 + 1000 | 88* |
| Thiamethoxam | 0.2 | 35 | 0.4 | 94 | 0.6 | 100 |
| Cpd 1 + Thiamethoxam | 0.5 + 0.2 | 58* | 1 + 0.2 | 2 | 2 + 0.2 | 18 |
| Cpd 1 + Thiamethoxam | 0.5 + 0.4 | 100* | 1 + 0.4 | 78 | 2 + 0.4 | 100* |
| Cpd 1 + Thiamethoxam | 0.5 + 0.6 | 100 | 1 + 0.6 | 100 | 2 + 0.6 | 100 |
| Pyridaben | 1 | 100 | 10 | 14 | 60 | 60 |
| Cpd 1 + Pyridaben | 0.5 + 1 | 36 | 1 + 1 | 7 | 2 + 1 | 11 |
| Cpd 1 + Pyridaben | 0.5 + 10 | 60* | 1 + 10 | 23 | 2 + 10 | 29 |
| Cpd 1 + Pyridaben | 0.5 + 60 | 72* | 1 + 60 | 56 | 2 + 60 | 76 |
| Flonicamid | 0.1 | 16 | 0.2 | 10 | 2 | 33 |
| Cpd 1 + Flonicamid | 0.5 + 0.1 | 24 | 1 + 0.1 | 37 | 2+ 0.1 | 73 |

(continued)

* indicates the observed % mortality is higher than the calculated % mortality by Colby equation.

| Green Peach Aphid | rate (ppm) | % mortality (obs) | rate (ppm) | % mortality (obs) | rate (ppm) | % mortality (obs) |
|---|---|---|---|---|---|---|
| Cpd 1 + Flonicamid | 0.5 + 0.2 | 34* | 1 + 0.2 | 94* | 2+ 0.2 | 78* |
| Cpd 1 + Flonicamid | 0.5 + 2 | 25 | 1 + 2 | 64* | 2+ 2 | 82* |
| Spinosad | 10 | 25 | 100 | 46 | 1000 | 59 |
| Cpd 1 + Spinosad | 0.5 + 10 | 27 | 1 + 10 | 42 | 2 + 10 | 37 |
| Cpd 1 + Spinosad | 0.5 + 100 | 48 | 1 + 100 | 85* | 2 + 100 | 100* |
| Cpd 1 + Spinosad | 0.5 + 1000 | 75* | 1 + 1000 | 68 | 2 + 1000 | 100* |
| Fipronil | 2 | 17 | 4 | 31 | 8 | 50 |
| Cpd 1 + Fipronil | 0.5 + 2 | 69* | 1 + 2 | 59* | 2 + 2 | 63 |
| Cpd 1 + Fipronil | 0.5 + 4 | 72* | 1 + 4 | 74* | 2 + 4 | 98* |
| Cpd 1 + Fipronil | 0,5 + 8 | 68* | 1 + 8 | 52 | 2 + 8 | 98* |
| Pyriproxyfen | 10 | 23 | 100 | 12 | 1000 | 26 |
| Cpd 1 + Pyriproxyfen | 0.5 + 10 | 26 | 1 + 10 | 60* | 2 + 10 | 77 |
| Cpd 1 + Pyriproxyfen | 0.5 + 100 | 32* | 1 + 100 | 74* | 2 + 100 | 89* |
| Cpd 1 + Pyriproxyfen | 0.5 + 1000 | 70* | 1 + 1000 | 47 | 2 + 1000 | 87* |
| Pymetrozine | 0.1 | 13 | 0.5 | 41 | 2 | 79 |
| Cpd 1 + Pymetrozine | 0.5 + 0.1 | 40* | 1 + 0.1 | 47* | 2 + 0.1 | 90* |
| Cpd 1 + Pymetrozine | 0.5 + 0.5 | 62* | 1 + 0.5 | 59 | 2 + 0.5 | 100* |
| Cpd 1 + Pymetrozine | 0.5 + 2 | 81 | 1 + 2 | 95* | 2 + 2 | 100* |
| Buprofezin | 10 | 63 | 100 | 63 | 1000 | 54 |
| Cpd 1 + Buprofezin | 0.5 + 10 | 32 | 1 + 10 | 36 | 2 + 10 | 73 |
| Cpd 1 + Buprofezin | 0.5 + 100 | 39 | 1 + 100 | 46 | 2 + 100 | 88 |
| Cpd 1 + Buprofezin | 0.5 + 1000 | 42 | 1 + 1000 | 37 | 2 + 1000 | 100* |
| Chlorfenapyr | 1.5 | 22 | 7 | 36 | 35 | 100 |
| Cpd 1 + Chlorfenapyr | 0.5 + 1.5 | 21 | 1 + 1.5 | 15 | 2 + 1.5 | 100* |
| Cpd 1 + Chlorfenapyr | 0.5 + 7 | 62* | 1 + 7 | 32 | 2 + 7 | 75 |
| Cpd 1 + Chlorfenapyr | 0.5 + 35 | 100 | 1 + 35 | 100 | 2 + 35 | 100 |
| Chlorpyrifos | 10 | 5 | 100 | 18 | 1000 | 9 |
| Cpd 1 + Chlorpyrifos | 0.5 + 10 | 21 | 1 + 10 | 5 | 2 + 10 | 70 |

(continued)

* indicates the observed % mortality is higher than the calculated % mortality by Colby equation.

| Green Peach Aphid | rate (ppm) | % mortality (obs) | rate (ppm) | % mortality (obs) | rate (ppm) | % mortality (obs) |
|---|---|---|---|---|---|---|
| Cpd 1 + Chlorpyrifos | 0.5 + 100 | 17 | 1 + 100 | 9 | 2 + 100 | 72 |
| Cpd 1 + Chlorpyrifos | 0.5 + 1000 | 82* | 1 + 1000 | 8 | 2 + 1000 | 100* |
| Cyromazine | 10 | 24 | 100 | 33 | 1000 | 65 |
| Cpd 1 + Cyromazine | 0.5 + 10 | 30 | 1 + 10 | 81* | 2 + 10 | 81* |
| Cpd 1 + Cyromazine | 0.5 +100 | 19 | 1 + 100 | 41 | 2 + 100 | 73 |
| Cpd 1 + Cyromazine. | 0.5 + 1000 | 77* | 1 + 1000 | 72 | 2 + 1000 | 67 |
| Fenoxycarb | 10 | 17 | 100 | 16 | 1000 | 18 |
| Cpd 1 + Fenoxycarb | 0.5 + 10 | 24 | 1 + 10 | 37 | 2 + 10 | 100* |
| Cpd 1 + Fenoxycarb | 0.5 + 100 | 29 | 1 + 100 | 80* | 2 + 100 | 100* |
| Cpd 1 + Fenoxycarb | 0.5 + 1000 | 31 | 1 + 1000 | 54* | 2 + 1000 | 100* |
| Methoprene | 10 | 27 | 100 | 23 | 1000 | 45 |
| Cpd 1 + Methoprene | 0.5 + 10 | 41 | 1 + 10 | 61* | 2 + 10 | 96* |
| Cpd 1 + Methoprene | 0.5 + 100 | 46* | 1 + 100 | 64* | 2 + 100 | 98* |
| Cpd 1 + Methoprene | 0.5 + 1000 | 64* | 1 + 1000 | 83* | 2 + 1000 | 100* |
| Indoxacarb | 10 | 9 | 20 | 7 | 30 | 8 |
| Cpd 1 + Indoxacarb | 0.5 + 10 | 5 | 1 + 10 | 70* | 2 + 10 | 73 |
| Cpd 1 + Indoxacarb | 0.5 + 20 | 10 | 1 + 20 | 46* | 2 + 20 | 76* |
| Cpd 1 + Indoxacarb | 0.5 + 30 | 13 | 1 + 30 | 27 | 2 + 30 | 59 |
| Triazamate | 0.1 | 1 | 1 | 2 | 100 | 100 |
| Cpd 1 + Triazamate | 0.5 + 0.1 | 9 | 1 + 0.1 | 12 | 2 + 0.1 | 39 |
| Cpd 1 + Triazamate | 0.5 + 1 | 8 | 1 + 1 | 24 | 2 + 1 | 45 |
| Cpd 1 + Triazamate | 0.5 + 100 | 100 | 1 + 100 | 100 | 2 + 100 | 100 |
| Thiodicarb | 20 | 10 | 150 | 17 | 900 | 98 |
| Cpd 1 + Thiodicarb | 0.5 + 20 | 15 | 1 + 20 | 56* | 2 + 20 | 66 |
| Cpd 1 + Thiodicarb | 0.5 + 150 | 26 | 1 + 150 | 38 | 2 + 150 | 91* |
| Cpd 1 + Thiodicarb | 0.5 + 900 | 100* | 1 + 900 | 100* | 2 + 900 | 100* |
| Tebufenozide | 100 | 8 | 1000 | 7 | 3000 | 9 |

(continued)

* indicates the observed % mortality is higher than the calculated % mortality by Colby equation.

| Green Peach Aphid | rate (ppm) | % mortality (obs) | rate (ppm) | % mortality (obs) | rate (ppm) | % mortality (obs) |
|---|---|---|---|---|---|---|
| Cpd 1 + Tebufenozide | 0.5 + 100 | 13 | 1 + 100 | 33 | 2 + 100 | 49 |
| Cpd 1 + Tebufenozide | 0.5 + 1000 | 20 | 1 + 1000 | 44* | 2 + 1000 | 71 |
| Cpd 1 + Tebufenozide | 0.5 + 3000 | 7 | 1 + 3000 | 14 | 2 + 3000 | 24 |
| Deltamethrin | 250 | 9 | 300 | 3 | 1000 | 9 |
| Cpd 1 + Deltamethrin | 0.5 + 250 | 4 | 1 + 250 | 7 | 2 + 250 | 25 |
| Cpd 1 + Deltamethrin | 0.5 + 300 | 8 | 1 + 300 | 3 | 2 + 300 | 57 |
| Cpd 1 + Deltamethrin | 0.5 + 1000 | 3 | 1 + 1000 | 17 | 2 + 1000 | 25 |
| Oxamyl | 40 | 8 | 70 | 18 | 100 | 35 |
| Cpd 1 + Oxamyl | 0.5 + 40 | 22 | 1 + 40 | 26 | 2 + 40 | 83* |
| Cpd 1 + Oxamyl | 0.5 + 70 | 40* | 1 + 70 | 97* | 2 + 70 | 89* |
| Cpd 1 + Oxamyl | 0.5 + 100 | 100* | 1 + 100 | 85* | 2 + 100 | 87* |
| Hexaflumuron | 100 | 8 | 1000 | 6 | 3000 | 13 |
| Cpd 1 + Hexaflumuron | 0.5 + 100 | 14 | 1 + 100 | 68* | 2 + 100 | 42 |
| Cpd 1 + Hexaflumuron | 0.5 + 1000 | 25 | 1 + 1000 | 35 | 2 + 1000 | 78* |
| Cpd 1 + Hexaflumuron | 0.5 + 3000 | 20 | 1 + 3000 | 15 | 40 + 3000 | 68 |
| Acetamiprid | 0.2 | 27 | 0.4 | 52 | 0.6 | 46 |
| Cpd 1 + Acetamiprid | 0.5 + 0.2 | 19 | 1+0.2 | 24 | 2 + 0.2 | 34 |
| Cpd 1 + Acetamiprid | 0.5 + 0.4 | 36 | 1 + 0.4 | 50 | 2 + 0.4 | 84 |
| Cpd 1 + Acetamiprid | 0.5 + 0.6 | 48 | 1 + 0.6 | 87* | 2 + 0.6 | 93* |
| Cartap | 0.2 | 11 | 0.4 | 26 | 0.6 | 17 |
| Cpd 1 + Cartap | 0.5 + 0.2 | 15 | 1 + 0.2 | 29 | 2 + 0.2 | 48 |
| Cpd 1 + Cartap | 0.5 + 0.4 | 9 | 1 + 0.4 | 32 | 2 + 0.4 | 69 |
| Cpd I + Cartap | 0.5 + 0.6 | 19 | 1 + 0.6 | 29 | 2 + 0.6 | 69 |
| Esfenvalerate | 50 | 100 | 1000 | 41 | 3000 | 23 |
| Cpd 1 + Esfenvalerate | 0.5 + 50 | 18 | 1 + 50 | 23 | 2 + 50 | 67 |
| Cpd 1 + Esfenvalerate | 0.5 + 1000 | 26 | 1 + 1000 | 55 | 2 + 1000 | 87* |
| Cpd 1 + Esfenvalerate | 0.5 + 3000 | 17 | 1 + 3000 | 20 | 2 + 3000 | 82* |
| Thiacloprid | 0.2 | 13 | 0.3 | 68 | 0.4 | 42 |
| Cpd 1 + Thiacloprid | 0.5 + 0.2 | 20 | 1 + 0.2 | 21 | 2 + 0.2 | 71 |
| Cpd 1 + Thiacloprid | 0.5 + 0.3 | 78* | 1 + 0.3 | 88* | 2 + 0.3 | 76 |

(continued)

* indicates the observed % mortality is higher than the calculated % mortality by Colby equation.

| Green Peach Aphid | rate (ppm) | % mortality (obs) | rate (ppm) | % mortality (obs) | rate (ppm) | % mortality (obs) |
|---|---|---|---|---|---|---|
| Cpd 1 + Thiacloprid | 0.5 + 0.4 | 98* | 1 + 0.4 | 62 | 2 + 0.4 | 94* |
| Lambda-cyhalothrin | 0.016 | 14 | 0.08 | 15 | 0.4 | 30 |
| Cpd 1 + Lambda-cyhalothrin | 0.5 + 0.016 | 43* | 1 + 0.016 | 9 | 2 + 0.016 | 78* |
| Cpd 1 + Lambda-cyhalothrin | 0.5 + 0.08 | 24 | 1 + 0.08 | 27 | 2 + 0.08 | 85* |
| Cpd 1 + Lambda-cyhalothrin | 0.5 + 0.4 | 12 | 1 + 0.4 | 30 | 2 + 0.4 | 68 |
| Hydramethylnon | 500 | 18 | 1000 | 8 | 1500 | 7 |
| Cpd 1 + Hydramethylnon | 0.5 + 500 | 15 | 1 + 500 | 13 | 2 + 500 | 27 |
| Cpd 1 + Hydramethylnon | 0.5 + 1000 | 23 | 1 + 1000 | 48* | 2 + 1000 | 70 |
| Cpd 1 + Hydramethylnon | 0.5 + 1500 | 17 | 1 + 1500 | 34 | 2 + 1500 | 69 |
| Clothianidin | 0.08 | 100 | 0.4 | 100 | 2 | 100 |
| Cpd 1 + Clothianidin | 0.5 + 0.08 | 100 | 1 + 0.08 | 100 | 2 + 0.08 | 100 |
| Cpd 1 + Clothianidin | 0.5 + 0.4 | 100 | 1 + 0.4 | 100 | 2 + 0.4 | 100 |
| Cpd 1 + Clothianidin | 0.5 + 2 | 100 | 1 + 2 | 100 | 2 + 2 | 100 |
| Lufenuron | 50 | 34 | 250 | 15 | 1000 | 28 |
| Cpd 1 + Lufenuron | 0.5 + 50 | 22 | 1 + 50 | 70* | 2 + 50 | 69 |
| Cpd 1 + Lufenuron | 0.5 + 250 | 22 | 1 + 250 | 23 | 2 + 250 | 73 |
| Cpd 1 + Lufenuron | 0.5 + 1000 | 29 | 1 + 1000 | 43 | 2 + 1000 | 100* |
| Abamectin | 0.08 | 47 | 0.4 | 100 | 2 | 100 |
| Cpd 1 + Abamectin | 0.5 + 0.08 | 42 | 1 + 0.08 | 75* | 2 + 0.08 | 54 |
| Cpd 1 + Abamectin | 0.5 + 0.4 | 55 | 1 + 0.4 | 100 | 2 + 0.4 | 98 |
| Cpd 1 + Abamectin | 0.5 + 2 | 100 | 1 + 2 | 100 | 2 + 2 | 100 |
| Methoxyfenozide | 10 | 7 | 100 | 17 | 1000 | 6 |
| Cpd 1 + Methoxyfenozide | 0.5 + 10 | 3 | 1 + 10 | 42* | 2 + 10 | 39 |

(continued)

* indicates the observed % mortality is higher than the calculated % mortality by Colby equation.

| Green Peach Aphid | rate (ppm) | % mortality (obs) | rate (ppm) | % mortality (obs) | rate (ppm) | % mortality (obs) |
|---|---|---|---|---|---|---|
| Cpd 1 + Methoxyfenozide | 0.5 + 100 | 4 | 1 + 100 | 58* | 2 + 100 | 26 |
| Cpd 1 + Methoxyfenozide | 0.5 + 1000 | 10 | 1 + 1000 | 43* | 2 + 1000 | 28 |
| Nitenpyram | 0.2 | 7 | 0.4 | 17 | 0.6 | 40 |
| Cpd 1 + Nitenpyram | 0.5 + 0.2 | 9 | 1 + 0.2 | 20 | 2 + 0.2 | 90* |
| Cpd 1 + Nitenpyram | 0.5 + 0.4 | 39* | 1 + 0.4 | 15 | 2 + 0.4 | 87* |
| Cpd 1 + Nitenpyram | 0.5 + 0.6 | 27 | 1 + 0.6 | 70* | 2 + 0.6 | 93* |
| Pyridalyl | 1 | 18 | 10 | 8 | 20 | 3 |
| Cpd 1 + Pyridalyl | 0.5+1 | 8 | 1 + 1 | 18 | 2 + 1 | 34 |
| Cpd 1 + Pyridalyl | 0.5 + 10 | 12 | 1 + 10 | 8 | 2 + 10 | 19 |
| Cpd 1 + Pyridalyl | 0.5 + 20 | 8 | 1 + 20 | 17 | 2 + 20 | 94* |
| Dinotefuran | 1 | 24 | 2 | 32 | 5 | 61 |
| Cpd 1 + Dinotefuran | 0.5 + 1 | 10 | 1 + 1 | 24 | 2 + 1 | 56 |
| Cpd 1 + Dinotefuran | 0.5 + 2 | 15 | 1 + 2 | 13 | 2 + 2 | 32 |
| Cpd 1 + Dinotefuran | 0.5 + 5 | 41 | 1 + 5 | 78* | 2 + 5 | 86 |
| Novaluron | 250 | 14 | 500 | 24 | 1000 | 25 |
| Cpd 1 + Novaluron | 0.5 + 250 | 30 | 1 + 250 | 37 | 2 + 250 | 63 |
| Cpd 1 + Novaluron | 0.5 + 500 | 29 | 1 + 500 | 43 | 2 + 500 | 46 |
| Cpd 1 + Novaluron | 0.5 + 1000 | 36 | 1 + 1000 | 58* | 2 + 1000 | 73 |

TEST G

For evaluating control of diamondback moth (*Plutella xylostella*), cabbage (var. Stonehead) plants were grown in Metromix potting soil in 10-cm pots in aluminum trays to test size (28 days, 3-4 full leaves) the plants were sprayed to the point of runoff using the turntable sprayer as described in Test I. Test compounds were formulated and sprayed on test plants as described for Test I. After drying for 2 hours, the treated leaves were excised and infested with one cabbage looper per cell and covered. The test units were placed on trays and put in a growth chamber at 25 °C and 60% relative humidity for 4 days. Each test unit was then visually assessed for % mortality; the results are listed in Tables 8A and 8B.

Table 8A

* indicates the observed % mortality is higher than the calculated % mortality by Colby equation.

| Diamondback Moth | rate % (ppm) | mortality (obs) | rate % (ppm) | mortality (obs) | rate (ppm) | % mortality (obs) |
|---|---|---|---|---|---|---|
| Compound 1 | 0.02 | 83 | 0.04 | 87 | 0.08 | 90 |
| Methomyl | 30 | 80 | 40 | 90 | 50 | 80 |

(continued)

* indicates the observed % mortality is higher than the calculated % mortality by Colby equation.

| Diamondback Moth | rate % (ppm) | mortality (obs) | rate % (ppm) | mortality (obs) | rate (ppm) | % mortality (obs) |
|---|---|---|---|---|---|---|
| Cpd 1 + Methomyl | 0.02 + 30 | 80 | 0.04 + 30 | 80 | 0.08 + 30 | 80 |
| Cpd 1 + Methomyl | 0.02 + 40 | 80 | 0.04 + 40 | 80 | 0.08 + 40 | 80 |
| Cpd 1 + Methomyl | 0.02 + 50 | 80 | 0.04 + 50 | 80 | 0.08 + 50 | 80 |
| Amitraz | 10 | 70 | 100 | 20 | 1000 | 50 |
| Cpd 1 + Amitraz | 0.02 + 10 | 80 | 0.04 + 10 | 70 | 0.08 + 10 | 70 |
| Cpd 1 + Amitraz | 0.02 + 100 | 80 | 0.04 + 100 | 70 | 0.08 + 100 | 70 |
| Cpd 1 + Amitraz | 0.02 + 1000 | 80 | 0.04 + 1000 | 70 | 0.08 + 1000 | 80 |
| Thiamethoxam | 30 | 90 | 40 | 100 | 50 | 100 |
| Cpd 1 + Thiamethoxam | 0.02 + 30 | 70 | 0.04 + 30 | 80 | 0.08 + 30 | 90 |
| Cpd 1 + Thiamethoxam | 0.02 + 40 | 80 | 0.04 + 40 | 90 | 0.08 + 40 | 100 |
| Cpd 1 + Thiamethoxam | 0.02 + 50 | 80 | 0.04 + 50 | 90 | 0.08 + 50 | 100 |
| Pyridaben | 100 | 100 | 150 | 80 | 200 | 100 |
| Cpd 1 + Pyridaben | 0.02 + 100 | 80 | 0.04 + 100 | 60 | 0.04 + 100 | 90 |
| Cpd 1 + Pyridaben | 0.02 + 150 | 90 | 0.04 + 150 | 80 | 0.04 + 150 | 100* |
| Cpd 1 + Pyridaben | 0.02 + 200 | 90 | 0.04 + 200 | 90 | 0.04 + 200 | 90 |
| Flonicamid | 1 | 0 | 15 | 60 | 1000 | 30 |
| Cpd 1 + Flonicamid | 0.02 + 1 | 90* | 0.04 + 1 | 70 | 0.08 + 1 | 90 |
| Cpd 1 + Flonicamid | 0.02 + 15 | 90 | 0.04 + 15 | 90 | 0.08 + 15 | 90 |
| Cpd 1 + Flonicamid | 0.02 + 1000 | 90* | 0.04 + 1000 | 100* | 0.08 + 1000 | 90 |
| Spinosad | 10 | 100 | 100 | 90 | 1000 | 100 |
| Cpd 1 + Spinosad | 0.02 + 10 | 100 | 0.04 + 10 | 100 | 0.08 + 10 | 100 |
| Cpd 1 + Spinosad | 0.02 + 100 | 100* | 0.04 + 100 | 100* | 0.08 + 100 | 100* |
| Cpd 1 + Spinosad | 0.02 + 1000 | 100 | 0.04 + 1000 | 100 | 0.08 + 1000 | 100 |

Table 8B

* indicates the observed % mortality is higher than the calculated % mortality by Colby equation.

| Diamondback Moth | rate (ppm) | % mortality (obs) | rate % (ppm) | mortality (obs) | rate % (ppm) | mortality (obs) |
|---|---|---|---|---|---|---|
| Compound 1 | 0.005 | 86 | 0.02 | 87 | 0.08 | 94 |
| Fipronil | 10 | 100 | 100 | 100 | 1000 | 100 |
| Cpd 1 + Fipronil | 0.005+ 10 | 100 | 0.02 + 10 | 100 | 0.08 + 10 | 100 |
| Cpd 1 + Fipronil | 0.005 + 100 | 100 | 0.02 + 100 | 100 | 0.08 + 100 | 100 |
| Cpd 1 + Fipronil | 0.005 + 1000 | 100 | 0.02 + 1000 | 100 | 0.08 + 1000 | 100 |
| Pyriproxyfen | 40 | 100 | 20 | 100 | 200 | 100 |
| Cpd 1 + Pyriproxyfen | 0.005 + 2 | 100 | 0.02 + 2 | 100 | 0.08 + 2 | 100 |
| Cpd 1 + Pyriproxyfen | 0.005 + 20 | 100 | 0.02 + 20 | 100 | 0.08 + 20 | 100 |
| Cpd 1 + Pyriproxyfen | 0.005 + 200 | 100 | 0.02 + 200 | 100 | 0.08 + 200 | 100 |
| Pymetrozine | 250 | 100 | 1000 | 100 | 2000 | 100 |
| Cpd 1 + Pymetrozine | 0.005 + 250 | 100 | 0.02 + 250 | 100 | 0.08 + 250 | 100 |
| Cpd 1 + Pymetrozine | 0.005 + 1000 | 100 | 0.02 + 1000 | 100 | 0.08 + 1000 | 100 |
| Cpd 1 + Pymetrozine | 0.005 + 2000 | 100 | 0.02 + 2000 | 100 | 0.08 + 2000 | 100 |
| Buprofezin | 10 | 30 | 100 | 20 | 1000 | 60 |
| Cpd 1 + Buprofezin | 0.005 + 10 | 80 | 0.02 + 10 | 80 | 0.08 + 10 | 90 |
| Cpd 1 + Buprofezin | 0.005 + 100 | 50 | 0.02 + 100 | 70 | 0.08 + 100 | 100* |
| Cpd 1+Buprofezin | 0.005 + 1000 | 20 | 0.02 + 1000 | 50 | 0.08 + 1000 | 100* |
| Chlorfenapyr | 1.5 | 90 | 2.5 | 100 | 7 | 70 |
| Cpd 1 + Chlorfenapyr | 0.005 + 1.5 | 80 | 0.02 + 1.5 | 80 | 0.08 + 1.5 | 90 |
| Cpd 1 + Chlorfenapyr | 0.005 + 3.5 | 90 | 0.02 + 3.5 | 80 | 0.08 + 3.5 | 90 |
| Cpd 1 + Chlorfenapyr | 0.005 + 7 | 90 | 0.02 + 7 | 90 | 0.08 + 7 | 90 |
| Chlorpyrifos | 10 | 80 | 100 | 40 | 1000 | 50 |
| Cpd 1 + Chlorpyrifos | 0.005 + 10 | 50 | 0.02 + 10 | 50 | 0.08 + 10 | 90 |
| Cpd 1 + Chlorpyrifos | 0.005 + 100 | 70 | 0.02 + 100 | 80 | 0.08 + 100 | 90 |
| Cpd 1 + Chlorpyrifos | 0.005 + 1000 | 90 | 0.02 + 1000 | 90 | 0.08 + 1000 | 80 |
| Cyromazine | 20 | 60 | 40 | 90 | 60 | 80 |
| Cpd 1 + Cyromazine | 0.005 + 20 | 30 | 0.02 + 20 | 90 | 0.08 + 20 | 100* |
| Cpd 1 + Cyromazine | 0.005 + 40 | 90 | 0.02 + 40 | 60 | 0.08 + 40 | 80 |
| Cpd 1 + Cyromazine | 0.005 + 60 | 90 | 0.02 + 60 | 90 | 0.08 + 60 | 90 |

(continued)

* indicates the observed % mortality is higher than the calculated % mortality by Colby equation.

| Diamondback Moth | rate (ppm) | % mortality (obs) | rate % (ppm) | mortality (obs) | rate % (ppm) | mortality (obs) |
|---|---|---|---|---|---|---|
| Fenoxycarb | 10 | 90 | 100 | 90 | 1000 | 90 |
| Cpd 1 + Fenoxycarb | 0.005 + 10 | 90 | 0.02 + 10 | 90 | 0.08 + 10 | 90 |
| Cpd 1 + Fenoxycarb | 0.005 + 100 | 80 | 0.02 + 100 | 70 | 0.08 + 100 | 90 |
| Cpd 1 + Fenoxycarb | 0.005 + 1000 | 80 | 0.02 + 1000 | 90 | 0.08 + 1000 | 90 |
| Methoprene | 10 | 90 | 100 | 100 | 1000 | 90 |
| Cpd 1 + Methoprene | 0.005 + 10 | 90 | 0.02 + 10 | 90 | 0.04 + 10 | 90 |
| Cpd 1 + Methoprene | 0.005 + 100 | 70 | 0.02 + 100 | 90 | 0.04 + 100 | 90 |
| Cpd I + Methoprene | 0.005 + 1000 | 90 | 0.02 + 1000 | 90 | 0.04 + 1000 | 90 |
| Indoxacarb | 0.02 | 80 | 0.05 | 40 | 0.4 | 0 |
| Cpd 1 + Indoxacarb | 0.005 + 0.02 | 70 | 0.02 + 0.02 | 80 | 0.08 + 0.02 | 90 |
| Cpd 1 + Indoxacarb | 0.005 + 0.05 | 60 | 0.02 + 0.05 | 90 | 0.08 + 0.05 | 90 |
| Cpd 1 + Indoxacarb | 0.005 + 0.4 | 10 | 0.02 + 0.4 | 60 | 0.08 + 0.4 | 90 |
| Triazamate | 250 | 90 | 350 | 60 | 500 | 50 |
| Cpd 1 + Triazamate | 0.005 + 250 | 80 | 0.02 + 250 | 60 | 0.08 + 250 | 90 |
| Cpd 1 + Triazamate | 0.005 + 350 | 70 | 0.02 + 350 | 80 | 0.08 + 350 | 90 |
| Cpd 1 + Triazamate | 0.005 + 500 | 80 | 0.02 + 500 | 90 | 0.08 + 500 | 90 |
| Thiodicarb | 100 | 90 | 1000 | 90 | 3000 | 90 |
| Cpd 1 + Thiodicarb | 0.005 + 100 | 90 | 0.02 + 100 | 90 | 0.08 + 100 | 90 |
| Cpd 1 + Thiodicarb | 0.005 + 1000 | 90 | 0.02 + 1000 | 90 | 0.08 + 1000 | 90 |
| Cpd 1 + Thiodicarb | 0.005 + 3000 | 90 | 0.02 + 3000 | 90 | 0.08 + 3000 | 90 |
| Tebufenozide | 150 | 90 | 200 | 90 | 300 | 90 |
| Cpd 1 + Tebufenozide | 0.005 + 150 | 70 | 0.02 + 150 | 90 | 0.08 + 150 | 90 |
| Cpd 1 + Tebufenozide | 0.005 + 200 | 40 | 0.02 + 200 | 90 | 0.08 + 200 | 90 |
| Cpd 1 + Tebufenozide | 0.005 + 300 | 80 | 0.02 + 300 | 80 | 0.08 + 300 | 90 |
| Deltamethrin | 0.1 | 90 | 0.3 | 90 | 1 | 90 |
| Cpd 1 + Deltamethrin | 0.005 + 0.1 | 80 | 0.02 + 0.1 | 90 | 0.08 + 0.1 | 90 |
| Cpd 1 + Deltamethrin | 0.005 + 0.3 | 60 | 0.02 + 0.3 | 70 | 0.08 + 0.3 | 90 |

(continued)

* indicates the observed % mortality is higher than the calculated % mortality by Colby equation.

| Diamondback Moth | rate (ppm) | % mortality (obs) | rate % (ppm) | mortality (obs) | rate % (ppm) | mortality (obs) |
|---|---|---|---|---|---|---|
| Cpd 1 + Deltamethrin | 0.005 + 1 | 90 | 0.02 + 1 | 90 | 0.08 + 1 | 80 |
| Oxamyl | 1 | 60 | 10 | 20 | 100 | 30 |
| Cpd 1 + Oxamyl | 0.005 + 1 | 40 | 0.02 + 1 | 80 | 0.08 + 1 | 80 |
| Cpd 1 + Oxamyl | 0.005 + 10 | 70 | 0.02 + 10 | 80 | 0.08 + 10 | 90 |
| Cpd 1 + Oxamyl | 0.005 + 100 | 70 | 0.02 + 100 | 80 | 0.08 + 100 | 100* |
| Hexaflumuron | 0.5 | 70 | 1 | 30 | 2 | 70 |
| Cpd 1 + Hexaflumuron | 0.005 + 05 | 20 | 0.02 + 0.5 | 70 | 0.04 + 0.5 | 90 |
| Cpd 1 + Hexaflumuron | 0.005 + 1 | 80 | 0.02 + 1 | 90* | 0.04 + 1 | 90* |
| Cpd 1 + Hexaflumuron | 0.005 + 2 | 70 | 0.02 + 2 | 80 | 0.04 + 2 | 90 |
| Acetamiprid | 0.3 | 90 | 1 | 80 | 3 | 70 |
| Cpd 1 + Acetamiprid | 0.005 + 0.3 | 70 | 0.02 + 0.3 | 70 | 0.08 + 0.3 | 90 |
| Cpd 1 + Acetamiprid | 0.005 + 1 | 70 | 0.02 + 1 | 60 | 0.08 + 1 | 100* |
| Cpd 1 + Acetamiprid | 0.005 + 3 | 70 | 0.02 + 3 | 70 | 0.08 + 3 | 100* |
| Cartap | 100 | 60 | 1000 | 90 | 3000 | 90 |
| Cpd 1 + Cartap | 0.005 + 100 | 100* | 0.02 + 100 | 90 | 0.08 + 100 | 90 |
| Cpd 1 + Cartap | 0.005 + 1000 | 90 | 0.02 + 1000 | 100* | 0.08 + 1000 | 100* |
| Cpd 1 + Cartap | 0.005 + 3000 | 90 | 0.02 + 3000 | 90 | 0.08 + 3000 | 100* |
| Esfenvalerate | 0.01 | 90 | 0.05 | 80 | 0.2 | 80 |
| Cpd 1 + Esfenvalerate | 0.005 + 0.01 | 70 | 0.02 + 0.01 | 70 | 0.08 + 0.01 | 80 |
| Cpd 1 + Esfenvalerate | 0.005 + 0.05 | 60 | 0.02 + 0.05 | 60 | 0.08 + 0.05 | 80 |
| Cpd 1 + Esfenvalerate | 0.005 + 0.2 | 60 | 0.02 + 0.2 | 80 | 0.08 + 0.2 | 80 |
| Thiacloprid | 0.1 | 80 | 0.3 | 40 | 15 | 90 |
| Cpd 1 + Thiacloprid | 0.005 + 0.1 | 70 | 0.02 + 0.1 | 60 | 0.08 + 0.1 | 80 |
| Cpd 1 + Thiacloprid | 0.005 + 0.3 | 40 | 0.02 + 0.3 | 60 | 0.08 + 0.3 | 80 |
| Cpd 1 + Thiacloprid | 0.005 + 15 | 90 | 0.02 + 15 | 70 | 0.08 + 15 | 90 |
| Lambda-cyhalothrin | 0.016 | 90 | 0.08 | 70 | 0.4 | 90 |
| Cpd 1 + Lambda-cyhalothrin | 0.005 + 0.016 | 60 | 0.02 + 0.016 | 60 | 0.08 + 0.016 | 90 |
| Cpd 1 + Lambda-cyhalothrin | 0.005 + 0.08 | 100* | 0.02 + 0.08 | 90 | 0.08 + 0.08 | 100* |
| Cpd 1 + Lambda-cyhalothrin | 0.005 + 0.4 | 90 | 0.02 + 0.4 | 100* | 0.08 + 0.4 | 100* |
| Hydramethylnon | 0.01 | 70 | 0.05 | 50 | 0.2 | 60 |

(continued)

* indicates the observed % mortality is higher than the calculated % mortality by Colby equation.

| Diamondback Moth | rate (ppm) | % mortality (obs) | rate % (ppm) | mortality (obs) | rate % (ppm) | mortality (obs) |
|---|---|---|---|---|---|---|
| Cpd 1 + Hydramethylnon | 0.005 + 0.01 | 80 | 0.02 + 0.01 | 70 | 0.08 + 0.01 | 70 |
| Cpd 1 + Hydramethylnon | 0.005 + 0.05 | 50 | 0.02 + 0.05 | 40 | 0.08 + 0.05 | 100* |
| Cpd 1 + Hydramethylnon | 0.005 + 0.2 | 30 | 0.02 + 0.2 | 60 | 0.08 + 0.2 | 80 |
| Clothianidin | 0.016 | 40 | 0.08 | 10 | 0.4 | 20 |
| Cpd 1 + Clothianidin | 0.005 + 0.016 | 70 | 0.02 + 0.016 | 50 | 0.08 + 0.016 | 90 |
| Cpd 1 + Clothianidin | 0.005 + 0.08 | 50 | 0.02 + 0.08 | 70 | 0.08 + 0.08 | 100* |
| Cpd 1 + Clothianidin | 0.005 + 0.4 | 30 | 0.02 + 0.4 | 80 | 0.08 + 0.4 | 100* |
| Lufenuron | 0.08 | 80 | 0.4 | 80 | 2 | 90 |
| Cpd 1 + Lufenuron | 0.005 + 0.08 | 60 | 0.02 + 0.08 | 70 | 0.08 + 0.08 | 90 |
| Cpd 1 + Lufenuron | 0.005 + 0.4 | 60 | 0.02 + 0.4 | 90 | 0.08 + 0.4 | 100 |
| Cpd 1 + Lufenuron | 0.005 + 2 | 80 | 0.02 + 2 | 90 | 0.08 + 2 | 100 |
| Abamectin | 0.02 | 90 | 0.08 | 90 | 0.4 | 100 |
| Cpd 1 + Abamectin | 0.005 + 0.02 | 90 | 0.02 + 0.02 | 90 | 0.08 + 0.02 | 90 |
| Cpd 1 + Abamectin | 0.005 + 0.08 | 90 | 0.02 + 0.08 | 90 | 0.08 + 0.08 | 90 |
| Cpd 1 + Abamectin | 0.005 + 0.4 | 90 | 0.02 + 0.4 | 90 | 0.08 + 0.4 | 90 |
| Methoxyfenozide | 0.08 | 90 | 0.4 | 90 | 2 | 90 |
| Cpd 1 + Methoxyfenozide | 0.005 + 0.08 | 90 | 0.02 + 0.08 | 100* | 0.04 + 0.08 | 90 |
| Cpd 1 + Methoxyfenozide | 0.005 + 0.4 | 90 | 0.02 + 0.4 | 100* | 0.04 + 0.4 | 100* |
| Cpd 1 + Methoxyfenozide | 0.005 + 2 | 100* | 0.02 + 2 | 90 | 0.04 + 2 | 90 |
| Nitenpyram | 30 | 90 | 75 | 80 | 150 | 90 |
| Cpd 1 + Nitenpyram | 0.005 + 30 | 80 | 0.02 + 30 | 90 | 0.04 + 30 | 100* |
| Cpd 1 + Nitenpyram | 0.005 + 75 | 90 | 0.02 + 75 | 100* | 0.04 + 75 | 90 |
| Cpd 1 + Nitenpyram | 0.005 + 150 | 80 | 0.02 + 150 | 100* | 0.04 + 150 | 90 |
| Pyridalyl | 0.5 | 90 | 0.6 | 100 | 0.7 | 100 |
| Cpd 1 + Pyridalyl | 0.005 + 0.5 | 90 | 0.02 + 0.5 | 90 | 0.08 + 0.5 | 90 |
| Cpd 1 + Pyridalyl | 0.005 + 0.6 | 90 | 0.02 + 0.6 | 100 | 0.08 + 0.6 | 90 |
| Cpd 1 + Pyridalyl | 0.005 + 0.7 | 100 | 0.02 + 0.7 | 100 | 0.08 + 0.7 | 100 |
| Dinotefuran | 1 | 80 | 2.5 | 60 | 7.5 | 70 |

(continued)

* indicates the observed % mortality is higher than the calculated % mortality by Colby equation.

| Diamondback Moth | rate (ppm) | % mortality (obs) | rate % (ppm) | mortality (obs) | rate % (ppm) | mortality (obs) |
|---|---|---|---|---|---|---|
| Cpd 1 + Dinotefuran | 0.005 + 1 | 80 | 0.02 + 1 | 80 | 0.08 + 1 | 100* |
| Cpd 1 + Dinotefuran | 0.005 + 2.5 | 90 | 0.02 + 2.5 | 90 | 0.08 + 2.5 | 100* |
| Cpd 1 + Dinotefuran | 0.005 + 7.5 | 90 | 0.02 + 7.5 | 90 | 0.08+7.5 | 100* |

Tables 2 to 8 show mixtures and compositions of the present invention demonstrating control on a wide range of invertebrate pests, some with notable synergistic effect. As the % of mortality cannot exceed 100%, the unexpected increase in insecticidal activity can be greatest only when the separate active ingredient components alone are at application rates providing considerably less than 100% control. Synergy may not be evident at low application rates where the individual active ingredient components alone have little activity. However, in some instances high activity was observed for combinations wherein individual active ingredient alone at the same application rate had essentially no activity. The synergism is indeed highly remarkable. Noteworthy are mixtures of the compound of Formula 1 and wherein the compound of component (b) is selected from the group consisting of acetamiprid, dinotefuran, imidacloprid, nitenpyram, thiacloprid, thiamethoxam, chlorpyrifos, methomyl, oxamyl, thiodicarb, deltamethrin, esfenvalerate, indoxacarb, lambda-cyhalothrin, buprofezin, cyromazine, hexaflumuron, lufenuron, novaluron, tebufenozide, abamectin, spinosad, fipronil, fenoxycarb, methoprene, pyriproxyfen, amitraz, chlorfenapyr, hydramethylnon, pyridaben, cartap, pyridalyl, flonicamid and pymetrozine. Especially noteworthy are weight ratios of component (b) to the compound of Formula 1 in the mixtures and compositions of the present invention which range from 500:1 to 1:250, with one embodiment being from 200:1 to 1:150, another embodiment being from 150:1 to 1:50 and another embodiment being from 50:1 to 1:10. Also of note are weight ratios of component (b) to the compound of Formula 1 in the mixtures and compositions of the present invention which range from 450:1 to 1:300, with one embodiment being from 150:1 to 1:100, another embodiment being from 30:1 to 1:25 and another embodiment being from 10:1 to 1:10.

Accordingly, this invention provides not only improved compositions but also methods of their use for control of invertebrate pests such as arthropods in both agronomic and non-agronomic environments. The compositions of this invention demonstrate high controlling effect of invertebrate pests; consequently, their use as arthropodicides can reduce crop production cost and environmental load.

## Claims

**1.** A composition comprising:

(a) 3-bromo-*N*-[4-cyano-2-methyl-6-[(methylamino)carbonyl]phenyl]-1-(3-chloro-2-pyridinyl)-1*H*-pyrazole-5-carboxamide (Formula 1), an *N*-oxide, or a salt thereof,

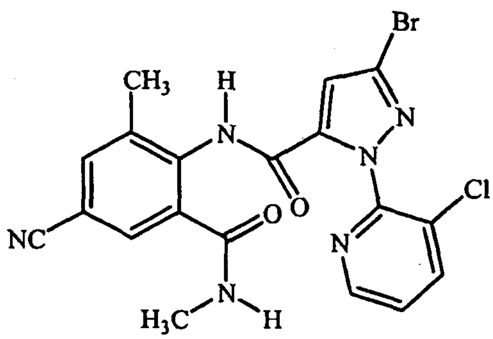

1

and
(b) at least one invertebrate pest control agent selected from the group consisting of

(b1) neonicotinoids;
(b2) cholineseterase inhibitors;
(b3) sodium channel modulators;
(b4) chitin synthesis inhibitors;
(b5) ecdysone agonists and antagonists;
(b6) lipid biosynthesis inhibitors;
(b7) macrocyclic lactones;
(b8) GABA-regulated chloride channel blockers;
(b9) juvenile hormone mimics;
(b10) ryanodine receptor ligands other than the compound of Formula 1;
(b11) octopamine receptor ligands;
(b12) mitochondrial electron transport inhibitors;
(b13) nereistoxin analogs;
(b14) pyridalyl;
(b15) flonicamid;
(b16) pymetrozine;
(b18) metaflumizone;
(b19) biological agents; and

salts of compounds of (b1) through (b18).

**2.** The composition of Claim 1 wherein component (b) is a compound selected from (b1) neonicotinoids.

**3.** The composition of Claim 2 wherein component (b) is imidacloprid.

**4.** The composition of Claim 2 wherein component (b) is thiamethoxam.

**5.** The composition of Claim 1 wherein component (b) is selected from acetamiprid, dinotefuran, imidacloprid, nitenpyram, thiacloprid, thiamethoxam, chlorpyrifos, methomyl, oxamyl, thiodicarb, triazamate, deltamethrin, esfenvalerate, indoxacarb, lambda-cyhalothrin, buprofezin, cyromazine, hexaflumuron, lufenuron, novaluron, methoxyfenozide, tebufenozide, abamectin, spinosad, fipronil, fenoxycarb, methoprene, pyriproxyfen, amitraz, chlorfenapyr, hydramethylnon, pyridaben, cartap, pyridalyl, flonicamid, and pymetrozine.

**6.** The composition of Claim 1 wherein component (b) is a compound of Formula i

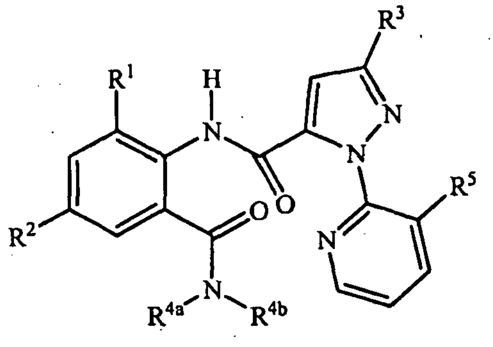

i

wherein

$R^1$ is $CH_3$, F, Cl or Br;
$R^2$ is F, Cl, Br, I or $CF_3$;

$R^3$ is $CF_3$, Cl, Br or $OCH_2CF_3$;
$R^{4a}$ is $C_1$-$C_4$ alkyl;
$R^{4b}$ is H or $CH_3$; and
$R^5$ is Cl or Br;

or an agriculturally suitable salt thereof.

**7.** The composition of Claim 1 wherein component (b) comprises at least one invertebrate pest control agent (or salt thereof) from each of two different groups selected from (b1), (b2), (b3), (b4), (b5), (b6), (b7), (b8), (b9), (b10), (b11), (b12), (b13), (b14), (b15), (b16), (b18) and (b19).

**8.** A composition for controlling an invertebrate pest comprising a biologically effective amount of the composition of any one of Claims 1 to 7 and at least one additional component selected from the group consisting of a surfactant, a solid diluent and a liquid diluent, said composition optionally further comprising an effective amount of at least one additional biologically active compound or agent.

**9.** The composition of Claim 8 wherein component (b) is a compound selected from (b1) neonicotinoids and the weight ratio of component (b) to the compound of Formula 1, an *N*-oxide, or a salt thereof, is from 10:1 1 to 1: 10.

**10.** The composition of Claim 8 in the form of a soil drench liquid formulation.

**11.** A non-therapeutic method for controlling an invertebrate pest comprising contacting the invertebrate pest or its environment with a biologically effective amount of the composition of any one of Claims 1 to 7.

**12.** The method of Claim 11 wherein the environment is soil and a liquid composition comprising the mixture is applied to the soil as a soil drench.

**13.** The method of Claim 11 where the invertebrate pest is silverleaf whitefly (*Bemisia argentifolii*).

**14.** The method of Claim 11 where the invertebrate pest is western flower thrip (*Frankliniella occidentalis*).

**15.** The method of Claim 11 where the invertebrate pest is potato leafhopper (*Empoasca fabae*).

**16.** The method of Claim 11 where the invertebrate pest is corn planthopper (*Peregrinus maidis*).

**17.** The method of Claim 11 where the invertebrate pest is cotton melon aphid (*Aphis gossypii*).

**18.** The method of Claim 11 where the invertebrate pest is green peach aphid (*Myzus persicae*).

**19.** The method of Claim 11 where the invertebrate pest is the larvae of the diamondback moth (*Plutella xylostella*).

**20.** A spray composition, comprising: the composition of Claim 1 and a propellant.

**21.** A bait composition, comprising: the composition of Claim 1, and one or more food materials.

**22.** The composition of claim 21 further comprising an attractant.

**23.** The composition of claim 21 or claim 22, further comprising a humectant.

**24.** A trap device for controlling an invertebrate pest, comprising: the bait composition of any of claims 21 to 23 and a housing adapted to receive said bait composition, wherein the housing has at least one opening sized to permit the invertebrate pest to pass through the opening so the invertebrate pest can gain access to said bait composition from a location outside the housing, and wherein the housing is further adapted to be placed in or near a locus of potential or known activity for the invertebrate pest.

**Patentansprüche**

1. Zusammensetzung umfassend:

(a) 3-Brom-N-[4-cyano-2-methyl-6-[(methylamino)carbonyl]phenyl]-1-(3-chlor-2-pyridinyl)-1H-pyrazol-5-carboxamid (Formel 1), ein *N*-Oxid oder ein Salz derselben

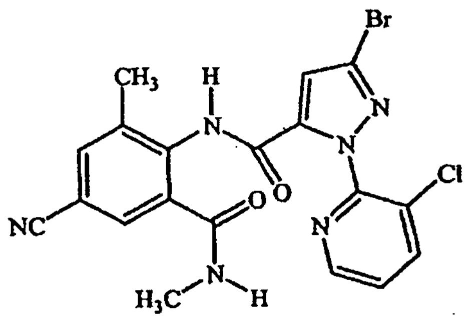

1

und
(b) mindestens ein Mittel für die Invertebratschädlingsbekämpfung ausgewählt aus der Gruppe bestehend aus

(b1), Neonicotinoiden;
(b2) Cholinesteraseinhibitoren;
(b3) Natriumkanalmodulatoren;
(b4) Chitinsyntheseinhibitoren;
(b5) Ecdysonagonisten und- antagonisten;
(b6) Lipidbiosyntheseinhibitoren;
(b7) makrocyclischen Laktonen;
(b8) GABA-regulierten Chloridkanalblockern;
(b9) Juvenilhormonmimikern;
(b10) Ryanodinrezeptorliganden, bei denen es sich nicht um die Verbindung der Formel 1 handelt;
(b11) Octopaminrezeptorliganden;
(b 12) mitochondrialen Elektronentransportinhibitoren;
(b13) Nereistoxinanalogen;
(b14) Pyridalyl;
(b15) Flonicamid;
(b16) Pymetrozin;
(b18) Metaflumizon;
(b19) biologischen Mitteln; und

Salzen der Verbindungen (b1) bis (b18).

2. Zusammensetzung nach Anspruch 1, wobei die Komponente (b) eine Verbindung ausgewählt aus (b1) Neonicotinoiden ist.

3. Zusammensetzung nach Anspruch 2, wobei die Komponente (b) Imidacloprid ist.

4. Zusammensetzung nach Anspruch 2, wobei die Komponente (b) Thimethoxam ist.

5. Zusammensetzung nach Anspruch 1, wobei die Komponente (b) ausgewählt ist unter Acetamiprid, Dinotefuran, Imidacloprid, Nitenpyram, Thiacloprid, Thiamethoxam, Chlorpyrifos, Methomyl, Oxamyl, Thiodicarb, Triazamat, Deltamethrin, Esfenvalerat, Indoxacarb, Lambda-Cyhalothrin, Buprofezin, Cyromazin, Hexaflumuron, Lufenuron, Novaluron, Methoxyfenozid, Tebufenozid, Abamectin, Spinosad, Fipronil, Fenoxycarb, Methopren, Pyriproxyfen, Amitraz, Chlorfenapyr, Hydramethylnon, Pyridaben, Cartab, Pyridalyl, Flonicamid und Pymetrozin.

6. Zusammensetzung nach Anspruch 1, wobei die Komponente (b) eine Verbindung der Formel i

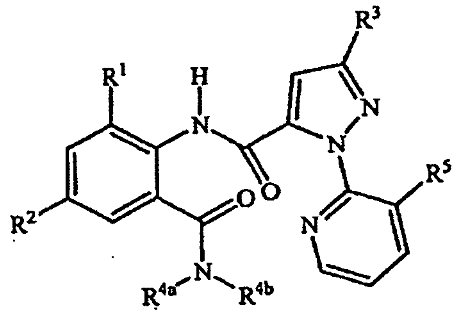

i

ist,
wobei

$R^1$ $CH_3$, F, Cl oder Br ist;
$R^2$ F, Cl, Br, I oder $CF_3$ ist;
$R^3$-$CF_3$, Cl, Br oder $OCH_2CF_3$ ist;
$R^{4a}$ $C_1$ - $C_4$-Alkyl ist;
$R^{4b}$ H oder $CH_3$ ist; und
$R^5$ Cl oder Br;

oder irgend ein landwirtschaftlich geeignetes Salz derselben ist.

7. Zusammensetzung nach Anspruch 1, wobei die Komponente (b) mindestens ein Mittel für die Invertebratschädlingsbekämpfung (oder ein Salz desselben) aus jeder von zwei verschiedenen Gruppen ausgewählt unter (b1), (b2), (b3), (b4), (b5), (b6), (b7), (b8), (b9), (b10), (b11), (b12), (b13), (b14), (b15), (b16), (b18) und (b19) ist.

8. Zusammensetzung zum Bekämpfen eines Invertebratschädlings umfassend eine biologisch wirksame Menge der Zusammensetzung nach einem der Ansprüche 1 bis 7 und mindestens eine zusätzliche Komponente ausgewählt aus der Gruppe bestehend aus einem Tensid, einem festen Verdünnungsmittel und einem flüssigen Verdünnungsmittel, wobei die Zusammensetzung wahlweise des Weiteren eine wirksame Menge mindestens einer/eines zusätzlichen biologisch aktiven Verbindung oder Mittels umfasst.

9. Zusammensetzung nach Anspruch 8, wobei die Komponente (b) eine aus (b1) Neonicotinoiden ausgewählte Verbindung ist und das Gewichtsverhältnis der Komponente (b) zu der Verbindung der Formel 1, einem *N*-Oxid oder einem Salz derselben 10 : 1 bis 1 : 10 beträgt.

10. Zusammensetzung nach Anspruch 8 in Form einer flüssigen Bodendurchnässungsrezeptur.

11. Nichttherapeutische Methode zum Bekämpfen eines Invertebratschädlings umfassend das Kontaktieren des Invertebratschädlings oder dessen Umgebung mit einer biologisch wirksamen Menge der Zusammensetzung nach einem der Ansprüche 1 bis 7.

12. Methode nach Anspruch 11, wobei die Umgebung Erde ist und eine flüssige, die Mischung umfassende Zusammensetzung als Bodendurchnässungsmittel auf den Boden aufgebracht wird.

13. Methode nach Anspruch 11, wobei der Invertebratschädling die Baumwoll-Weiße Fliege (*Bemisia argentifolii*) ist.

14. Methode nach Anspruch 11, wobei der Invertebratschädling der Kalifornische Blütenthrips (*Frankiliniella occidentalis*) ist.

15. Methode nach Anspruch 11, wobei der Invertebratschädling die Kartoffelzikade (*Empoasca fabae*) ist.

**16.** Methode nach Anspruch 11, wobei der Invertebratschädling die Maiszikade (*Peregrinus maidis*) ist.

**17.** Methode nach Anspruch 11, wobei der Invertebratschädling die Grüne Gurkenlaus (*Aphis gossypii*) ist.

**18.** Methode nach Anspruch 11, wobei der Invertebratschädling die Grüne Pfirsichblattlaus (*Myzus persicae) ist.*

**19.** Methode nach Anspruch 11, wobei der Invertebratschädling die Larve der Kohlmotte (*Plutella xylostella*) ist.

**20.** Spritzzusammensetzung umfassend: die Zusammensetzung nach Anspruch 1 und ein Treibmittel.

**21.** Köderzusammensetzung umfassend: die Zusammensetzung nach Anspruch 1 und ein oder mehrere Nahrungsmittelmaterialien.

**22.** Zusammensetzung nach Anspruch 21, des Weiteren einen Lockstoff umfassend.

**23.** Zusammensetzung nach Anspruch 21 oder 22, des Weiteren ein Feuchthaltemittel umfassend.

**24.** Fanggerät für die Bekämpfung eines Invertebratschädlings, umfassend: die Köderzusammensetzung nach einem der Ansprüche 21 bis 23 und ein Gehäuse, das geeignet ist, die Köderzusammensetzung aufzunehmen, wobei das Gehäuse mindestens eine Öffnung aufweist, die so dimensioniert ist, um es dem Invertebratschädling zu gestatten, durch die Öffnung hindurchzugehen, so dass der Invertebratschädling zu der Köderzusammensetzung von einem Ort außerhalb des Gehäuses Zugang erhalten kann, und wobei das Gehäuse des Weiteren geeignet ist, an einen Ort oder in die Nähe eines Orts potentieller oder bekannter Aktivität des Invertebratschädlings positioniert zu werden.

## Revendications

**1.** Composition comprenant :

(a) du 3-bromo-N-[4-cyano-2-méthyl-6-[(méthylamino)carbonyl]phényl]-1-(3-chloro-2-pyridinyl)-1H-pyrazole-5-carboxamide (formule 1), un N-oxyde, ou un sel de celui-ci,

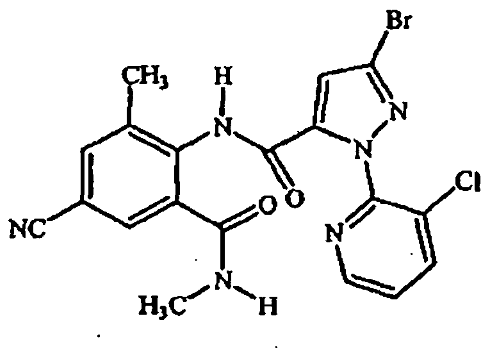

1

et

(b) au moins un agent de contrôle des nuisibles invertébrés choisi dans le groupe constitué de

(b1) néonicotinoïdes ;
(b2) inhibiteurs de cholinestérase ;
(b3) modulateurs de canal sodique ;
(b4) inhibiteurs de synthèse de chitine ;
(b5) agonistes et antagonistes vis-à-vis de l'ecdysone ;
(b6) inhibiteurs de biosynthèse de lipide ;
(b7) lactones macrocycliques ;
(b8) bloquants de canal chlorure à régulation GABA ;

(b9) mimétiques d'hormone juvénile ;
(b10) ligands de récepteur de ryanodine autres que le composé de formule 1 ;
(b11) ligands de récepteur d'octopamine ;
(b12) inhibiteurs de transport d'électron mitochondrial ;
(b13) analogues de néréistoxine ;
(b14) pyridalyle ;
(b15) flonicamide ;
(b16) pymétrozine ;
(b18) métaflumizone ;
(b19) des agents biologiques ; et les sels des composés de (b1) à (b18).

**2.** Composition selon la revendication 1, dans laquelle le composant (b) est un composé choisi parmi les (b1) néonicotinoïdes.

**3.** Composition selon la revendication 2, dans laquelle le composant (b) est l'imidaclopride.

**4.** Composition selon la revendication 2, dans laquelle le composant (b) est le thiaméthoxam.

**5.** Composition selon la revendication 1, dans laquelle le composant (b) est choisi parmi l'acétamipride, de dinotéfurane, l'imidaclopride, le nitenpyram, le thiaclopride, le thiaméthoxam, le chlorpyrifos, le méthomyle, l'oxamyle, le thiodicarb, le triazamate, la deltaméthrine, l'esfenvalérate, l'indoxacarb, la lambda-cyhalothrine, la buprofézine, la cyromazine, l'hexaflumuron, le lufénuron, le novaluron, le méthoxyfénozide, le tébufénozide, l'abamectine, le spinosad, le fipronil, le fénoxycarb, le méthoprène, le pyriproxyfèbne, l'amitraz, le chlorfénapyr, l'hydraméthylnon, le pyridaben, le cartap, le pyridalyle, le flonicamide et le pymétrozine.

**6.** Composition selon la revendication 1, dans laquelle le composant (b) est un composé de formule i

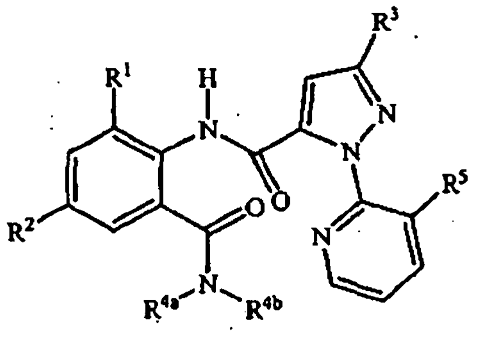

i

dans laquelle

$R^1$ est $CH_3$, F, Cl ou Br ;
$R^2$ est F, Cl, Br, I ou $CF_3$ ;
$R^3$ est $CF_3$, Cl, Br ou $OCH_2CF_3$ ;
$R^{4a}$ est un alkyle en $C_1$ à $C_4$ ;
$R^{4b}$ est H ou $CH_3$ ; et
$R^5$ est Cl ou Br ; ou un sel de celui-ci approprié en agriculture.

**7.** Composition selon la revendication 1, dans laquelle le composant (b) comprend au moins un agent de contrôle des nuisibles invertébrés (ou un sel de celui-ci) provenant de chacun des deux groupes différents choisis parmi (b1), (b2), (b3), (b4), (b5), (b6), (b7), (b8), (b9), (b10), (b11), (b12), (b13), (b14), (b15), (b16), (b18) et (b19).

**8.** Composition pour contrôler un nuisible invertébré comprenant une quantité biologiquement efficace de la composition selon l'une quelconque des revendications 1 à 7 et au moins un composant supplémentaire choisi dans le

groupe constitué d'un agent tensioactif, un diluant solide et un diluant liquide, ladite composition comprenant en outre facultativement une quantité efficace d'au moins un composé ou agent biologiquement actif supplémentaire.

**9.** Composition selon la revendication 8, dans laquelle le composant (b) est un composé choisi parmi les (b1) néonicotinoïdes et le rapport pondéral du composant (b) sur le composé de formule 1, un N-oxyde, ou un sel de celui-ci, va de 10:1 à 1:10.

**10.** Composition selon la revendication 8 sous la forme d'une formulation liquide de traitement du sol par trempage.

**11.** Procédé non thérapeutique pour contrôler un nuisible invertébré comprenant une mise en contact du nuisible invertébré ou de son environnement avec une quantité biologiquement efficace de la composition selon l'une quelconque des revendications 1 à 7.

**12.** Procédé selon la revendication 11, dans lequel l'environnement est le sol et une composition liquide comprenant le mélange est appliquée au sol en tant que traitement du sol par trempage.

**13.** Procédé selon la revendication 11, où le nuisible invertébré est l'aleurode des serres (Bemisia argentifolii).

**14.** Procédé selon la revendication 11, où le nuisible invertébré est le thrip des petits fruits (Frankliniella occidentalis).

**15.** Procédé selon la revendication 11, où le nuisible invertébré est la cicadelle de la pomme de terre (Empoascafabae).

**16.** Procédé selon la revendication 11, où le nuisible invertébré est le fulore du maïs (Peregrinus maidis).

**17.** Procédé selon la revendication 11, où le nuisible invertébré est le puceron du melon de coton (Aphis gossypii).

**18.** Procédé selon la revendication 11, où le nuisible invertébré est le puceron de pêche verte (Myzus persicae).

**19.** Procédé selon la revendication 11, où le nuisible invertébré est les larves de la fausse-teigne des crucifères (Plutella xylostella).

**20.** Composition à pulvériser, comprenant : la composition selon la revendication 1 et un propulseur.

**21.** Composition d'appât, comprenant : la composition selon la revendication 1, et un ou plusieurs produits alimentaires.

**22.** Composition selon la revendication 21, comprenant en outre un agent attirant.

**23.** Composition selon la revendication 21 ou la revendication 22, comprenant en outre un humectant.

**24.** Dispositif de piège pour contrôler un nuisible invertébré, comprenant : la composition d'appât selon l'une quelconque des revendications 21 à 23 et un logement adapté pour recevoir ladite composition d'appât, dans laquelle le logement a au moins une ouverture dimensionnée pour permettre au nuisible invertébré de passer à travers l'ouverture de sorte que le nuisible invertébré peut obtenir un accès à ladite composition d'appât à partir d'un emplacement à l'extérieur du logement, et dans lequel le logement est en outre adapté pour être placé dans ou près d'un lieu d'activité potentielle ou connue pour le nuisible invertébré.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 03015519 A
- JP 11240857 A
- JP 2001131141 A
- WO 03024222 A
- US 3060084 A
- WO 9113546 A
- US 4172714 A
- US 4144050 A
- US 3920442 A
- DE 3246493
- US 5180587 A
- US 5232701 A
- US 5208030 A
- GB 2095558 A
- US 3299566 A
- US 3235361 A
- US 3309192 A
- US 2891855 A


### Non-patent literature cited in the description


- **JAKOBSEN et al.** *Bioorganic and Medicinal Chemistry,* 2000, vol. 8, 2095-2103
- **G. M. COPPOLA.** *J. Heterocyclic Chemistry,* 1999, vol. 36, 563-588
- **H. REIMLINGER ; A. VAN OVERSTRAETEN.** *Chem. Ber.,* 1966, vol. 99 (10), 3350-7
- **T. W. GREENE ; P. G. M. WUTS.** Protective Groups in Organic Synthesis. John Wiley & Sons, Inc, 1991, 224-269
- The Pesticide Manual. British Crop Protection Council, 2003
- *Pestology,* 2003, vol. 27, 60-63
- *Annual Review of Entomology,* 2003, vol. 48, 339-364
- Insecticides with Novel Modes of Action: Mechanism and Application. Springer, 1998
- *Toxicology,* 2002, vol. 171, 3-59
- *Pest Management Sci.,* 2001, vol. 57, 153-164
- The Pesticide Manual. 2003
- **WATKINS et al.** Handbook of Insecticide Dust Diluents and Carriers. Dorland Books
- **MARSDEN.** Solvents Guide. Interscience, 1950
- McCutcheon's Detergents and Emulsifiers Annual. Allured Publ. Corp, 1950
- **SISELY ; WOOD.** Encyclopedia of Surface Active Agents. Chemical Publ. Co., Inc, 1964
- *Pure and Applied Chemistry,* vol. 72, 1255-1264
- **MCCUTCHEON'S.** Functional Materials. MC Publishing Company, 2001, vol. 2
- **BROWNING.** Agglomeration. *Chemical Engineering,* 04 December 1967, 147-48
- Perry's Chemical Engineer's Handbook. McGraw-Hill, 1963, 8-57
- **KLINGMAN.** Weed Control as a Science. John Wiley and Sons, Inc, 1961, 81-96
- **HANCE et al.** Weed Control Handbook. Blackwell Scientific Publications, 1989
- Developments in formulation technology. PJB Publications, 2000
- **P. M. L. TAMES.** *Neth. J. Plant Pathology,* 1964, vol. 70, 73-80
- **S. R. COLBY.** Calculating Synergistic and Antagonistic Responses of Herbicide Combinations. *Weeds,* 1967, vol. 15, 20-22